(19) **Europäisches Patentamt / European Patent Office / Office européen des brevets**

(11) **EP 3 653 530 A1**

(12) **EUROPEAN PATENT APPLICATION**
published in accordance with Art. 153(4) EPC

(43) Date of publication:
**20.05.2020 Bulletin 2020/21**

(51) Int Cl.:
**B65D 77/20** (2006.01)    **B65D 65/40** (2006.01)
**B65D 83/06** (2006.01)    **C01B 37/00** (2006.01)

(21) Application number: **18832616.9**

(22) Date of filing: **10.07.2018**

(86) International application number:
**PCT/JP2018/026101**

(87) International publication number:
**WO 2019/013228 (17.01.2019 Gazette 2019/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:
11.07.2017   JP 2017135703
11.07.2017   JP 2017135704
11.07.2017   JP 2017135705
11.07.2017   JP 2017135706
11.07.2017   JP 2017135707
11.07.2017   JP 2017135708
11.07.2017   JP 2017135709
11.07.2017   JP 2017135710
11.07.2017   JP 2017135711
11.07.2017   JP 2017135712

(71) Applicant: **Mitsubishi Chemical Corporation**
**Tokyo 100-8251 (JP)**

(72) Inventors:
- **KATSUKI, Takanobu**
 Tokyo 100-8251 (JP)
- **YANO, Hiroyuki**
 Tokyo 100-8251 (JP)
- **HONDA, Kohshi**
 Tokyo 100-8251 (JP)
- **ADACHI, Kouichi**
 Tokyo 100-8251 (JP)
- **WADA, Atsushi**
 Tokyo 100-8251 (JP)
- **INOUE, Takahiro**
 Tokyo 100-8251 (JP)
- **KOREKANE, Yuriko**
 Tokyo 100-8251 (JP)
- **SHIMOYAMA, Masaru**
 Tokyo 100-8251 (JP)
- **KENBOU, Naoya**
 Tokyo
 1008251 (JP)

(74) Representative: **Hoffmann Eitle**
**Patent- und Rechtsanwälte PartmbB**
**Arabellastraße 30**
**81925 München (DE)**

(54) **SILICA POWDER STORAGE PACKAGE, AND TEST KIT USING THIS**

(57) The present invention relates to a silica powder storage package (100) for storing a silica powder (PS). This silica powder storage package (100) preferably is provided with a bottomed container (21) that has an opening (21a), and a lid member (31) that closes the opening (21a). The invention further relates to a test kit which is provided with the silica powder storage package (100) and in which a sample liquid is injected into the bottomed container (21) and at least some of the components of the sample liquid are absorbed by the silica powder (PS).

FIG. 1

## Description

TECHNICAL FIELD

The present invention relates to a silica powder storage package that stores a silica powder, and a test kit using the same.

BACKGROUND ART

A silica gel or a silica powder such as a mesoporous silica powder has been used in a wide range of applications as a desiccant, a humidity control agent, a deodorant, an agricultural fertilizer, a catalyst support, an abrasive, a filter aid, a separating agent, an adsorbent, a cosmetic support, a food additive, and the like. Further, recently, the utilization of a silica powder has been expanded also in a selective adsorbent or a selective desorbent for a biological material for efficiently separating and recovering a biological material such as a peptide from a biological fluid such as blood (see Patent Literature 3) other than a drug carrier (see Patent Literature 1 and Patent Literature 2).

For example, when selective adsorption or selective desorption of a biological material such as a peptide is performed, a liquid sample such as a biological fluid of a peptide or the like or a drug solution is injected into a container such as a microtube filled with a silica powder, and part thereof is selectively adsorbed on the silica powder or selectively desorbed from the silica powder, and thereafter, the liquid sample and the silica powder are subjected to solid-liquid separation, whereby a liquid material and the silica powder can be separated and recovered.

Then, in the applications thereof, from the viewpoint of avoiding contamination with a foreign substance from the outside and enhancing the airtightness of the inside of the container, or the like, a microtube with a cap is generally used. For example, when selective adsorption or selective desorption of a biological material such as a peptide is performed, in a state where a container such as a microtube with a cap is held in a device for inserting and erecting the container, or the like, the cap is detached from the container, a mesoporous silica powder is filled (stored) in the container, and thereafter, a biological material such as a peptide, a drug solution, or the like is injected thereinto.

CITATION LIST

PATENT LITERATURE

Patent Literature 1: JP-A-2011-225380
Patent Literature 2: JP-A-2013-230955
Patent Literature 3: WO 2016/017811

SUMMARY OF INVENTION

TECHNICAL PROBLEM

By the way, recently, in the application of a silica powder to various uses, a need for accurate individual weighing (quantitative feeding) of a small amount of the powder has been increasing. For example, in the case of a selective adsorbent or a selective desorbent or the like for a drug or a biological material, a need for highly accurate individual weighing on the order of several hundreds of milligrams or less, and in some cases, on the order of several to several tens of milligrams has occurred. Above all, in medical application or application to a biological material test, it is necessary to perform weighing with higher accuracy. For example, when a drug is supported on the surface of a silica powder, a fluctuation of the filling amount of the silica powder is directly connected with a fluctuation of the amount of the drug to be supported, and therefore, reduction of the fluctuation when filling the silica powder has been strongly demanded.

When performing highly accurate individual weighing of such a powder, small amount filling devices (quantitative feeding devices) of various systems have been used conventionally, and a variety of devices with improved weighing accuracy have been variously proposed. However, the weighing accuracy for a powder is not determined only by the device, and there is a limitation only by the improvement of the device. In addition, as the amount of a material to be weighed becomes smaller, the handleability of the powder tends to decrease.

On the other hand, it is conceivable to supply a product as a package obtained by weighing a predetermined amount of a silica powder with high accuracy, and filling this in a container such as a microtube in advance. By supplying a product in the form of such a package, a user can be liberated from a highly accurate weighing operation, and the efficiency of the operation can be increased.

However, it was found by the finding of the present inventors that in the package in which a silica powder weighed with high accuracy is filled in a container, the silica powder unintentionally adheres to an inner wall or the like of the container due to vibration or the like caused during transportation or use. This means that even if it is a silica powder weighed with high accuracy in advance, due to adhesion loss to a container, it is difficult to take out the entire amount of the silica powder filled in the container or the entire amount thereof cannot be effectively used.

Further, this means that even if it is a silica powder weighed with high accuracy in advance, due to adhesion loss to a container, for example, when a liquid sample such as blood is injected into the container, silica adhering to a wall face in an upper portion of the container cannot be effectively used.

Above all, in medical application or application to a biological material test, in order to effectively suppress non-specific adsorption of a protein, a peptide, or the like, a container in which a surface (inner wall) of a container composed of a synthetic resin is subjected to a surface treatment such as a hydrophilization treatment with a phospholipid polymer or a hydrophilic polymer of quaternary ammonium salt type, photocrosslinkable type, or the like is often used, and in such a case, the above-mentioned problem becomes prominent.

Further, recently, in order to enhance the operation efficiency, it has been studied to perform the above-mentioned filling treatment, injection treatment, or the like for a plurality of containers arranged in parallel in a device for inserting and erecting containers, or the like all together simultaneously. However, there was a problem that when containers with a cap are used, it is necessary to perform an uncapping treatment for the respective containers, and therefore, the operation efficiency is low.

In order to avoid this, it is conceivable that a capless container is used in place of the container with a cap, and to this capless container, a cover material that can be pierced with a pipetter for injecting a liquid sample at a tip side, for example, an aluminum foil, an aluminum oxide thin film, or the like is attached. In such a manner, contamination with a foreign substance from the outside can be avoided by covering an opening portion of each container with the cover material after filling a mesoporous silica powder in each container. In addition, by piercing the cover material with a multichannel pipetter or the like without performing an uncapping operation for each container upon use, the filling treatment or the injection treatment into the inside of each of the containers can be simultaneously performed. Accordingly, the treatment for many containers can be simultaneously performed, and therefore, it is considered that the operation efficiency is dramatically improved.

However, according to the finding of the present inventors, it was newly found that when the cover material is pierced with the pipetter, a metal or a metal oxide derived from the cover material, for example, aluminum, aluminum oxide, or the like can be mixed in the container.

Further, according to the finding of the present inventors, it was newly found that when the cover material is pierced with the pipetter or the like for injecting a liquid sample, a tip portion of the pipetter slides on the cover material, and as a result, displacement of the piercing position is likely to occur. In addition, it was found that a problem that at the time of such piercing, the liquid sample spills down from the pipetter and moves to an outer circumference of the container from the surface of the cover material so as to foul the container occurs.

Further, by using, as the pipette, one made of a metal, the hardness of the pipette becomes high so that the seal portion can be reliably pierced with the pipette, however, in the case of the pipette made of a metal, a metal component may be mixed in the liquid sample. Due to this, as the material of the pipette, a resin is preferably used also from the viewpoint that a sterilization treatment therefor is easy, and above all, polyethylene (PE), polypropylene (PP), polystyrene (PS), or polycarbonate (PC) is preferably used, and polypropylene (PP) is particularly preferably used.

The seal portion is preferably thick from the viewpoint of ensuring a barrier property against a gas or moisture. On the other hand, when the seal portion becomes thick, a piercing strength becomes high, and the pipette bends or the like due to lack of strength of the pipette, and therefore, it tends to become difficult to pierce the seal portion with the pipette. In particular, the pipette made of a synthetic resin has a low strength, and therefore, this tendency becomes prominent.

Further, on the other hand, in the application of the silica powder to various uses, a need for accurate individual weighing (quantitative feeding) of a small amount of the powder has been increasing. For example, in the case of a selective adsorbent or a selective desorbent or the like for a drug or a biological material, a need for highly accurate individual weighing on the order of several hundreds of milligrams or less, and in some cases, on the order of several to several tens of milligrams or less has occurred. Above all, in medical application or application to a biological material test, it is necessary to perform weighing with higher accuracy. For example, when a drug is supported on the surface of a silica powder, a fluctuation of the filling amount of the silica powder is directly connected with a fluctuation of the amount of the drug to be supported, and therefore, reduction of the fluctuation when filling the silica powder has been strongly demanded.

When performing highly accurate individual weighing of such a powder, small amount filling devices (quantitative feeding devices) of various systems have been used conventionally, and a variety of devices with improved weighing accuracy have been variously proposed. However, the weighing accuracy for a powder is not determined only by the device, and there is a limitation only by the improvement of the device. In addition, as the amount of a material to be weighed becomes smaller, the handleability of the powder tends to decrease.

However, a user who does not have such a small amount filling device (quantitative feeding device) with high weighing accuracy cannot perform individual weighing with high accuracy. Further, in the first place, to make a user perform individual weighing or a filling treatment with high accuracy at every use also becomes a factor that causes significant deterioration of the operation efficiency on the user side.

Further, it was found that when performing selective adsorption or selective desorption as described above, desired solid-liquid separation cannot be performed depending on the mixing ratio of a liquid sample such as a biological fluid or a drug solution and a silica powder. In particular, when a porous silica powder having a relatively large pore volume is used, a large amount of the liquid is absorbed in the pores of the porous silica powder, and therefore, this tendency becomes prominent.

Further, when the silica powder is filled in the container, generally, by using an automatic filling machine, the silica powder is fed into the container disposed at a lower side in a vertical direction through a feed tube from an upper side in the vertical direction. However, according to the finding of the present inventors, it was newly found that unintentionally, when the silica powder is fed (filled) into the container, the silica powder fed through the feed tube jumps up from the container and adheres to the periphery of the opening portion of the container or is scattered to the outside in some cases. In addition, such a problem of scattering of the silica powder to the outside of the container becomes prominent as the particle size of the silica powder is smaller. On the other hand, it was found that as the particle size of the silica powder is larger, scattering of the silica powder to the outside of the container tends to decrease, however, blockage of the feed tube tends to easily occur.

A first embodiment of the present invention has been made in view of such problems. An object (first object) thereof is to provide a silica powder storage package in which adhesion loss of a silica powder having a predetermined particle size distribution is suppressed, and a test kit using the same.

A second embodiment of the present invention has been made in view of such problems. An object (second object) thereof is to provide a silica powder storage package in which adhesion loss of a silica powder is low and the yield (effective use ratio) and handleability of the silica powder are excellent, and a test kit using the same.

A third embodiment of the present invention has been made in view of such problems. An object (third object) thereof is to provide a silica powder storage package in which adhesion loss of a silica powder is low and the yield and handleability of the silica powder are excellent even when a container subjected to a surface hydrophilization treatment is used, and a test kit using the same.

A fourth embodiment of the present invention has been made in view of such problems. An object (fourth object) thereof is to provide a silica powder storage package in which adhesion loss due to electrification of a silica powder in a container is low and the yield and handleability of the silica powder are excellent, and a test kit for separating a biological material using the same.

A fifth embodiment of the present invention has been made in view of such problems. An object (fifth object) thereof is to provide a silica powder storage package in which mixing of a metal, a metal oxide, or the like derived from a cover material into a container at the time of piercing with a pipetter for injecting a liquid sample is suppressed, and a test kit using the same.

Further, another object of the fifth embodiment of the present invention is to provide a silica powder storage package in which a silica powder is individually weighed in advance with high accuracy and the handleability is excellent in such a silica powder storage package, and a test kit using the same.

A sixth embodiment of the present invention has been made in view of such I problems. An object (sixth object) thereof is to provide a silica powder storage package in which displacement at the time of piercing with a pipetter for injecting a liquid sample is relaxed, and occurrence of fouling of a container with the liquid sample is suppressed, and a test kit using the same.

Further, another object of the sixth embodiment of the present invention is to provide a silica powder storage package in which a silica powder is individually weighed in advance with high accuracy and the handleability is excellent in such a silica powder storage package, and a test kit using the same.

A seventh embodiment of the present invention has been made in view of such problems. An object (seventh object) thereof is to provide a silica powder storage package in which the handleability at the time of solid-liquid separation is enhanced, and a test kit using the same.

An eighth embodiment of the present invention has been made in view of such problems. An object (eighth object) thereof is to provide a silica powder storage package in which a seal portion that tightly closes or hermetically seals an opening portion of a bottomed container is formed so that it can be pierced with an opening end face of a pipette, and a test kit using the same.

A ninth embodiment of the present invention has been made in view of such problems. An object (ninth object) thereof is to provide a silica powder storage package in which adhesion loss of a silica powder is low when taking out the silica powder.

A tenth embodiment of the present invention has been made in view of such problems. An object (tenth object) thereof is to provide a method for producing a silica powder storage package in which scattering of a silica powder at the time of a filling operation is suppressed, and the like.

Incidentally, the objects of the present invention are not limited to the objects described here, and to exert operational effects resulting from each configuration described in the following Description of Embodiments, which cannot be obtained by conventional techniques, can also be regarded as another object of the present invention.

SOLUTION TO PROBLEM

As a result of intensive studies, the present inventors found that the above-mentioned first object can be achieved by using a silica powder containing a silica coarse powder and a silica fine powder, each having a specific particle size distribution, and thus accomplished the first embodiment of the present invention. That is, the first embodiment of the present invention provides the following specific aspect.

[1-1] A silica powder storage package including at least a bottomed container having an opening portion, and a silica powder stored in the bottomed container, wherein the silica powder contains a silica coarse powder, in which when the silica coarse powder is sieved for 1 minute on a sieve with a nominal mesh opening of 425 $\mu$m in accordance with JIS standard sieve list (JIS Z 8801-1982), 99 mass% or more of the powder passes through the sieve, and when the silica coarse powder is sieved for 1 minute on a sieve with a nominal mesh opening of 106 $\mu$m in accordance with the JIS standard sieve list, a mass change on the sieve is 1 mass% or less, and a silica fine powder, in which when the silica fine powder is sieved for 1 minute on a sieve with a nominal mesh opening of 106 $\mu$m in accordance with the JIS standard sieve list, 99 mass% or more of the powder passes through the sieve, and when the silica fine powder is sieved for 1 minute on a sieve with a nominal mesh opening of 63 $\mu$m in accordance with the JIS standard sieve list, a mass change on the sieve is 1 mass% or less.

As a result of intensive studies, the present inventors found that the second object can be achieved by using a silica powder having a predetermined average particle diameter and a predetermined particle size distribution, and thus accomplished the second embodiment of the present invention. That is, the second embodiment of the present invention provides the following specific aspect.

[2-1] A silica powder storage package including at least a bottomed container made of a synthetic resin and having an opening portion, a lid member that closes the opening portion, and a silica powder stored in the bottomed container, wherein the silica powder has an average particle diameter $D_{50}$ of 41 to 508 $\mu$m, and has a particle size distribution such that a content ratio of a fine powder having a particle diameter of 44 $\mu$m or less is 60 mass% or less.

As a result of intensive studies, the present inventors found that the third object can be achieved by using a silica powder having a predetermined average particle diameter and a predetermined particle size distribution, and thus accomplished the third embodiment of the present invention. That is, the third embodiment of the present invention provides the following specific aspect.

[3-1] A silica powder storage package including at least a bottomed container and a silica powder stored in the bottomed container, wherein the bottomed container has a hydrophilic coating layer on an inner wall thereof, and the silica powder has an average particle diameter $D_{50}$ of 41 to 311 $\mu$m, and has a particle size distribution such that a content ratio of a fine powder having a particle diameter of 44 $\mu$m or less is 60 mass% or less, and a content ratio of coarse particles having a particle diameter of more than 498 $\mu$m is 5.0 mass% or less.

As a result of intensive studies, the present inventors found that the fourth object can be achieved by using a hydrated silica powder having a predetermined water content ratio, and thus accomplished the fourth embodiment of the present invention. That is, the fourth embodiment of the present invention provides the following specific aspect.

[4-1] A silica powder storage package including at least a bottomed container made of a resin and having an opening portion, a lid member that closes the opening portion, and a silica powder stored in the bottomed container, wherein the silica powder is a hydrated silica powder, and the content of water is 9 mass% or more with respect to the silica powder in an absolutely dry state.

As a result of intensive studies, the present inventors found that the fifth object can be achieved by using a container using a seal material having a predetermined laminated structure, and thus accomplished the fifth embodiment of the present invention. That is, the fifth embodiment of the present invention provides the following specific aspect.

[5-1] A silica powder storage package including at least a bottomed container having an opening portion, a seal material that closes the opening portion so as to tightly close or hermetically seal an inner space of the bottomed container, and a silica powder stored in the bottomed container, wherein the seal material has a laminated structure including at least a heat-seal layer containing a polyolefin-based resin, a gas barrier layer comprising a metal thin film or a metal oxide thin film, and a base resin film, and the heat-seal layer is heat-sealed to the opening portion of the bottomed container.

As a result of intensive studies, the present inventors found that the sixth object can be achieved by using a container using a seal material having a predetermined shape, and thus accomplished the sixth embodiment of the present invention. That is, the sixth embodiment of the present invention provides the following specific aspect.

[6-1] A silica powder storage package including at least a bottomed container having an opening portion, a seal material that closes the opening portion so as to tightly close or hermetically seal an inner space of the bottomed container, and a silica powder stored in the bottomed container, wherein the seal material is convexly curved toward the inner space of the bottomed container.

As a result of intensive studies, the present inventors found that the seventh object can be achieved by adjusting a filling amount of a silica powder with respect to a volume of a container, and thus accomplished the seventh embodiment of the present invention. That is, the seventh embodiment of the present invention provides the following specific aspect.

[7-1] A silica powder storage package including at least a bottomed container having an opening portion, and a silica powder stored in the bottomed container, wherein a filling amount W (g) of the silica powder with respect to a volume V (mL) of the bottomed container is W (g)/V (mL) $\leq$ 0.6 (g/mL).

As a result of intensive studies, the present inventors found that the eighth object can be achieved by using a seal portion having a predetermined specification, and thus accomplished the eighth embodiment of the present invention. That is, the eighth embodiment of the present invention provides the following specific aspect.

[8-1] A silica powder storage package including a bottomed container having an opening portion at one end side and a closing portion at the other end side, a silica powder stored in the bottomed container, and a seal portion, which is provided in the opening portion so as to tightly close or hermetically seal an inner space of the bottomed container, and is pierced with a tip of a pipette for filling a liquid sample in the inner space, wherein an opening end face of the tip of the pipette for filling a liquid sample in the inner space is a planar face orthogonal to a longitudinal direction of the pipette, and has an area within a range of 0.1 mm$^2$ to 10 mm$^2$, and the seal portion comprises a lamination film that can be pierced with the opening end face of the pipette.

As a result of intensive studies, the present inventors found that the ninth object can be achieved by storing a silica powder in an antistatic container, and thus accomplished the ninth embodiment of the present invention. That is, the ninth embodiment of the present invention provides the following specific aspect.

[9-1] A silica powder storage package including at least an antistatic container having an opening portion and a silica powder stored in the antistatic container.

As a result of intensive studies, the present inventors found that the tenth object can be achieved by using a silica powder having a predetermined particle size distribution, and thus accomplished the tenth embodiment of the present invention. That is, the tenth embodiment of the present invention provides the following specific aspect.

[10-1] A method for producing a silica powder storage package including at least a measuring step of weighing a specified amount of a silica powder and a filling step of feeding the weighed silica powder into a bottomed container having an opening portion disposed at a lower side in a vertical direction through a feed tube from an upper side in the vertical direction, wherein when the silica powder is sieved for 1 minute on a sieve with a nominal mesh opening of 425 $\mu$m in accordance with JIS standard sieve list (JIS Z 8801-1982), 99 mass% or more of the powder passes through the sieve, and when the silica powder is sieved for 1 minute on a sieve with a nominal mesh opening of 106 $\mu$m in accordance with the JIS standard sieve list, a mass change on the sieve is 1 mass% or less.

ADVANTAGEOUS EFFECTS OF INVENTION

According to the first embodiment of the present invention, a silica powder storage package in which adhesion loss of a silica powder having a predetermined particle size distribution is suppressed, and a test kit using the same can be realized.

According to the second embodiment of the present invention, a silica powder storage package in which adhesion loss of a silica powder is low and the yield and handleability of the silica powder are excellent, and a test kit using the same can be realized. Further, in a preferred aspect of the second embodiment of the present invention, a silica powder storage package in which a silica powder whose adhesion loss is low is quantitatively fed with high accuracy, and the yield and handleability of the silica powder are excellent, and a test kit using the same can also be realized, and the quality is high.

According to the third embodiment of the present invention, a silica powder storage package in which adhesion loss of a silica powder is low and the yield and handleability of the silica powder are excellent even when a container subjected to a surface hydrophilization treatment is used, and a test kit using the same can be realized. Further, in a preferred aspect of the third embodiment of the present invention, a silica powder storage package in which a silica powder whose adhesion loss is low is quantitatively fed with high accuracy, and the yield and handleability of the silica powder are excellent, and a test kit using the same can also be realized, and the quality is high.

According to the fourth embodiment of the present invention, a silica powder storage package in which adhesion loss due to electrification of a silica powder in a container is low, and a test kit for separating a biological material using the same can be realized. Then, in the silica powder storage package and the test kit for separating a biological material of the fourth embodiment of the present invention, the effective use ratio of the stored silica powder is high, and the handleability is excellent, and therefore, the performance is high and also the quality is high.

According to the fifth embodiment of the present invention, a silica powder storage package in which mixing of a metal, a metal oxide, or the like derived from a cover material into a container at the time of piercing with a pipetter for injecting a liquid sample is suppressed, and a test kit using the same can be realized. Further, in a preferred aspect of the fifth embodiment of the present invention, a silica powder storage package in which a silica powder is individually weighed in advance with high accuracy, and the handleability is excellent, and a test kit using the same can also be realized, and the quality is high.

According to the sixth embodiment of the present invention, a silica powder storage package in which displacement at the time of piercing with a pipetter for injecting a liquid sample is relaxed, and occurrence of fouling of a container with the liquid sample is suppressed, and a test kit using the same can be realized. Further, in a preferred aspect of the sixth embodiment of the present invention, a silica powder storage package in which a silica powder is individually weighed in advance with high accuracy, and the handleability is excellent, and a test kit using the same can also be realized, and the quality is high.

According to the seventh embodiment of the present invention, a silica powder storage package in which the handleability at the time of solid-liquid separation is enhanced, and a test kit or a purification kit for a biological material using the same can be realized. Further, in a preferred aspect of the seventh embodiment of the present invention, it suffices to use a relatively small amount of the liquid sample, and appropriate solid-liquid separation can be carried out without accompanying an increase in the size of the container. Accordingly, it can be said that the silica powder storage package according to the seventh embodiment of the present invention is relatively small in size and has excellent economic efficiency and shows high performance as compared with conventional ones.

According to the eighth embodiment of the present invention, a silica powder storage package in which a seal portion that tightly closes or hermetically seals an inner space of a bottomed container can be more reliably pierced with a pipette tip face, and a test kit using the same can be provided.

According to the ninth embodiment of the present invention, a silica powder storage package in which adhesion loss of a silica powder is low when taking out the silica powder can be realized.

According to the tenth embodiment of the present invention, a method for producing a silica powder storage package in which scattering of a silica powder at the time of a filling operation is suppressed can be realized. Further, in a preferred aspect of the tenth embodiment of the present invention, a silica powder storage package in which a silica powder is quantitatively fed with high accuracy, and the yield and handleability of the silica powder are excellent can also be realized, and the silica powder storage package is of high quality.

BRIEF DESCRIPTION OF DRAWINGS

[Fig. 1] Fig. 1 is a cross-sectional view schematically showing a silica powder storage package 100 according to a first embodiment of the present invention.

[Fig. 2] Fig. 2 is a cross-sectional view schematically showing the silica powder storage package 100 according to the first embodiment of the present invention in which a silica fine powder FP adheres to an inner wall.

[Fig. 3] Fig. 3 is a cross-sectional view schematically showing a silica powder storage package 100 according to a second embodiment of the present invention.

[Fig. 4] Fig. 4 is a cross-sectional view schematically showing a silica powder storage package 100 according to a third embodiment of the present invention.

[Fig. 5] Fig. 5 is a cross-sectional view schematically showing a silica powder storage package 100 according to a fourth embodiment of the present invention.

[Fig. 6] Fig. 6 is a cross-sectional view schematically showing a silica powder storage package 100 (test kit) according to a fifth embodiment of the present invention.

[Fig. 7] Fig. 7 is a perspective view schematically showing a silica powder storage package 100 according to a sixth embodiment of the present invention.

[Fig. 8] Fig. 8 is a longitudinal cross-sectional view schematically showing the silica powder storage package 100 according to the sixth embodiment of the present invention.

[Fig. 9] Fig. 9 is an explanatory view showing an initial positional relationship between a tip portion 42 of a pipetter 41 and a seal material 31 of the silica powder storage package 100 according to the sixth embodiment of the present invention.

[Fig. 10] Fig. 10 is an explanatory view showing a state where the tip portion 42 of the pipetter 41 is in contact with the seal material 31 of the silica powder storage package 100 according to the sixth embodiment of the present invention.

[Fig. 11] Fig. 11 is an explanatory view showing a state where the tip portion 42 of the pipetter 41 is pressed against the seal material 31 of the silica powder storage package 100 immediately before piercing the seal material 31 according to the sixth embodiment of the present invention.

[Fig. 12] Fig. 12 is an explanatory view showing a state where the seal material 31 of the silica powder storage package 100 is pierced with the tip portion 42 of the pipetter 41 according to the sixth embodiment of the present invention.

[Fig. 13] Fig. 13 is a cross-sectional view schematically showing a silica powder storage package 100 according to a seventh embodiment of the present invention.

[Fig. 14] Fig. 14 shows a graph indicating a slurry concentration (g/mL) with respect to a pore volume TPV (mL/g) of a silica powder according to the seventh embodiment of the present invention.

[Fig. 15] Fig. 15 is a longitudinal cross-sectional view schematically showing a silica powder storage package 100 according to an eighth embodiment of the present invention.

[Fig. 16] Fig. 16 is a schematic view showing a configuration at a tip side of a pipette tip 841 according to the eighth embodiment of the present invention, and (a) is a longitudinal cross-sectional view thereof (a view obtained by cutting the pipette tip 841 into halves along a center line CLp, and (b) is a perspective view viewed from an obliquely lower side thereof.

[Fig. 17] Fig. 17 is a schematic side view showing a configuration of a test device 200 according to the eighth embodiment of the present invention.

[Fig. 18] Fig. 18 is a cross-sectional view schematically showing a silica powder storage package 100 according to a ninth embodiment of the present invention.

[Fig. 19] Fig. 19 is a cross-sectional view schematically showing a silica powder storage package 100 of a first modification according to the ninth embodiment of the present invention.

[Fig. 20] Fig. 20 is a cross-sectional view schematically showing a silica powder storage package 100 of a second modification according to the ninth embodiment of the present invention.

[Fig. 21] Fig. 21 is a cross-sectional view schematically showing a silica powder storage package 100 of a third modification according to the ninth embodiment of the present invention.

[Fig. 22] Fig. 22 is a cross-sectional view schematically showing a silica powder storage package 100 of a fourth modification according to the ninth embodiment of the present invention.

[Fig. 23] Fig. 23 is a flowchart showing a method for producing a silica powder storage package 100 according to a tenth embodiment of the present invention.

[Fig. 24] Fig. 24 is an explanatory view schematically showing the method for producing a silica powder storage package 100 according to the tenth embodiment of the present invention.

[Fig. 25] Fig. 25 is an explanatory view schematically showing the method for producing a silica powder storage package 100 according to the tenth embodiment of the present invention.

[Fig. 26] Fig. 26 is an explanatory view schematically showing the method for producing a silica powder storage package 100 according to the tenth embodiment of the present invention.

DESCRIPTION OF EMBODIMENTS

Hereinafter, embodiments of the present invention will be described in detail. Note that the following embodiments are examples (representative examples) of the embodiments of the present invention, and the present invention is not limited thereto. Incidentally, the positional relationships such as up, down, left, and right shall be based on the positional relationships shown in the drawings unless otherwise noted. Further, the dimensional ratios of the drawings are not limited to the illustrated ratios. Then, in the present description, when expression is made by using "to" sandwiched on the front and rear sides by numerical values or physical property values, the numerical values or the physical property values on the front and rear sides shall be used as inclusive. For example, in the expression of a numerical range of "1 to 100", both the lower limit "1" and the upper limit "100" are included, and it indicates "1 or more and 100 or less". The same also applies to the expression of the other numerical ranges.

Note that in the present description, "mass" has the same definition as "weight".

<<Silica Powder Storage Package of the Invention>>

The silica powder storage package of the present invention preferably includes a bottomed container and a silica powder.

(Bottomed Container)

As the bottomed container, preferably, a capless-type microtube having a bottomed substantially cylindrical shape with an upper part opened can be used. Then, in an opening portion of this bottomed container, preferably, a seal material is provided as a lid member.

As the bottomed container, a known container other than the above-mentioned microtube, for example, an Eppendorf tube (manufactured by Eppendorf AG), a microcentrifuge tube, a microtest tube, or the like can also be used.

The shape of the bottomed container is not limited to those described above. For example, a container that has an opening portion and also has a space portion communicating with the opening portion, and has a bottle shape, a flask shape, a tray shape, or the like can be used.

The size of the bottomed container is not particularly limited, however, in the case of a container having a substantially cylindrical shape, the diameter is generally 0.3 to 10 cm, preferably 0.5 to 5 cm, and more preferably 1 to 3 cm, and the height is generally 1 to 30 cm, preferably 2 to 10 cm, and more preferably 3 to 5 cm.

The thickness of a wall face of the bottomed container is not particularly limited, and is generally 0.1 to 5 mm, preferably 0.5 to 3 mm, and more preferably 1 to 2 mm.

The bottomed container is preferably a substantially transparent to semi-transparent container from the viewpoint that visual confirmation of the content is facilitated.

As a material constituting the bottomed container, preferably a substantially transparent to semi-transparent resin is used, and more preferably a substantially transparent to semi-transparent synthetic resin is used.

More specifically, a polyolefin-based resin such as polyethylene or polypropylene or a polyester-based resin such as PET (polyethylene terephthalate) is preferably used. Among these, preferably a polyolefin-based resin, and more preferably polypropylene is used.

(Silica Powder)

Examples of silica constituting the silica powder include crystalline silica such as natural quartz and zeolite, and amorphous silica such as silica gel and mesoporous silica, but the type thereof is not particularly limited. For example, from the viewpoint of adsorptivity or desorptivity for a biological material or a chemical material, or the like, porous silica having pores such as zeolite, silica gel, or mesoporous silica is preferred, and mesoporous silica is more preferred. Note that in the present description, the "mesoporous silica" means porous silica having pores (mesopores) with a pore diameter of generally 2 to 50 nm, and preferably 3 to 20 nm. Here, the size of the pore diameter of the porous silica having pores can be appropriately set according to the required performance.

The mesoporous silica may have pores such as macropores that are not included in mesopores as long as it has mesopores, however, from the viewpoint of selective adsorptivity or separability and recoverability, or the like for a biological material, mesoporous silica substantially composed of only mesopores is preferred. Here, the expression "substantially composed of only mesopores" means porous silica in which the total volume of mesopores having a pore diameter within a range of 2 to 50 nm is 90 vol% or more of the total pore volume. Incidentally, the pore diameter of mesoporous silica can be determined from a drawing obtained by plotting a pore distribution curve calculated by a BJH method described in E. P. Barrett, L. G. Joyner, P. H. Haklenda, J. Amer. Chem. Soc., vol. 73, 373 (1951) from an isothermal adsorption-desorption curve measured by a nitrogen gas adsorption-desorption method. Incidentally, the pore distribution curve represents a differential pore volume, that is, a differential nitrogen gas adsorption amount ($\Delta V/\Delta(\log d)$) with respect to a pore diameter d (nm), and the above V denotes the adsorption volume of nitrogen gas. Further, with respect to a commercially available product, a catalog value can be adopted.

Further, the pore volume per unit mass (in the present description, the amount represented by the "pore volume/mass" is sometimes simply referred to as "pore volume") of the porous silica having pores is not particularly limited, however, from the viewpoint of selective adsorptivity, adsorptivity, desorptivity, or the like for a biological material or a chemical material, it is preferably 0.1 mL/g or more, and more preferably 0.2 mL/g or more, and also preferably 1.5 mL/g or less, and more preferably 1.2 mL/g or less. When the pore volume is equal to or more than the above lower limit, the adsorptivity or the desorption performance tends to be high, and when the pore volume is equal to or less than the above upper limit, the pore structure or the particle is less likely to be destroyed by a wetting treatment, and the adsorption selectivity or the desorption selectivity is easily ensured, and thus, such a pore volume is preferred. The pore volume of the porous silica having pores can be determined from the adsorption amount of nitrogen gas at a relative pressure of 0.98 in the adsorption isotherm. With respect to a commercially available product, a catalog value can be adopted.

The shape of the silica powder is not particularly limited, and may be a particle shape such as a crushed shape or a spherical shape, or may be even a monolithic or granulated particle or a honeycomb shape. In the case of granulated particles, those with large gaps between primary particles are preferred from the viewpoint of contact efficiency with a biological fluid or the like. Note that in the silica powder, the outer surface may be subjected to a surface treatment such as a hydrophobization treatment.

The angle of repose of the silica powder is not particularly limited, but is preferably 20° to 40°, and more preferably 20° to 30° from the viewpoint of the fluidity or the like of the powder. Note that in the present description, the measurement of the angle of repose of the silica powder is performed using an angle of repose measuring instrument employing a cylinder rotation method manufactured by Tsutsui Rikagaku Kikai Co., Ltd. Specifically, a well washed and dried cylindrical sample container is filled with a sample so as to fill about a half of the cylinder volume with the sample. Thereafter, the container is rotated at 2 rpm for 3 minutes, and then, the rotation is stopped, and the angle of repose is measured. The measurement is performed three times, and the average value is determined as the angle of repose of the powder.

Further, the bulk density of the silica powder is not particularly limited, but is preferably 0.4 to 1.3 g/mL, more preferably 0.5 to 1.3 g/mL, and further more preferably 0.7 to 1.3 g/mL from the viewpoint of avoiding an increase in the volume of the bottomed container, or the like. When the bulk density is equal to or more than the above preferred lower limit, the size of the container for filling a predetermined mass can be made smaller. In addition, when the bulk density is equal to or less than the above preferred upper limit, the pore volume is easily ensured, and the adsorption performance or the desorption performance tends to be easily ensured. Note that in the present description, the measurement of the bulk density of the silica powder is performed using a bulk specific gravity measuring instrument manufactured by Tsutsui Rikagaku Kikai Co., Ltd. (in accordance with JIS K 6891). A sample is put into a funnel of the specific gravity measuring instrument with a damper inserted thereinto, and the damper is quickly pulled out to drop the sample into a weighing bottle. The sample protruding from the weighing bottle is leveled off using a flat plate, and the mass is measured for calculation. The measurement is performed three times, and the average value is determined as the bulk density of the powder.

On the other hand, the specific surface area of the silica powder is not particularly limited, but is preferably 100 $m^2/g$ or more, and more preferably 200 $m^2/g$ or more, and the upper limit thereof is preferably 1200 $m^2/g$ or less, and more preferably 1000 $m^2/g$ or less from the viewpoint of powder strength, durability, desorption and adsorption performance, or the like. When the specific surface area is equal to or more than the above preferred lower limit, the adsorption amount tends to be easily ensured. Further, when the specific surface area is equal to or less than the above preferred upper limit, the powder strength is easily I ensured, and the pore structure or the particle tends to be hardly destroyed by a wetting treatment. Incidentally, the specific surface area can be measured by a BET one-point method using nitrogen gas adsorption and desorption.

As the silica powder, any of a natural product or a synthetic product can be used, and a production method thereof is not particularly limited. Examples of a method for producing the silica powder include dry methods such as a pulverization method, a combustion method, and an arc method, and wet methods such as a precipitation method, a gel method, a sol-gel method, and a template method. As a method for producing porous silica having pores, for example, a production method in which silicon alkoxide is hydrolyzed, and thereafter a hydrothermal treatment is performed without substantially performing maturation described in Japanese Patent Laid-Open No. 2002-080217, Japanese Patent Laid-Open No. 2008-222552, or the like is preferably used from the viewpoint of industrial and economic efficiency.

Incidentally, in the present invention, the below-mentioned maximum Feret diameter is the maximum value of a so-called unidirectional tangential diameter, and in the case of a spherical particle, it corresponds to the diameter of the particle, and, in the case of a particle having an irregular shape such as a crushed shape, when the particle is sandwiched between two unidirectional tangential lines parallel to each other, it corresponds to the length of a portion where the distance between the two lines is the longest. The maximum Feret diameter can be determined by observing a particle with, for example, an optical microscope, and then performing an image analysis (hereinafter, the maximum Feret diameter is sometimes referred to as "particle size"). The ratio of particles having a predetermined maximum Feret diameter to all particles can be determined by arbitrarily selecting 100 or more particles. Further, with respect to a commercially available product, a catalog value can be adopted.

Incidentally, in the present invention, the below-mentioned average particle diameter $D_{50}$ means a volume average diameter. The average particle diameter $D_{50}$ can be determined from a result obtained by measuring a particle size distribution using a laser diffraction/scattering particle size distribution measuring device (for example, Laser Micron Sizer LMS-24 manufactured by Seishin Enterprise Co., Ltd., Microtrac MT3300EX II manufactured by NIKKISO Co., Ltd.). Further, with respect to a commercially available product, a catalog value can be adopted.

<<Test Kit of the Invention>>

The test kit of the present invention includes at least the silica powder storage package of the present invention. Further, the test kit of the present invention is for allowing a silica powder to adsorb at least some components in a liquid sample by injecting the liquid sample into a bottomed container.

<<First Embodiment>>

<Silica Powder Storage Package>

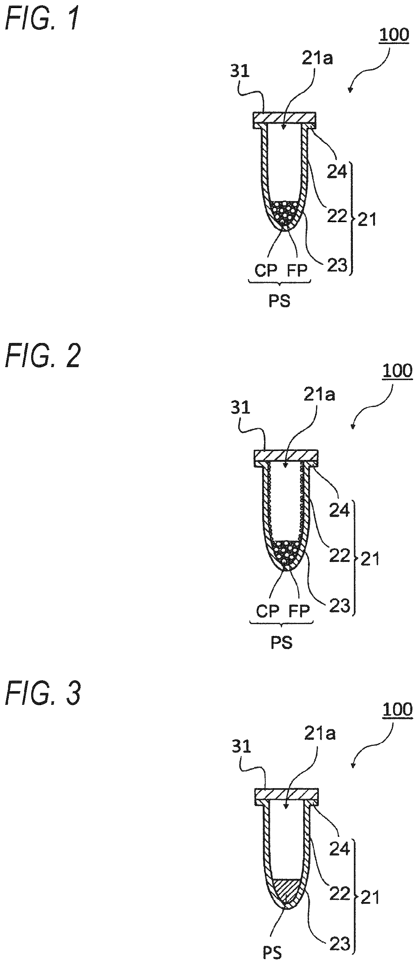

Fig. 1 is a cross-sectional view schematically showing a silica powder storage package 100 of a first embodiment. The silica powder storage package 100 includes at least a bottomed container 21 having an opening portion 21a, and a silica powder PS stored in the bottomed container 21.

Then, in this embodiment, as the silica powder PS, a silica powder containing a silica coarse powder CP, in which when the silica coarse powder is sieved for 1 minute on a sieve with a nominal mesh opening of 425 $\mu$m in accordance with JIS standard sieve list (JIS Z 8801-1982) (hereinafter sometimes simply referred to as "nominal mesh opening"), 99 mass% or more of the powder passes through the sieve, and when the silica coarse powder is sieved for 1 minute on a sieve with a nominal mesh opening of 106 $\mu$m, a mass change on the sieve is 1 mass% or less, and a silica fine powder FP, in which when the silica fine powder is sieved for 1 minute on a sieve with a nominal mesh opening of 106 $\mu$m in accordance with JIS standard sieve list (JIS Z 8801-1982), 99 mass% or more of the powder passes through the sieve, and when the silica fine powder is sieved for 1 minute on a sieve with a nominal mesh opening of 63 $\mu$m, a mass change on the sieve is 1 mass% or less is used.

Hereinafter, the respective constituent components will be described in detail.

[Silica Powder]

The silica powder of this embodiment contains a silica coarse powder and a silica fine powder, each having a specific particle size distribution as described above.

The silica coarse powder is a powder, in which when the silica coarse powder is sieved for 1 minute on a sieve with a nominal mesh opening of 425 $\mu$m in accordance with JIS standard sieve list (JIS Z 8801-1982), 99 mass% or more of the powder passes through the sieve, and it is preferred that when the silica coarse powder is sieved for 1 minute on a sieve with a nominal mesh opening of 355 $\mu$m, 99 mass% or more of the powder passes through the sieve, it is more preferred that when the silica coarse powder is sieved for 1 minute on a sieve with a nominal mesh opening of 300 $\mu$m, 99 mass% or more of the powder passes through the sieve, and it is further more preferred that when the silica coarse powder is sieved for 1 minute on a sieve with a nominal mesh opening of 250 $\mu$m, 99 mass% or more of the powder passes through the sieve.

Further, when the silica coarse powder is sieved for 1 minute on a sieve with a nominal mesh opening of 106 $\mu$m, a mass change on the sieve is 1 mass% or less, and it is preferred that when the silica coarse powder is sieved for 1 minute on a sieve with a nominal mesh opening of 125 $\mu$m, a mass change on the sieve is 1 mass% or less, it is more preferred that when the silica coarse powder is sieved for 1 minute on a sieve with a nominal mesh opening of 150 $\mu$m, a mass change on the sieve is 1 mass% or less, and it is further more preferred that when the silica coarse powder is sieved for 1 minute on a sieve with a nominal mesh opening of 180 $\mu$m, a mass change on the sieve is 1 mass% or less.

On the other hand, the silica fine powder is a powder, in which when the silica fine powder is sieved for 1 minute on a sieve with a nominal mesh opening of 106 $\mu$m in accordance with JIS standard sieve list (JIS Z 8801-1982), 99 mass% or more of the powder passes through the sieve, and it is preferred that when the silica fine powder is sieved for 1 minute on a sieve with a nominal mesh opening of 90 $\mu$m, 99 mass% or more of the powder passes through the sieve.

Further, when the silica fine powder is sieved for 1 minute on a sieve with a nominal mesh opening of 63 $\mu$m, a mass change on the sieve is 1 mass% or less, and it is preferred that when the silica fine powder is sieved for 1 minute on a sieve with a nominal mesh opening of 75 $\mu$m, a mass change on the sieve is 1 mass% or less.

When the particle size distributions of the silica coarse powder and the silica fine powder are in the above-mentioned ranges, the silica fine powder preferentially adheres to the inner wall of the bottomed container, and thus, adhesion of the silica coarse powder can be suppressed. Note that in the present description, the treatment using sieves described above shall be performed in accordance with "6.1 Dry sieving test method" in JIS K 0069:1992.

As for the filling amount of the silica fine powder, $W_f$ (g)/S (cm$^2$) that indicates the filling amount $W_f$ (g) of the silica fine powder to the inner wall area S (cm$^2$) of the bottomed container is preferably 0.001 or more, more preferably 0.005 or more, and further more preferably 0.008 or more, and also preferably 0.1 or less, more preferably 0.05 or less, and further more preferably 0.02 or less.

When $W_f$ (g)/S (cm$^2$) is equal to or more than the above lower limit, there is a tendency that the silica fine powder in an amount sufficient for preventing adhesion of the silica coarse powder can be made to exist in the container. If $W_f$ (g)/S (cm$^2$) is more than the above upper limit, an adverse effect on the operation environment due to stirring up upon weighing is sometimes caused by the silica fine powder, and further, an increase in fluctuation upon weighing due to uneven distribution in the silica powder sometimes occurs.

The ratio $W_c$ (g)/Wf (g) of the filling amount $W_c$ (g) of the silica coarse powder to the filling amount $W_f$(g) of the silica fine powder is preferably 30/70 to 95/5, more preferably 35/65 to 80/20, further more preferably 40/60 to 70/30, particularly preferably 50/50 to 60/40, and most preferably 52/48 to 57/43. When the ratio of the filling amount of the silica coarse powder to the filling amount of the silica fine powder is within the above range, adhesion of the silica coarse powder is suppressed by adhesion of the silica fine powder to the inner wall of the bottomed container, and also there is a tendency that an adverse effect on the operation environment due to stirring up upon weighing or an increase in fluctuation upon weighing due to uneven distribution in the silica powder caused by the excessive presence of the silica fine powder can be suppressed.

The size of the silica coarse powder is not particularly limited as long as the above-mentioned particle size distribution is satisfied, and may be appropriately set according to the application or required performance. For example, from the viewpoint of selective adsorptivity or favorable adsorptivity or desorptivity for a biological material or a chemical material, or the like, 80% or more, preferably 90% or more, and more preferably 95% or more of all particles have a maximum Feret diameter of preferably 20 $\mu$m or more, and more preferably 50 $\mu$m or more, and also preferably 1 mm or less, and more preferably 800 $\mu$m or less. When the size is equal to or more than the above lower limit, the amount of a fine powder is small, and therefore, dusting can be suppressed, and such a size is preferred from the viewpoint of handleability. When the size is equal to or less than the above upper limit, particles are not excessively large, and such a size is preferred from the viewpoint that a predetermined amount is easily weighed out upon weighing.

Further similarly, also the average particle diameter $D_{50}$ of the silica coarse powder is also not particularly limited as long as the above-mentioned particle size distribution is satisfied, and may be appropriately set according to the application or required performance. For example, from the viewpoint of selective adsorptivity or favorable adsorptivity or desorptivity for a biological material or a chemical material, or the like, the average particle diameter $D_{50}$ of the silica coarse powder is preferably 50 $\mu$m or more, and more preferably 70 $\mu$m or more, and preferably 700 $\mu$m or less, and more preferably 600 $\mu$m or less. When the average particle diameter is equal to or more than the above lower limit, the amount of a fine powder is small, and therefore, dusting can be suppressed, and such an average particle diameter is preferred from the viewpoint of handleability. When the average particle diameter is equal to or less than the above upper limit, particles are not excessively large, and such an average particle diameter is preferred from the viewpoint that a predetermined amount is easily weighed out upon weighing. Here, the average particle diameter $D_{50}$ is an average particle size of primary particles.

The angle of repose of the silica coarse powder is not particularly limited, but is preferably 20° to 40°, and more preferably 20° to 30° from the viewpoint of the fluidity or the like of the powder. When the angle of repose is equal to or more than the above lower limit, excessive fluidity is hardly imparted, and such an angle of repose is preferred from the viewpoint that a problem of powder leakage from a filling machine is easily suppressed. The angle of repose equal to or more than the above upper limit is preferred from the viewpoint that blockage in a hopper is easily suppressed. Note that in the present description, the measurement of the angle of repose of the silica coarse powder is performed using an angle of repose measuring instrument employing a cylinder rotation method manufactured by Tsutsui Rikagaku Kikai Co., Ltd. Specifically, a well washed and dried cylindrical sample container is filled with a sample so as to fill about a half of the cylinder volume with the sample. Thereafter, the container is rotated at 2 rpm for 3 minutes, and then, the rotation is stopped, and the angle of repose is measured. The measurement is performed three times, and the average value is determined as the angle of repose of the powder.

Further, the bulk density of the silica coarse powder is not particularly limited, but is preferably 0.5 to 1.3 g/mL, and more preferably 0.7 to 1.3 g/mL from the viewpoint of avoiding an increase in the volume of the bottomed container, or the like. When the bulk density is equal to or more than the above lower limit, the bulkiness is less likely to become high, and therefore, such a bulk density is preferred from the viewpoint that the size of the container for filling a predetermined mass can be made smaller. In addition, when the bulk density is equal to or less than the above upper limit, the pore volume is easily ensured, and the adsorption performance or the desorption performance tends to be easily ensured. Note that in the present description, the measurement of the bulk density of the silica coarse powder is performed using a bulk specific gravity measuring instrument manufactured by Tsutsui Rikagaku Kikai Co., Ltd. (in accordance with JIS K 6891). A sample is put into a funnel of the specific gravity measuring instrument with a damper inserted thereinto, and the damper is quickly pulled out to drop the sample into a weighing bottle. The sample protruding from the weighing bottle is leveled off using a flat plate, and the mass is measured for calculation. The measurement is performed three times, and the average value is determined as the bulk density of the powder.

On the other hand, the specific surface area of the silica coarse powder is not particularly limited, but is preferably 100 to 1200 m$^2$/g from the viewpoint of powder strength, durability, desorption and adsorption performance, or the like. The specific surface area of the silica coarse powder is preferably 100 m$^2$/g or more, and more preferably 200 m$^2$/g or more, and the upper limit thereof is preferably 1200 m$^2$/g or less, and more preferably 1000 m$^2$/g or less. When the specific surface area is equal to or more than the above preferred lower limit, the adsorption amount tends to be easily ensured. Further, when the specific surface area is equal to or less than the above preferred upper limit, the powder strength is easily ensured, and the pore structure or the particle tends to be hardly destroyed by a wetting treatment. Incidentally, the specific surface area can be measured by a BET one-point method using nitrogen gas adsorption and desorption.

Further, in order to easily obtain the silica coarse powder and the silica fine powder of this embodiment having the above-mentioned particle size distribution with good reproducibility, a silica powder obtained by a known production method is preferably subjected to a classification treatment. The classification treatment is generally roughly categorized into sieving using a sieve and fluid classification. The latter is further categorized into dry classification and wet classification, and further, the principles thereof are categorized into those utilizing a gravitational field, an inertial force, or a centrifugal force, and the like, but the type is not particularly limited.

When the silica coarse powder and the silica fine powder are filled in the bottomed container, a mixture obtained by mixing the silica coarse powder and the silica fine powder may be filled, or the silica coarse powder and the silica fine powder may be each separately filled. From the viewpoint of preventing uneven distribution of the silica coarse powder and the silica fine powder present in the bottomed container so as to provide homogeneous adsorptivity, it is preferred to fill a mixture obtained by mixing the silica coarse powder and the silica fine powder in the bottomed container. Further, when the silica coarse powder and the silica fine powder are each separately filled in the bottomed container, from the viewpoint of suppressing adhesion of the silica coarse powder, it is preferred to first fill the silica fine powder, and thereafter fill the silica coarse powder.

In the quantitative feeding of the silica powder, various known powders and filling with powders can be used, and the types thereof are not particularly limited. Further, it is also possible to link it with a deaerator, a vacuum device, a sterile device, a packing device, a bag feeder, or the like as needed.

[Bottomed Container and Lid Member]

(Bottomed Container)

The bottomed container 21 preferably has a cylindrical portion 22 having a hollow cylindrical shape, and a bottom portion 23 having a hollow conical shape located on a bottom side of the cylindrical portion 22. In this embodiment, it is preferred that a flange 24 having an outer brim shape is peripherally provided on a peripheral edge of the opening portion 21a, that is, on an outer circumferential face of an upper end part of the cylindrical portion 22. The bottomed container 21 used in this embodiment is preferably configured such that the cylindrical portion 22, the bottom portion 23, and the flange 24 are integrally formed of a resin. Further, in this embodiment, there is no particular restriction on the bottomed container 21, however, the bottom portion is a round bottom, and moreover the volume of the bottomed container 21 is preferably 1.0 mL or more, more preferably 1.5 mL or more, and particularly preferably 2.0 mL or more.

Incidentally, the bottomed container 21 used in this embodiment is more preferably a container composed of a polyolefin-based resin described above, and is particularly preferably a container in which a surface (inner wall) thereof is untreated. In the art, in order to effectively suppress non-specific adsorption of a protein, a peptide, or the like, a container in which a surface (inner wall) of a container composed of a synthetic resin is subjected to a surface treatment such as a hydrophilization treatment with a phospholipid polymer or a hydrophilic polymer of quaternary ammonium salt type, photocrosslinkable type, or the like is commercially available. However, such a container subjected to a hydrophilization treatment causes stickiness instead, and can increase adhesion loss of the silica coarse powder CP. Therefore, from the viewpoint of decreasing the adhesion loss of the silica coarse powder CP, it is preferred to use an untreated container in which the inner wall is not subjected to a surface treatment.

(Lid Member)

The silica powder storage package according to this embodiment preferably includes a lid member. The lid member is for closing the opening portion 21a of the above-mentioned bottomed container 21 so as to tightly close or hermetically seal (hereinafter these are also collectively referred to as "seal") the inner space of the bottomed container 21. In this embodiment, as the lid member, a seal material 31 that has a gas barrier property and can be pierced with a needle, a pipetter, or the like can be used. In that case, by welding a lower face of the seal material 31 to an upper end face of the flange 24 of the bottomed container 21, the bottomed container 21 and the seal material 31 are joined to each other.

As a material constituting the seal material 31, a known material can be used without any particular limitation as long as it can seal the inner space of the bottomed container 21. It may be appropriately selected from various functional films according to desired performance. For example, if a film that can be pierced with a needle, a pipetter, or the like is used, a material to be tested or a drug solution can be injected or the like without performing a removal treatment of the seal material 31. As such an easily pierceable film, films in various forms such as a lamination film in which an aluminum vapor deposition layer is provided on an unstretched or uniaxially or biaxially stretched resin film, and a lamination film in which an easily pierceable layer (a paper, a non-woven fabric, a resin film, or the like) having fine perforations formed therein is provided on an unstretched or uniaxially or biaxially stretched resin film are known.

Further, by using, for example, various known easily peelable films such as an easy peel film, an easy open film, and a peelable film to be used for food packaging purposes or for pharmaceutical packaging purposes, easy peelability can be imparted to the seal material 31. If an easily peelable film is used, it is easy to remove the seal material 31 upon use. As such an easily peelable film, for example, various easily peelable films utilizing a peeling mechanism such as interfacial peeling, cohesive peeling, or interlayer peeling are known, and one appropriately selected from known easily peelable films according to desired performance can be used. In general, a lamination film in which a fusion layer of a polymer blend (polymer alloy) is provided on a base resin film, a lamination film in which a hot-melt type fusion layer is provided on a base resin film, an interfacial peeling-type lamination film having a seal layer or a peeling layer, or the like can be suitably used.

From the viewpoint of airtightness or the like, a film having a gas barrier property is preferably used as the seal material 31. As the film having a gas barrier property, films in various forms are known, and one appropriately selected from known films according to desired performance can be used. As an example, a lamination film in which a gas barrier layer composed of a metal foil or a metal vapor deposition film of aluminum or the like, or a thin film or the like of a metal oxide such as aluminum oxide, a metal nitride, a metal carbide, a metal oxynitride, a metal oxide carbide, an inorganic oxide, or the like is provided on an unstretched or uniaxially or biaxially stretched resin film is suitably used.

From the viewpoint of responding to various needs, a film having easy peelability and a gas barrier property is particularly preferably used as the seal material 31. Specific examples of such a film include a lamination film including at least an unstretched or uniaxially or biaxially stretched base resin film, a gas barrier layer, and a sealant layer. Here, as the base resin film, a polyolefin-based film of polyethylene, polypropylene, or the like, a PET film, or the like is preferably used. In addition, as the gas barrier layer, a metal foil or a vapor deposition film of aluminum or the like, or a vapor deposition film or a sputtering film of silicon oxide or a metal oxide such as aluminum oxide is preferably used. Further, as the sealant layer, a pressure-sensitive or heat-sensitive resin layer containing an easily adhesive resin such as a polymer alloy in which polypropylene, polyethylene, polystyrene, etc. are blended at a predetermined ratio; a polyolefin-based resin such as low-density polyethylene (LDPE) or linear low-density polyethylene (LLDPE); or an ethylene-vinyl acetate copolymer is preferably used. Here, even when such a film having easy peelability and a gas barrier property is used, by using a needle having a sharp tip end, or attaching a cap, an adapter, a tip, or the like having a sharp tip end to a pipetter, generally required pierceability can also be ensured.

Incidentally, the joining form of the seal material 31 may be appropriately selected according to the type of the material to be used, and is not particularly limited. Representative examples include welding such as heat welding, ultrasonic welding, laser welding, vibration welding, and high-frequency welding, however, for example, pressure-sensitive adhesion or pressure bonding such as using an easily peelable sealant agent or the like, or heat pressure bonding can also be adopted.

<Operations and Effects>

In the silica powder storage package 100 of the first embodiment, the silica powder PS is stored in the bottomed container 21, and the silica powder PS contains the silica coarse powder CP and the silica fine powder FP, each having a specific particle size distribution. Note that in general, when the silica powder PS is stored in the bottomed container 21, and the bottomed container 21 is in an upright state, as shown in Fig. 1, the silica powder PS is stored in a state where it is accumulated in the height direction from the bottom portion 23.

On the other hand, for example, when the silica powder storage package 100 is subjected to vibration, inclination, or the like during transportation or use thereof, electrification occurs due to contact and/or friction between the silica powder PS and the bottomed container 21. At that time, as shown in Fig. 2, the silica fine powder FP preferentially adheres to the inner wall of the bottomed container 21, and the silica coarse powder CP is accumulated in the vicinity of the bottom portion 23. This is presumed to be because the silica fine powder FP has a smaller mass than the silica coarse powder CP because of its small particle diameter, and is strongly subjected to the action of adhesion due to an electrostatic force so as to easily adhere to the inner wall of the container.

In this manner, by covering the inner wall with the silica fine powder FP adhering to the bottomed container 21, adhesion of the silica coarse powder CP to the inner wall of the bottomed container 21 is suppressed. Therefore, when the silica powder PS filled in the bottomed container 21 is taken out, it can be taken out while suppressing loss due to adhesion of the silica coarse powder CP.

Further, when a liquid sample is injected into the bottomed container 21 and adsorbed on the silica powder PS, it can be used for adsorption while suppressing loss due to adhesion of the silica coarse powder CP to an upper portion of the inner wall of the bottomed container 21. In this manner, the silica powder storage package 100 according to this embodiment is configured to suppress adhesion loss of the silica coarse powder CP having a predetermined particle size distribution.

Incidentally, according to the finding of the present inventors, it has been found that the presence of coarse particles having a sieve diameter of more than 425 $\mu$m becomes a factor that causes an increase in fluctuation upon weighing so as to make the weighing accuracy vary significantly. Therefore, by using the silica coarse powder CP having a sieve diameter of 106 to 425 μm, the weighing accuracy is increased, and thus, the accuracy of test results is improved.

That is, the silica powder storage package 100 includes the silica powder PS that hardly contains coarse particles having a sieve diameter of more than 425 μm, but contains the silica coarse powder CP and the silica fine powder FP so as to suppress adhesion loss of the silica coarse powder CP, and thus, a purification kit for a biological material having high reproducibility and excellent quantitative performance can be realized. According to this, when the silica powder storage package of this embodiment is used in a test kit for application requiring highly accurate individual weighing (for example, medical application or application to a biological material test, or the like), in the case where there is a quantitative test item, the accuracy of test results is improved.

<<Second Embodiment>>

<Silica Powder Storage Package>

Fig. 3 is a cross-sectional view schematically showing a silica powder storage package 100 of a second embodiment. As a bottomed container 21 constituting the silica powder storage package 100, a bottomed container having an opening portion can be used. In this embodiment, the silica powder storage package 100 includes at least a bottomed container 21 made of a synthetic resin and having an opening portion 21a, a lid member that closes the opening portion 21a, and a silica powder PS stored in the bottomed container 21, and is characterized by using, as the silica powder PS, a silica powder that has an average particle diameter $D_{50}$ of 41 to 508 μm, and has a particle size distribution such that a content ratio of a fine powder having a particle diameter of 44 μm or less is 60 mass% or less. Hereinafter, the respective constituent components will be described in detail.

[Silica Powder]

The silica powder used in this embodiment has an average particle diameter $D_{50}$ of 41 to 508 μm, and has a particle size distribution such that a content ratio of a fine powder having a particle diameter of 44 μm or less is 60 mass% or less. A fine powder of a silica powder, particularly a fine powder having a particle diameter of 44 μm or less easily adheres to the inner wall of the container, and by adopting a particle size distribution such that the existing ratio of the fine powder is small, the adhesion loss can be largely decreased. Further, in the silica powder used in this embodiment, the amount of a fine powder is small, and therefore, dusting can be suppressed, and also the handleability is excellent. The silica powder used in this embodiment is more preferably a silica powder that has an average particle diameter $D_{50}$ of 88 to 508 μm, and has a particle size distribution such that a content ratio of a fine powder having a particle diameter of 44 μm or less is 50 mass% or less. Here, the average particle diameter $D_{50}$ is an average particle size of primary particles.

Further, from the viewpoint that the particle diameter of the silica powder is made uniform, the silica powder used in this embodiment preferably has a particle size distribution such that a content ratio of coarse particles having a particle diameter of more than 592 μm is 7.0 mass% or less, more preferably 1.0 mass% or less, and further more preferably 0.5 mass% or less.

Above all, the silica powder particularly preferably used in this embodiment is a silica powder having a particle size distribution such that when the silica powder is sieved for 1 minute on a sieve with a nominal mesh opening of 425 μm in accordance with JIS standard sieve list (JIS Z 8801-1982), 99 mass% or more, and preferably 99.5 mass% or more of the powder passes through the sieve, and when the silica powder is sieved for 1 minute on a sieve with a nominal mesh opening of 106 μm in accordance with JIS standard sieve list (JIS Z 8801-1982), a mass change on the sieve is 1 mass% or less, and preferably 0.8 mass% or less, in addition to having the above-mentioned particle size distribution. It is more preferably a silica powder having a particle size distribution such that when the silica powder is sieved for 1 minute on a sieve with a nominal mesh opening of 250 μm in accordance with JIS standard sieve list (JIS Z 8801-1982), 99 mass% or more, and preferably 99.5 mass% or more of the powder passes through the sieve, and when the silica powder is sieved for 1 minute on a sieve with a nominal mesh opening of 106 μm in accordance with JIS standard sieve list (JIS Z 8801-1982), a mass change on the sieve is 1 mass% or less, and preferably 0.8 mass% or less. According to the finding of the present inventors, it has been found that the presence of fine particles having a sieve diameter of less than 106 μm not only causes adhesion to the container upon weighing or an adverse effect on the operation environment due to stirring up upon weighing, but also causes an increase in fluctuation upon weighing due to uneven distribution in the silica powder. In addition, the presence of coarse particles having a sieve diameter of more than 250 μm or more than 425 μm becomes a factor that causes an increase in fluctuation upon weighing so as to make the weighing accuracy vary significantly. Therefore, by using the silica powder that hardly contains such coarse particles and fine particles, the accuracy of individual weighing on the order of several hundreds of milligrams or less, and in some cases, on the order of several to several tens of milligrams can be significantly increased without excessively deteriorating the handleability as a powder. According to this, when it is used in a test kit for application requiring highly accurate individual weighing (for example, medical application or application to a biological material test, or the like), in the case where there is a quantitative test item, the accuracy of test results is improved. Note that in the present description, the treatment using sieves described above shall be performed in accordance with "6.1 Dry sieving test method" in JIS K 0069:1992.

Further, in order to easily obtain the silica powder of this embodiment having the above-mentioned particle size distribution with good reproducibility, a silica powder obtained by a known production method is preferably subjected to a classification treatment. The classification treatment is generally roughly categorized into sieving using a sieve and fluid classification. The latter is further categorized into dry classification and wet classification, and further, the principles thereof are categorized into those utilizing a gravitational field, an inertial force, or a centrifugal force, and the like, but the type is not particularly limited.

The silica powder having such a particle size distribution is configured to enhance the handleability and the quantitative feeding performance, and by using this in small amount filling devices (quantitative feeding devices) of various systems, highly accurate quantitative determination can be achieved without sacrificing the handleability.

Then, according to the handleability and quantitative feeding performance of the silica powder having such a particle size distribution, it is possible to achieve industrial mass production of a silica powder storage package in which a silica powder is quantitatively determined with high accuracy, specifically, a silica powder storage package in which a silica powder is stored in each container so as to satisfy the following conditions.

a standard deviation $\sigma$: $\sigma < 1.0$

a standard deviation $\sigma$ / an average filling amount f = less than 1.0 (%)

(In the above conditions, the number n of samples is set to 10 or more.)

Note that in the present description, the number n of samples (the number n of individual housing portions to be subjected to extraction) to form a population for calculating a standard deviation $\sigma$ and an average filling amount f for highly accurate quantitative determination is set to 10 or more from the statistical viewpoint. Further, in the extraction of n number of samples, when the number of individual housing portions (bottomed containers) in one test kit (one product) is 10 or more, all individual housing portions (bottomed containers) shall be subjected to extraction. Otherwise, a plurality of products, for which the same weighing and filling methods are adopted, may be collected and combined so as to prepare 10 or more individual housing portions to be subjected to extraction.

The above-mentioned standard deviation $\sigma$ is preferably 0.8 or less, and more preferably 0.7 or less. Incidentally, the lower limit of the standard deviation $\sigma$ is not particularly limited and may be 0 or more, but is preferably 0.1 or more in consideration of productivity and economic efficiency. Further, the above-mentioned standard deviation $\sigma$ / the average filling amount f is preferably 0.8 (%) or less, and more preferably 0.7 (%) or less. Incidentally, the lower limit of $\sigma$/f is not particularly limited and may be 0 or more, but is preferably 0.1 or more in consideration of productivity and economic efficiency. When the value of $\sigma$ or $\sigma$/f is less than the above preferred lower limit, a powder having a single particle diameter with an extremely small variation and a highly accurate filling machine are required, and therefore, the cost becomes very high, and a problem that it is impractical can occur. If the value of $\sigma$ or $\sigma$/f is more than the above preferred upper limit, a lot-to-lot difference in the total surface area of the silica powder used for filling is increased, and for example, when a drug is supported on the silica powder, a problem that the fluctuation of the amount of the supported drug is increased can occur.

In the quantitative feeding of the silica powder, various known powders and powder filling can be used, and the types thereof are not particularly limited. Further, it is also possible to link it with a deaerator, a vacuum device, a sterile device, a packing device, a bag feeder, or the like as needed.

[Bottomed Container and Lid Member]

The bottomed container 21 preferably has a cylindrical portion 22 having a hollow cylindrical shape, and a bottom portion 23 having a hollow conical shape located on a bottom side of the cylindrical portion 22. In this embodiment, it is preferred that a flange 24 having an outer brim shape is peripherally provided on a peripheral edge of the opening portion 21a, that is, on an outer circumferential face of an upper end part of the cylindrical portion 22.

Incidentally, the bottomed container 21 used in this embodiment is a container composed of a synthetic resin such as a polyolefin-based resin or a polyester-based resin described above, and is particularly preferably a container in which a surface (inner wall) thereof is untreated. In the art, in order to effectively suppress non-specific adsorption of a protein, a peptide, or the like, a container in which a surface (inner wall) of a container composed of a synthetic resin is subjected to a surface treatment such as a hydrophilization treatment with a phospholipid polymer or a hydrophilic polymer of quaternary ammonium salt type, photocrosslinkable type, or the like is commercially available. However, such a container subjected to a hydrophilization treatment causes stickiness instead, and can increase adhesion loss of the silica powder. Therefore, from the viewpoint of decreasing the adhesion loss of the silica powder, it is preferred to use an untreated container in which the inner wall is not subjected to a surface treatment.

The lid member is for closing the opening portion 21a of the above-mentioned bottomed container 21 so as to tightly close or hermetically seal (hereinafter these are also collectively referred to as "seal") the inner space of the bottomed container 21. In this embodiment, as the lid member, a seal material 31 that has a gas barrier property and can be pierced with a needle, a pipetter, or the like can be used. In that case, by welding a lower face of the seal material 31 to an upper end face of the flange 24 of the bottomed container 21, the bottomed container 21 and the seal material 31 are joined to each other.

As a material constituting the seal material 31, a known material can be used without any particular limitation as long as it can seal the inner space of the bottomed container 21. It may be appropriately selected from various functional films according to desired performance. For example, if a film that can be pierced with a needle, a pipetter, or the like is used, a material to be tested or a drug solution can be injected or the like without performing a removal treatment of the seal material 31. As such an easily pierceable film, films in various forms such as a lamination film in which an aluminum vapor deposition layer is provided on an unstretched or uniaxially or biaxially stretched resin film, and a lamination film in which an easily pierceable layer (a paper, a non-woven fabric, a resin film, or the like) having fine perforations formed therein is provided on an unstretched or uniaxially or biaxially stretched resin film are known.

Further, by using, for example, various known easily peelable films such as an easy peel film, an easy open film, and a peelable film to be used for food packaging purposes or for pharmaceutical packaging purposes, easy peelability can be imparted to the seal material 31. If an easily peelable film is used, it is easy to remove the seal material 31 upon use. As such an easily peelable film, for example, various easily peelable films utilizing a peeling mechanism such as interfacial peeling, cohesive peeling, or interlayer peeling are known, and one appropriately selected from known easily peelable films according to desired performance can be used. In general, a lamination film in which a fusion layer of a polymer blend (polymer alloy) is provided on a base resin film, a lamination film in which a hot-melt type fusion layer is provided on a base resin film, an interfacial peeling-type lamination film having a seal layer or a peeling layer, or the like can be suitably used.

From the viewpoint of airtightness or the like, a film having a gas barrier property is preferably used as the seal material 31. As the film having a gas barrier property, films in various forms are known, and one appropriately selected from known films according to desired performance can be used. As an example, a lamination film in which a gas barrier layer composed of a metal foil or a metal vapor deposition film of aluminum or the like, or a thin film or the like of a metal oxide such as aluminum oxide, a metal nitride, a metal carbide, a metal oxynitride, a metal oxide carbide, an inorganic oxide, or the like is provided on an unstretched or uniaxially or biaxially stretched resin film is suitably used.

From the viewpoint of responding to various needs, a film having easy peelability and a gas barrier property is particularly preferably used as the seal material 31. Specific examples of such a film include a lamination film including at least an unstretched or uniaxially or biaxially stretched base resin film, a gas barrier layer, and a sealant layer. Here, as the base resin film, a polyolefin-based film of polyethylene, polypropylene, or the like, a PET film, or the like is preferably used. In addition, as the gas barrier layer, a metal foil or a vapor deposition film of aluminum or the like, or a vapor deposition film or a sputtering film of silicon oxide or a metal oxide such as aluminum oxide is preferably used. Further, as the sealant layer, a pressure-sensitive or heat-sensitive resin layer containing an easily adhesive resin such as a polymer alloy in which polypropylene, polyethylene, polystyrene, etc. are blended at a predetermined ratio; a polyolefin-based resin such as low-density polyethylene (LDPE) or linear low-density polyethylene (LLDPE); or an ethylene-vinyl acetate copolymer is preferably used. Here, even when such a film having easy peelability and a gas barrier property is used, by using a needle having a sharp tip end, or attaching a cap, an adapter, a tip, or the like having a sharp tip end to a pipetter, generally required pierceability can also be ensured.

Incidentally, the joining form of the seal material 31 may be appropriately selected according to the type of the material to be used, and is not particularly limited. Representative examples include welding such as heat welding, ultrasonic welding, laser welding, vibration welding, and high-frequency welding, however, for example, pressure-sensitive adhesion or pressure bonding such as using an easily peelable sealant agent or the like, or heat pressure bonding can also be adopted.

Further, in this embodiment, an example in which as the lid member, the seal material 31 using a seal material that has a gas barrier property and can be pierced with a needle, a pipetter, or the like is used and combined with the bottomed container 21 is shown, however, the configuration of the bottomed container 21 is not limited thereto. For example, as the lid member, a cap that closes the opening portion 21a by fitting or screwing to the bottomed container 21 so as to seal the inner space of the bottomed container 21 can be used. Further, in that case, as the bottomed container 21, various known bottomed containers with a cap such as a so-called cap type, a hinged cap type, and a screw cap type can be used.

<<Third Embodiment>>

<Silica Powder Storage Package>

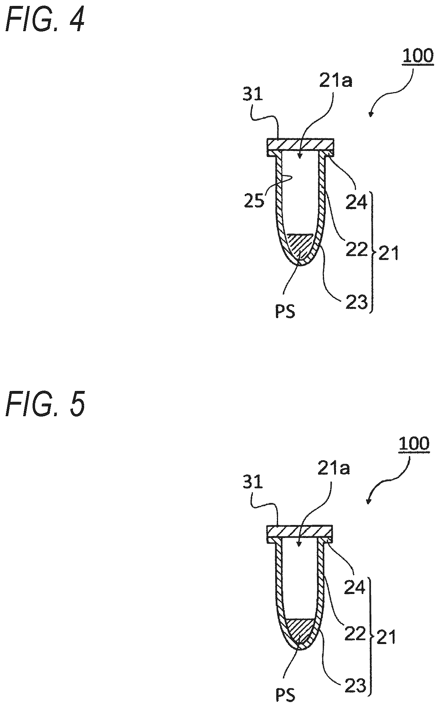

Fig. 4 is a cross-sectional view schematically showing a silica powder storage package 100 of a third embodiment. The silica powder storage package 100 includes at least a bottomed container 21 having a hydrophilic coating layer 25 on an inner wall thereof, and a silica powder PS stored in the bottomed container 21, and is characterized by using, as the silica powder PS, a silica powder that has an average particle diameter $D_{50}$ of 41 to 311 $\mu$m, and has a particle size distribution such that a content ratio of a fine powder having a particle diameter of 44 $\mu$m or less is 60 mass% or less, and a content ratio of coarse particles having a particle diameter of more than 498 $\mu$m is 5.0 mass% or less. Hereinafter, the respective constituent components will be described in detail.

[Silica Powder]

The silica powder used in this embodiment is preferably a silica powder that does not contain a fine powder and coarse particles, and from such a viewpoint, a silica powder that has an average particle diameter $D_{50}$ of 41 to 311 $\mu$m, and has a particle size distribution such that a content ratio of a fine powder having a particle diameter of 44 $\mu$m or less is 60 mass% or less, and a content ratio of coarse particles having a particle diameter of more than 498 $\mu$m is 5.0 mass% or less is used. The bottomed container 21 having the hydrophilic coating layer 25 has high affinity for the silica powder, and particularly, the fine powder having a particle diameter of 44 $\mu$m or less tends to easily adhere to the hydrophilic coating layer 25 on the inner wall of the container. Further, the coarse particles having a particle diameter of more than 498 $\mu$m have a large contribution ratio to the total amount of adhesion loss of the silica powder because of a relatively large mass per particle. Therefore, by adopting a particle size distribution such that the existing ratio thereof is small, the adhesion loss can be largely decreased. In addition, in the silica powder used in this embodiment, the amount of a fine powder is small, and therefore, dusting can be suppressed, and also the handleability is excellent. Further, particles are not excessively large, and a secondary effect that also the weighing accuracy upon weighing is excellent is also obtained. The silica powder used in this embodiment is more preferably a silica powder that has an average particle diameter $D_{50}$ of 88 to 311 $\mu$m, and has a particle size distribution such that a content ratio of a fine powder having a particle diameter of 44 $\mu$m or less is 50 mass% or less and a content ratio of coarse particles having a particle diameter of more than 498 $\mu$m is 5.0 mass% or less. Here, the average particle diameter $D_{50}$ is an average particle size of primary particles.

Further, from the viewpoint that the particle diameter of the silica powder is made uniform, the silica powder used in this embodiment preferably has a particle size distribution such that a content ratio of coarse particles having a particle diameter of more than 592 $\mu$m is 3.0 mass% or less, more preferably 2.0 mass% or less, and further more preferably 1.0 mass% or less.

Above all, the silica powder particularly preferably used in this embodiment is a silica powder having a particle size distribution such that when the silica powder is sieved for 1 minute on a sieve with a nominal mesh opening of 425 $\mu$m in accordance with JIS standard sieve list (JIS Z 8801-1982), 99 mass% or more, and preferably 99.5 mass% or more of the powder passes through the sieve, and when the silica powder is sieved for 1 minute on a sieve with a nominal mesh opening of 106 $\mu$m in accordance with JIS standard sieve list (JIS Z 8801-1982), a mass change on the sieve is 1 mass% or less, and preferably 0.8 mass% or less, in addition to having the above-mentioned particle size distribution. According to the finding of the present inventors, it has been found that the presence of fine particles having a sieve diameter of less than 106 $\mu$m not only causes adhesion to the container upon weighing or an adverse effect on the operation environment due to stirring up upon weighing, but also causes an increase in fluctuation upon weighing due to uneven distribution in the silica powder. In addition, the presence of coarse particles having a sieve diameter of more than 425 $\mu$m becomes a factor that causes an increase in fluctuation upon weighing so as to make the weighing accuracy vary significantly. Therefore, by using the silica powder that hardly contains such coarse particles and fine particles, the accuracy of individual weighing on the order of several hundreds of milligrams or less, and in some cases, on the order of several to several tens of milligrams can be significantly increased without excessively deteriorating the handleability as a powder. According to this, when it is used in a test kit for application requiring highly accurate individual weighing (for example, medical application or application to a biological material test, or the like), in the case where there is a quantitative test item, the accuracy of test results is improved. Note that in the present description, the treatment using sieves described above shall be performed in accordance with "6.1 Dry sieving test method" in JIS K 0069:1992.

Further, in order to easily obtain the silica powder of this embodiment having the above-mentioned particle size distribution with good reproducibility, a silica powder obtained by a known production method is preferably subjected to a classification treatment. The classification treatment is generally roughly categorized into sieving using a sieve and fluid classification. The latter is further categorized into dry classification and wet classification, and further, the principles thereof are categorized into those utilizing a gravitational field, an inertial force, or a centrifugal force, and the like, but the type is not particularly limited.

The silica powder having such a particle size distribution is configured to enhance the handleability and the quantitative feeding performance, and by using this in small amount filling devices (quantitative feeding devices) of various systems, highly accurate quantitative determination can be achieved without sacrificing the handleability.

Then, according to the handleability and quantitative feeding performance of the silica powder having such a particle size distribution, it is possible to achieve industrial mass production of a silica powder storage package in which a silica powder is quantitatively determined with high accuracy, specifically, a silica powder storage package in which a silica powder is stored in each container so as to satisfy the following conditions.

a standard deviation $\sigma$: $\sigma < 1.0$

a standard deviation $\sigma$ / an average filling amount f = less than 1.0 (%)

(In the above conditions, the number n of samples is set to 10 or more.)

Note that in the present description, the number n of samples (the number n of individual housing portions to be subjected to extraction) to form a population for calculating a standard deviation $\sigma$ and an average filling amount f for highly accurate quantitative determination is set to 10 or more from the statistical viewpoint. Further, in the extraction of n number of samples, when the number of individual housing portions (bottomed containers) in one test kit (one product) is 10 or more, all individual housing portions (bottomed containers) shall be subjected to extraction. Otherwise, a plurality of products, for which the same weighing and filling methods are adopted, may be collected and combined so as to prepare 10 or more individual housing portions to be subjected to extraction.

The above-mentioned standard deviation $\sigma$ is preferably 0.8 or less, and more preferably 0.7 or less. Incidentally, the lower limit of the standard deviation $\sigma$ is not particularly limited and may be 0 or more, but is preferably 0.1 or more in consideration of productivity and economic efficiency. Further, the above-mentioned standard deviation $\sigma$ / the average filling amount f is preferably 0.8 (%) or less, and more preferably 0.7 (%) or less. Incidentally, the lower limit of $\sigma$/f is not particularly limited and may be 0 or more, but is preferably 0.1 or more in consideration of productivity and economic efficiency. When the value of $\sigma$ or $\sigma$/f is less than the above preferred lower limit, a powder having a single particle diameter with an extremely small variation and a highly accurate filling machine are required, and therefore, the cost becomes very high, and a problem that it is impractical can occur. If the value of $\sigma$ or $\sigma$/f is more than the above preferred upper limit, a lot-to-lot difference in the total surface area of the silica powder used for filling is increased, and for example, when a drug is supported on the silica powder, a problem that the fluctuation of the amount of the supported drug is increased can occur.

In the quantitative feeding of the silica powder, various known powders and powder filling can be used, and the types thereof are not particularly limited. Further, it is also possible to link it with a deaerator, a vacuum device, a sterile device, a packing device, a bag feeder, or the like as needed.

[Bottomed Container and Lid Member]

The bottomed container 21 preferably has a cylindrical portion 22 having a hollow cylindrical shape, and a bottom portion 23 having a hollow conical shape located on a bottom side of the cylindrical portion 22. In this embodiment, it is preferred that the bottomed container 21 has an opening portion 21a. In this embodiment, it is preferred that a flange 24 having an outer brim shape is peripherally provided on a peripheral edge of the opening portion 21a, that is, on an outer circumferential face of an upper end part of the cylindrical portion 22.

On the inner wall of the bottomed container 21, the hydrophilic coating layer 25 is provided. The hydrophilic coating layer 25 is formed by subjecting the surface (inner wall) of the bottomed container 21 to a hydrophilization treatment or the like with a phospholipid polymer or a hydrophilic polymer of quaternary ammonium salt type, photocrosslinkable type, or the like. The hydrophilic coating layer 25 is often provided for, for example, suppressing non-specific adsorption of a protein, a peptide, or the like. Various containers in which the surface is subjected to a hydrophilization treatment in this manner are commercially available, and these commercially available products can be used as the bottomed container 21.

The silica powder storage package according to this embodiment preferably includes a lid member. The lid member is for closing the opening portion 21a of the above-mentioned bottomed container 21 so as to tightly close or hermetically seal (hereinafter these are also collectively referred to as "seal") the inner space of the bottomed container 21. In this embodiment, as the lid member, a seal material 31 that has a gas barrier property and can be pierced with a needle, a pipetter, or the like can be used. In that case, by welding a lower face of the seal material 31 to an upper end face of the flange 24 of the bottomed container 21, the bottomed container 21 and the seal material 31 are joined to each other.

As a material constituting the seal material 31, a known material can be used without any particular limitation as long as it can seal the inner space of the bottomed container 21. It may be appropriately selected from various functional films according to desired performance. For example, if a film that can be pierced with a needle, a pipetter, or the like is used, a material to be tested or a drug solution can be injected or the like without performing a removal treatment of the seal material 31. As such an easily pierceable film, films in various forms such as a lamination film in which an aluminum vapor deposition layer is provided on an unstretched or uniaxially or biaxially stretched resin film, and a lamination film in which an easily pierceable layer (a paper, a non-woven fabric, a resin film, or the like) having fine perforations formed therein is provided on an unstretched or uniaxially or biaxially stretched resin film are known.

Further, by using, for example, various known easily peelable films such as an easy peel film, an easy open film, and a peelable film to be used for food packaging purposes or for pharmaceutical packaging purposes, easy peelability can be imparted to the seal material 31. If an easily peelable film is used, it is easy to remove the seal material 31 upon use. As such an easily peelable film, for example, various easily peelable films utilizing a peeling mechanism such as interfacial peeling, cohesive peeling, or interlayer peeling are known, and one appropriately selected from known easily peelable films according to desired performance can be used. In general, a lamination film in which a fusion layer of a polymer blend (polymer alloy) is provided on a base resin film, a lamination film in which a hot-melt type fusion layer is provided on a base resin film, an interfacial peeling-type lamination film having a seal layer or a peeling layer, or the like can be suitably used.

From the viewpoint of airtightness or the like, a film having a gas barrier property is preferably used as the seal material 31. As the film having a gas barrier property, films in various forms are known, and one appropriately selected from known films according to desired performance can be used. As an example, a lamination film in which a gas barrier layer composed of a metal foil or a metal vapor deposition film of aluminum or the like, or a thin film or the like of a metal oxide such as aluminum oxide, a metal nitride, a metal carbide, a metal oxynitride, a metal oxide carbide, an inorganic oxide, or the like is provided on an unstretched or uniaxially or biaxially stretched resin film is suitably used.

From the viewpoint of responding to various needs, a film having easy peelability and a gas barrier property is particularly preferably used as the seal material 31. Specific examples of such a film include a lamination film including at least an unstretched or uniaxially or biaxially stretched base resin film, a gas barrier layer, and a sealant layer. Here, as the base resin film, a polyolefin-based film of polyethylene, polypropylene, or the like, a PET film, or the like is preferably used. In addition, as the gas barrier layer, a metal foil or a vapor deposition film of aluminum or the like, or a vapor deposition film or a sputtering film of silicon oxide or a metal oxide such as aluminum oxide is preferably used. Further, as the sealant layer, a pressure-sensitive or heat-sensitive resin layer containing an easily adhesive resin such as a polymer alloy in which polypropylene, polyethylene, polystyrene, etc. are blended at a predetermined ratio; a polyolefin-based resin such as low-density polyethylene (LDPE) or linear low-density polyethylene (LLDPE); or an ethylene-vinyl acetate copolymer is preferably used. Here, even when such a film having easy peelability and a gas barrier property is used, by using a needle having a sharp tip end, or attaching a cap, an adapter, a tip, or the like having a sharp tip end to a pipetter, generally required pierceability can also be ensured.

Incidentally, the joining form of the seal material 31 may be appropriately selected according to the type of the material to be used, and is not particularly limited. Representative examples include welding such as heat welding, ultrasonic welding, laser welding, vibration welding, and high-frequency welding, however, for example, pressure-sensitive adhesion or pressure bonding such as using an easily peelable sealant agent or the like, or heat pressure bonding can also be adopted.

Further, in this embodiment, an example in which as the lid member, the seal material 31 using a seal material that has a gas barrier property and can be pierced with a needle, a pipetter, or the like is used and combined with the bottomed container 21 of capless type is shown, however, the configuration of the bottomed container 21 is not limited thereto. For example, as the lid member, a cap that closes the opening portion 21a by fitting or screwing to the bottomed container 21 so as to seal the inner space of the bottomed container 21 can be used. Further, in that case, as the bottomed container 21, various known bottomed containers with a cap such as a so-called cap type, a hinged cap type, and a screw cap type can be used.

<<Fourth Embodiment>>

<Silica Powder Storage Package>

Fig. 5 is a cross-sectional view schematically showing a silica powder storage package 100 of a fourth embodiment. As a bottomed container 21 constituting the silica powder storage package 100, a bottomed container having an opening portion can be used. In this embodiment, the silica powder storage package 100 includes at least a bottomed container 21 made of a resin and having an opening portion 21a, a lid member that closes the opening portion 21a, and a silica powder PS stored in the bottomed container 21, and is characterized in that the silica powder PS is a hydrated silica powder, and the content of water is 9 mass% or more with respect to the silica powder in an absolutely dry state. Hereinafter, the respective constituent components will be described in detail.

[Silica Powder]

The size of the silica powder is not particularly limited, and may be appropriately set according to the application or required performance. For example, from the viewpoint of selective adsorptivity or favorable adsorptivity or desorptivity for a biological material or a chemical material, or the like, 80% or more (preferably 90% or more, and more preferably 95% or more) of all particles have a maximum Feret diameter of preferably 20 $\mu$m or more, and more preferably 50 $\mu$m or more, and the upper limit thereof is preferably 1 mm or less, and more preferably 800 $\mu$m or less. When the maximum Feret diameter is equal to or more than the above preferred lower limit, the amount of a fine powder is small, and therefore, dusting can be suppressed, and the handleability tends to be improved. When the maximum Feret diameter is equal to or less than the above preferred upper limit, particles are not excessively large, and the weighing accuracy upon weighing tends to be improved.

Further similarly, the average particle diameter $D_{50}$ of the silica powder is not particularly limited, and may be appropriately set according to the application or required performance. For example, from the viewpoint of selective adsorptivity or favorable adsorptivity or desorptivity for a biological material or a chemical material, or the like, the average particle diameter $D_{50}$ of the silica powder is preferably 50 $\mu$m or more, and more preferably 70 $\mu$m or more, and the upper limit thereof is preferably 700 $\mu$m or less, and more preferably 600 $\mu$m or less. When the average particle diameter is equal to or more than the above preferred lower limit, the amount of a fine powder is small, and therefore, dusting can be suppressed, and the handleability tends to be improved. When the average particle diameter is equal to or less than the above upper limit, particles are not excessively large, and the weighing accuracy upon weighing tends to be improved. Here, the average particle diameter $D_{50}$ is an average particle size of primary particles.

Above all, the silica powder particularly preferably used in this embodiment is a silica powder having a particle size distribution such that when the silica powder is sieved for 1 minute on a sieve with a nominal mesh opening of 900 $\mu$m, 99 mass% or more, and preferably 99.5 mass% or more of the powder passes through the sieve, and when the silica powder is sieved for 1 minute on a sieve with a nominal mesh opening of 106 $\mu$m in accordance with JIS standard sieve list (JIS Z 8801-1982), a mass change on the sieve is 1 mass% or less, and preferably 0.8 mass% or less. Incidentally, as the sieve with a mesh opening of 900 $\mu$m, for example, a sieve with the item number: 23GG-900 manufactured by Kansai Wire Netting Co., Ltd. can be used. According to the finding of the present inventors, it has been found that the presence of fine particles having a sieve diameter of less than 106 $\mu$m not only causes adhesion to the container upon weighing or an adverse effect on the operation environment due to stirring up upon weighing, but also causes an increase in fluctuation upon weighing due to uneven distribution in the silica powder. In addition, the presence of coarse particles having a sieve diameter of more than 900 $\mu$m becomes a factor that causes an increase in fluctuation upon weighing so as to make the weighing accuracy vary significantly. Therefore, by using the silica powder that hardly contains coarse particles having a sieve diameter of more than 900 $\mu$m and fine particles having a sieve diameter of less than 106 $\mu$m in this manner, the accuracy of individual weighing on the order of several hundreds of milligrams or less, and in some cases, on the order of several to several tens of milligrams can be significantly increased without excessively deteriorating the handleability as a powder. According to this, when it is used in a test kit for application requiring such highly accurate individual weighing (for example, medical application or application to a biological material test, or the like), in the case where there is a quantitative test item, the accuracy of test results is improved. Note that in the present description, the treatment using sieves described above shall be performed in accordance with "6.1 Dry sieving test method" in JIS K 0069:1992.

It is more preferably a silica powder having a particle size distribution such that when the silica powder is sieved for 1 minute on a sieve with a nominal mesh opening of 900 $\mu$m, 99 mass% or more, and preferably 99.5 mass% or more of the powder passes through the sieve, and when the silica powder is sieved for 1 minute on a sieve with a nominal mesh opening of 425 $\mu$m in accordance with JIS standard sieve list (JIS Z 8801-1982), a mass change on the sieve is 1 mass% or less, and preferably 0.8 mass% or less.

Further, in order to easily obtain the silica powder of this embodiment having the above-mentioned particle size distribution with good reproducibility, a silica powder obtained by a known production method is preferably subjected to a classification treatment. The classification treatment is generally roughly categorized into sieving using a sieve and fluid classification. The latter is further categorized into dry classification and wet classification, and further, the principles thereof are categorized into those utilizing a gravitational field, an inertial force, or a centrifugal force, and the like, but the type is not particularly limited.

The silica powder having such a particle size distribution is configured to enhance the handleability and the quantitative feeding performance, and by using this in small amount filling devices (quantitative feeding devices) of various systems, highly accurate quantitative determination can be achieved without sacrificing the handleability.

In the quantitative feeding of the silica powder, various known powders and powder filling can be used, and the types thereof are not particularly limited. Further, it is also possible to link it with a deaerator, a vacuum device, a sterile device, a packing device, a bag feeder, or the like as needed.

[Water Content]

The silica powder storage package 100 of this embodiment uses a hydrated silica powder as the silica powder PS. Here, the "hydrated" means that water is adsorbed on the silica powder. By using the silica powder on which water is adsorbed, electrification (generation of static electricity) of the silica powder PS due to friction with the bottomed container 21 made of a resin is suppressed, so that adhesion of the silica powder PS to the inner wall of the bottomed container 21 can be suppressed, and the effective use ratio of the silica powder PS stored in the bottomed container 21 is increased. Incidentally, the storage state of the hydrated silica powder in the bottomed container 21 varies depending on the amount of the silica powder stored therein and the amount of water present in the system (in the bottomed container 21). For example, when a porous silica powder is used and water in an amount equal to or less than the total pore volume is present, generally, the silica powder is stored in the bottomed container 21 as a hydrated silica powder (a silica powder containing adsorbed water) having water adsorbed in the pores. Further, when water in an amount exceeding the total pore volume is present, generally, the silica powder is stored in the bottomed container 21 as a water dispersion in which a hydrated silica powder having water adsorbed in the pores is dispersed in water. In any state, by the presence of water in the system, generation of static electricity due to friction with the bottomed container 21 made of a resin is effectively suppressed.

From the viewpoint of sufficiently exhibiting an effect of suppressing electrification (generation of static electricity) of the silica powder PS described above, the amount of water present in the system is 9 mass% or more, preferably 9.5 mass% or more, more preferably 10 mass% or more, further more preferably 30 mass% or more, particularly preferably 60 mass% or more, and most preferably 120 mass% or more with respect to the silica powder in an absolutely dry state. On the other hand, the upper limit thereof is not particularly limited, but is generally 900 mass% or less as a guide, preferably 400 mass% or less, more preferably 300 mass% or less, further more preferably 250 mass% or less, and most preferably 210 mass% or less.

The mass of the hydrated silica powder and the mass of the silica powder in an absolutely dry state can be measured using an infrared moisture meter. As the infrared moisture meter, for example, an infrared moisture meter FD-240 manufactured by Kett Electric Laboratory is exemplified.

Here, in this embodiment, the silica powder in an absolutely dry state (hereinafter sometimes referred to as "absolutely dry silica powder") means a silica powder in a state where a hydrated silica powder is heated to 170°C to remove water (adsorbed water) and the mass change does not occur for 60 seconds or more in this state. That is, the mass of the absolutely dry silica powder can be determined by heating it to 170°C using an infrared moisture meter with a heating mechanism, and measuring the mass in a state where the mass change does not occur for 60 seconds or more as it is. Further, when a hydrated silica powder is hermetically sealed in a container or the like, in order to measure the accurate mass, it is preferred that a time from when the hydrated silica powder is taken out from the container to when the hydrated silica powder is placed in an infrared moisture meter is set within 60 seconds.

Such a silica powder in an absolutely dry state is easily electrified, and when it is stored in the bottomed container 21 as it is, a large amount adheres to the inner wall of the bottomed container 21 due to generation of static electricity. On the other hand, by allowing a silica powder in an absolutely dry state to adsorb water to form a hydrated silica powder or by dispersing such a hydrated silica powder in water to form a water dispersion and then, storing the resultant in the bottomed container 21, such adhesion loss can be significantly reduced.

Incidentally, when the amount of water present in the system is increased to more than a certain amount, the silica powder is brought into a state of floating or sedimenting in water, so that static electricity is generated by swinging of water, and the electric charge amount tends to increase. However, when the silica powder is stored in the bottomed container, if the amount of water present in the system is large, due to the effect of water, the silica powder becomes easy to flow toward the bottom portion of the bottomed container, and therefore, the amount of the silica powder adhering to the wall face of the bottomed container can be decreased. Further, due to swinging of water when the silica powder storage package is transported or the like, the silica powder adhering to the wall face of the bottomed container is washed away, and therefore, the amount of the silica powder adhering to the side face of the bottomed container can be decreased. On the other hand, when the amount of water present in the system becomes excessively large, it becomes difficult to inject a sample such as blood into the bottomed container. According to the study of the present inventors, it is considered that the amount of a sample such as blood is preferably about 1 mL, and therefore, the amount of water in the bottomed container preferably satisfies the following formula.

$$(\text{amount of water in bottomed container}) \leq (\text{volume of bottomed container}) - 1\ \text{mL}$$

The electric charge amount (electrostatic voltage) of the hydrated silica powder is not particularly limited, but is preferably 0.90 kV or less, more preferably 0.60 kV or less, further more preferably 0.25 kV or less, and particularly preferably 0.10 kV or less before and after vibration under measurement conditions in the below-mentioned Example (Example 4).

[Bottomed Container and Lid Member]

The bottomed container 21 preferably has a cylindrical portion 22 having a hollow cylindrical shape, and a bottom portion 23 having a hollow conical shape located on a bottom side of the cylindrical portion 22. In this embodiment, it is preferred that a flange 24 having an outer brim shape is peripherally provided on a peripheral edge of the opening portion 21a, that is, on an outer circumferential face of an upper end part of the cylindrical portion 22.

Incidentally, the bottomed container 21 used in this embodiment is preferably a container composed of a polyolefin-based resin described above, and is particularly preferably a container in which a surface (inner wall) thereof is untreated. In the art, in order to effectively suppress non-specific adsorption of a protein, a peptide, or the like, a container in which a surface (inner wall) of a container composed of a synthetic resin is subjected to a surface treatment such as a hydrophilization treatment with a phospholipid polymer or a hydrophilic polymer of quaternary ammonium salt type, photocrosslinkable type, or the like is commercially available. However, such a container subjected to a hydrophilization treatment causes stickiness instead, and can increase adhesion loss of the silica powder. Therefore, from the viewpoint of decreasing the adhesion loss of the silica powder, it is preferred to use an untreated container in which the inner wall is not subjected to a surface treatment.

The lid member is for closing the opening portion 21a of the above-mentioned bottomed container 21 so as to tightly close or hermetically seal (hereinafter these are also collectively referred to as "seal") the inner space of the bottomed container 21. In this embodiment, as the lid member, a seal material 31 that has a gas barrier property and can be pierced with a needle, a pipetter, or the like can be used. In that case, by welding a lower face of the seal material 31 to an upper end face of the flange 24 of the bottomed container 21, the bottomed container 21 and the seal material 31 are joined to each other.

As a material constituting the seal material 31, a known material can be used without any particular limitation as long as it can seal the inner space of the bottomed container 21. It may be appropriately selected from various functional films according to desired performance. For example, if a film that can be pierced with a needle, a pipetter, or the like is used, a material to be tested or a drug solution can be injected or the like without performing a removal treatment of the seal material 31. As such an easily pierceable film, films in various forms such as a lamination film in which an aluminum vapor deposition layer is provided on an unstretched or uniaxially or biaxially stretched resin film, and a lamination film in which an easily pierceable layer (a paper, a non-woven fabric, a resin film, or the like) having fine perforations formed therein is provided on an unstretched or uniaxially or biaxially stretched resin film are known.

Further, by using, for example, various known easily peelable films such as an easy peel film, an easy open film, and a peelable film to be used for food packaging purposes or for pharmaceutical packaging purposes, easy peelability can be imparted to the seal material 31. If an easily peelable film is used, it is easy to remove the seal material 31 upon use. As such an easily peelable film, for example, various easily peelable films utilizing a peeling mechanism such as interfacial peeling, cohesive peeling, or interlayer peeling are known, and one appropriately selected from known easily peelable films according to desired performance can be used. In general, a lamination film in which a fusion layer of a polymer blend (polymer alloy) is provided on a base resin film, a lamination film in which a hot-melt type fusion layer is provided on a base resin film, an interfacial peeling-type lamination film having a seal layer or a peeling layer, or the like can be suitably used.

From the viewpoint of airtightness or the like, a film having a gas barrier property is preferably used as the seal material 31. As the film having a gas barrier property, films in various forms are known, and one appropriately selected from known films according to desired performance can be used. As an example, a lamination film in which a gas barrier layer composed of a metal foil or a metal vapor deposition film of aluminum or the like, or a thin film or the like of a metal oxide such as aluminum oxide, a metal nitride, a metal carbide, a metal oxynitride, a metal oxide carbide, an inorganic oxide, or the like is provided on an unstretched or uniaxially or biaxially stretched resin film is suitably used.

From the viewpoint of responding to various needs, a film having easy peelability and a gas barrier property is particularly preferably used as the seal material 31. Specific examples of such a film include a lamination film including at least an unstretched or uniaxially or biaxially stretched base resin film, a gas barrier layer, and a sealant layer. Here, as the base resin film, a polyolefin-based film of polyethylene, polypropylene, or the like, a PET film, or the like is preferably used. In addition, as the gas barrier layer, a metal foil or a vapor deposition film of aluminum or the like, or a vapor deposition film or a sputtering film of silicon oxide or a metal oxide such as aluminum oxide is preferably used. Further, as the sealant layer, a pressure-sensitive or heat-sensitive resin layer containing an easily adhesive resin such as a polymer alloy in which polypropylene, polyethylene, polystyrene, etc. are blended at a predetermined ratio; a polyolefin-based resin such as low-density polyethylene (LDPE) or linear low-density polyethylene (LLDPE); or an ethylene-vinyl acetate copolymer is preferably used. Here, even when such a film having easy peelability and a gas barrier property is used, by using a needle having a sharp tip end, or attaching a cap, an adapter, a tip, or the like having a sharp tip end to a pipetter, generally required pierceability can also be ensured.

Incidentally, the joining form of the seal material 31 may be appropriately selected according to the type of the material to be used, and is not particularly limited. Representative examples include welding such as heat welding, ultrasonic welding, laser welding, vibration welding, and high-frequency welding, however, for example, pressure-sensitive adhesion or pressure bonding such as using an easily peelable sealant agent or the like, or heat pressure bonding can also be adopted.

In this embodiment, an example in which as the lid member, the seal material 31 using a seal material that has a gas barrier property and can be pierced with a needle, a pipetter, or the like is used and combined with the bottomed container 21 of capless type is shown, however, the configuration of the bottomed container 21 is not limited thereto. For example, as the lid member, a cap that closes the opening portion 21a by fitting or screwing to the bottomed container 21 so as to seal the inner space of the bottomed container 21 can be used. Further, in that case, as the bottomed container 21, various known bottomed containers with a cap such as a so-called cap type, a hinged cap type, and a screw cap type can be used. However, for such a bottomed container with a cap, an operation of detaching the cap upon use or the like is needed, and therefore, from the viewpoint of operability or handleability, it is preferred to use the seal material 31 having pierceability in combination with the capless bottomed container 21. When these members are used in such a combination, it is possible to access the inside of the bottomed container 21 by perforating the seal material 31 with a pipetter or the like without detaching the seal material 31.

The filling ratio of the silica powder PS in the bottomed container 21 is not particularly limited, and can be set to an arbitrary amount. In an environment where electrification (generation of static electricity) of the silica powder PS due to friction with the bottomed container 21 made of a resin is likely to occur, the operational effect of this embodiment tends to become obvious. From such a viewpoint, the filling ratio of the silica powder PS is preferably 1 to 90 vol%, more preferably 2 to 50 vol%, and further more preferably 3 to 30 vol% with respect to the volume of the bottomed container 21.

Incidentally, in the silica powder storage package 100 of this embodiment, another component may be stored as long as the silica powder PS and water are stored in the bottomed container 21. For example, in order to suppress the movement or scattering of the silica powder in the bottomed container 21, a liquid medium other than water, for example, an alcohol such as methyl alcohol, ethyl alcohol, isopropyl alcohol, or n-butanol, a solvent known in the art other than these, or a mixed solvent thereof may be contained. Among these, one type can be used alone or two or more types can be used in combination.

<<Fifth Embodiment>>

<Silica Powder Storage Package>

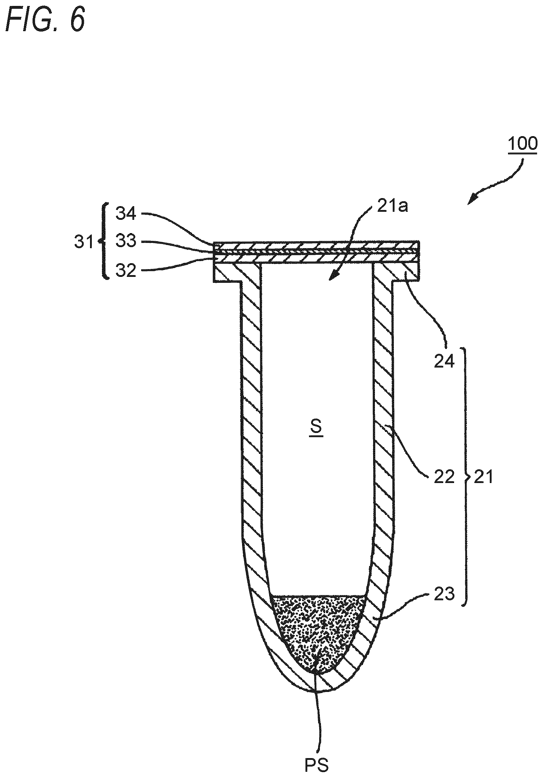

Fig. 6 is a cross-sectional view schematically showing a silica powder storage package 100 (test kit) of a fifth embodiment. The silica powder storage package 100 includes at least a bottomed container 21 having an opening portion 21a, a seal material 31 that closes the opening portion 21a so as to tightly close or hermetically seal an inner space S of the bottomed container 21, and a silica powder PS stored in the bottomed container 21.

Incidentally, as the bottomed container 21 constituting the silica powder storage package 100, the bottomed container 21 having an opening portion can be used. For example, a capless bottomed container can be used. Incidentally, the seal material 31 is preferably a seal material that can be pierced with a pipetter for injecting a liquid sample at a tip side.

In this embodiment, the seal material that can be pierced with a pipetter for injecting a liquid sample at a tip side shall mean a seal material that can be pierced when it is pressed by a pipette made of polypropylene having an opening end face area of 0.1 $mm^2$ to 10 $mm^2$ with a force of 70 N or less. The pierceability of such a seal material can be controlled by appropriately selecting the thickness or the material of each layer constituting the below-mentioned lamination film.

Then, the seal material 31 used here has a laminated structure including at least a heat-seal layer 32 containing a polyolefin-based resin, a gas barrier layer 33 composed of a metal thin film or a metal oxide thin film, and a base resin film 34, and is characterized in that the heat-seal layer 32 is heat-sealed to the opening portion 21a of the bottomed container 21. Hereinafter, the respective constituent components will be described in detail.

[Silica Powder]

The silica powder particularly preferably used in this embodiment is a silica powder having a particle size distribution such that when the silica powder is sieved for 1 minute on a sieve with a nominal mesh opening of 250 $\mu$m in accordance with JIS standard sieve list (JIS Z 8801-1982), 99 mass% or more, and preferably 99.5 mass% or more of the powder passes through the sieve, and when the silica powder is sieved for 1 minute on a sieve with a nominal mesh opening of 106 $\mu$m in accordance with JIS standard sieve list (JIS Z 8801-1982), a mass change on the sieve is 1 mass% or less, and preferably 0.8 mass% or less.

According to the finding of the present inventors, it has been found that the presence of fine particles having a sieve diameter of less than 106 $\mu$m not only causes adhesion to the container upon weighing or an adverse effect on the operation environment due to stirring up upon weighing, but also causes an increase in fluctuation upon weighing due to uneven distribution in the silica powder. In addition, the presence of coarse particles having a sieve diameter of more than 250 $\mu$m becomes a factor that causes an increase in fluctuation upon weighing so as to make the weighing accuracy vary significantly. Therefore, by using the silica powder that hardly contains such coarse particles and fine particles, the accuracy of individual weighing on the order of several hundreds of milligrams or less, and in some cases, on the order of several to several tens of milligrams can be significantly increased without excessively deteriorating the handleability as a powder. According to this, when it is used in a test kit for application requiring highly accurate individual weighing (for example, medical application or application to a biological material test, or the like), in the case where there is a quantitative test item, the accuracy of test results is improved. Note that in the present description, the treatment using sieves described above shall be performed in accordance with "6.1 Dry sieving test method" in JIS K 0069:1992.

Further, in order to easily obtain the silica powder of this embodiment having the above-mentioned particle size distribution with good reproducibility, a silica powder obtained by a known production method is preferably subjected to a classification treatment. The classification treatment is generally roughly categorized into sieving using a sieve and fluid classification. The latter is further categorized into dry classification and wet classification, and further, the principles thereof are categorized into those utilizing a gravitational field, an inertial force, or a centrifugal force, and the like, but the type is not particularly limited.

The silica powder having such a particle size distribution is configured to enhance the handleability and the quantitative feeding performance, and by using this in small amount filling devices (quantitative feeding devices) of various systems, highly accurate quantitative determination can be achieved without sacrificing the handleability.

Then, according to the handleability and quantitative feeding performance of the silica powder having such a particle size distribution, it is possible to achieve industrial mass production of a silica powder storage package in which a silica powder is quantitatively determined with high accuracy, specifically, a silica powder storage package in which a silica powder is stored in each container so as to satisfy the following conditions.

a standard deviation $\sigma$: $\sigma < 1.0$

a standard deviation $\sigma$ / an average filling amount f = less than 1.0 (%)

(In the above conditions, the number n of samples is set to 10 or more.)

Note that in the present description, the number n of samples (the number n of individual housing portions to be subjected to extraction) to form a population for calculating a standard deviation $\sigma$ and an average filling amount f for highly accurate quantitative determination is set to 10 or more from the statistical viewpoint. Further, in the extraction of n number of samples, when the number of individual housing portions (bottomed containers) in one test kit (one product) is 10 or more, all individual housing portions (bottomed containers) shall be subjected to extraction. Otherwise, a plurality of products, for which the same weighing and filling methods are adopted, may be collected and combined so as to prepare 10 or more individual housing portions to be subjected to extraction.

The above-mentioned standard deviation $\sigma$ is preferably 0.8 or less, and more preferably 0.7 or less. Incidentally, the lower limit of the standard deviation $\sigma$ is not particularly limited and may be 0 or more, but is preferably 0.1 or more in consideration of productivity and economic efficiency. Further, the above-mentioned standard deviation $\sigma$ / the average filling amount f is preferably 0.8 (%) or less, and more preferably 0.7 (%) or less. Incidentally, the lower limit of $\sigma$/f is not particularly limited and may be 0 or more, but is preferably 0.1 or more in consideration of productivity and economic efficiency. When the value of $\sigma$ or $\sigma$/f is less than the above preferred lower limit, a powder having a single particle diameter with an extremely small variation and a highly accurate filling machine are required, and therefore, the cost becomes very high, and a problem that it is impractical can occur. If the value of $\sigma$ or $\sigma$/f is more than the above preferred upper limit, a lot-to-lot difference in the total surface area of the silica powder used for filling is increased, and for example, when a drug is supported on the silica powder, a problem that the fluctuation of the amount of the supported drug is increased can occur.

In the quantitative feeding of the silica powder, various known powders and powder filling can be used, and the types thereof are not particularly limited. Further, it is also possible to link it with a deaerator, a vacuum device, a sterile device, a packing device, a bag feeder, or the like as needed.

[Bottomed Container and Seal Material]

The bottomed container 21 preferably has a cylindrical portion 22 having a hollow cylindrical shape, and a bottom portion 23 having a hollow conical shape located on a bottom side of the cylindrical portion 22. In this embodiment, it is preferred that a flange 24 having an outer brim shape is peripherally provided on a peripheral edge of the opening portion 21a, that is, on an outer circumferential face of an upper end part of the cylindrical portion 22. The bottomed container 21 used in this embodiment is preferably configured such that the cylindrical portion 22, the bottom portion 23, and the flange 24 are integrally formed.

The seal material 31 is for closing the opening portion 21 a of the above-mentioned bottomed container 21 so as to tightly close or hermetically seal (hereinafter these are also collectively referred to as "seal") the inner space S of the bottomed container 21.

In the silica powder storage package 100 of this embodiment, as the seal material 31, a seal material that has a gas barrier property and can be pierced with a pipetter for injecting a liquid sample at a tip side is preferably used. By using the seal material that has a gas barrier property and can be pierced with a pipetter, it becomes possible to inject a liquid sample such as a material to be tested or a drug solution into the inner space S of the bottomed container 21 without performing a removal treatment of the seal material. Further, by using the seal material having a gas barrier property, the airtightness is excellent.

More specifically, as the seal material 31, a seal material having a laminated structure including at least the heat-seal layer 32 containing a polyolefin-based resin, the gas barrier layer 33 composed of a metal thin film or a metal oxide thin film, and the base resin film 34 is used, and by heat-sealing the heat-seal layer 32 to the opening portion 21a of the bottomed container 21, the inner space S in the bottomed container 21 is sealed. Therefore, when accessing the inner space S by piercing the seal material 31 with a tip portion of a pipetter to provide a perforation in the seal material 31, the metal thin film or the metal oxide contained in the gas barrier layer 33 is captured by the heat-seal layer 32 containing a polyolefin-based resin having a relatively high viscosity. As a result, mixing of a contamination derived from the metal thin film or the metal oxide thin film in the inner space S is reduced or completely suppressed.

Therefore, mixing of a metal, a metal oxide, or the like derived from a cover material in the container, which is problematic in a conventional technique, is effectively suppressed.

The polyolefin-based resin contained in the heat-seal layer is not particularly limited. The polyolefin-based resin is a macromolecule (polymer) having a simple olefin or alkene as a unit structure. Examples of the polyolefin-based resin include a polypropylene-based resin, a polyethylene-based resin, a polystyrene-based resin, and a polymer alloy in which these are blended at a predetermined ratio. These resins may be used alone or by combining two or more types.

Among these polyolefin-based resins, from the viewpoint of having excellent adhesiveness to the bottomed container, a polyethylene-based resin is preferred. Examples of the polyethylene-based resin include low-density polyethylene (LDPE), linear low-density polyethylene (LLDPE), middle-density polyethylene, and high-density polyethylene. These polyethylene-based resins may be used alone or by combining two or more types. From the viewpoint of having excellent processability and adhesiveness, linear low-density polyethylene is preferred.

In addition, the heat-seal layer may contain a resin such as an ethylene-vinyl acetate copolymer.

Further, to the heat-seal layer, another known additive for resins can be added within a range not inhibiting the heat-sealing property. As such an additive, for example, a dye, a plasticizer, a mold releasing agent, a flame retardant, an antioxidant, a light stabilizer, a UV absorber, etc. can be exemplified.

The content ratio of the polyolefin-based resin contained in the heat-seal layer is not particularly limited, but is preferably 60 to 100 mass%, more preferably 80 to 100 mass%, and particularly preferably 90 to 100 mass% with respect to the total amount (100 mass%) of a composition constituting the heat-seal layer.

The thickness of the heat-seal layer is not particularly limited, but is preferably 10 to 70 $\mu$m, more preferably 20 to 60 $\mu$m, and particularly preferably 30 to 50 $\mu$m. If the thickness is equal to or more than the above lower limit, when the opening portion of the bottomed container is heat-sealed, the airtightness in the bottomed container is excellent. Further, if the thickness is equal to or less than the above upper limit, when the bottomed container is opened, occurrence of a residue of the resin composition in the opening portion of the bottomed container can be prevented.

Examples of the metal thin film used in the gas barrier layer include a metal foil and a vapor deposition film of aluminum, cobalt, nickel, zinc, copper, silver, or the like, or an alloy thereof. Further, examples of the metal oxide thin film include a vapor deposition film and a sputtering film of aluminum oxide, silicon oxide, or the like. Among these, from the viewpoint of production cost, a metal thin film composed of aluminum is preferably used.

The thickness of the gas barrier layer is not particularly limited, and can be selected from, for example, about 100 Å to 50 $\mu$m.

A material of the base resin film is not particularly limited, and examples thereof include a polyolefin-based film of polyethylene, polypropylene, or the like, and a polyester film of polyethylene terephthalate (PET), polyethylene naphthalate, polybutylene terephthalate, or the like. Further, as the base resin film, an unstretched film or an uniaxially or biaxially stretched film can be used.

The thickness of the base resin film is not particularly limited, and can be selected from, for example, about 5 to 40 $\mu$m.

The lamination order of the respective layers constituting the seal material is not particularly limited as long as the heat-seal layer is disposed at an opening portion side of the bottomed container, however, from the viewpoint of improving the handleability of the seal material, it is preferred to laminate the heat-seal layer, the gas barrier layer, and the base resin film in this order. In the case of a seal material in which the heat-seal layer, the base resin film, and the gas barrier layer are laminated in this order, when the gas barrier layer exposed on the surface is bent, it does not return to the original shape due to plastic deformation, and poor appearance may sometimes be caused.

In addition, it is preferred to provide an adhesive layer between the respective layers constituting the seal material. Examples of an adhesive used for the adhesive layer include an isocyanate-based adhesive, a polyester-based adhesive, and an acrylic adhesive. Among these, an isocyanate-based adhesive and a polyester-based adhesive are preferred. An isocyanate-based adhesive and a polyester-based adhesive have a high adhesive strength and high heat resistance, and therefore have an excellent anti-peeling property for a metal face, and moreover have excellent resistance during heat-sealing to the bottomed container, and the like.

When the anti-peeling property for a metal face is excellent, a contamination derived from the metal thin film or the metal oxide thin film can be captured also in the adhesive layer, and therefore, mixing of a contamination in the container can be further suppressed.

When the resistance during heat-sealing to the bottomed container is excellent, interlayer peeling of the seal material can be prevented during heat-sealing.

The thickness of the adhesive layer is not particularly limited, and can be appropriately selected from, for example, about 0.5 to 10 $\mu$m.

Further, on the front face of the seal material, a protective film may be provided. The front face of the seal material refers to a face on the opposite side to a face opposed to the opening portion of the bottomed container. By providing the protective film on the front face of the seal material, water resistance or the like of the seal material can be improved.

As the protective film, a resin film is preferred. As a resin constituting the resin film, a polyamide resin such as Nylon 6 or Nylon 6,6; a polyester resin such as polyethylene terephthalate, polybutylene terephthalate, or polyethylene naphthalate; a polyolefin-based resin such as polypropylene or polyethylene can be used.

The thickness of the protective film is not particularly limited, and can be appropriately selected from, for example, about 5 to 100 $\mu$m.

The seal material can be produced by laminating the above-mentioned respective layers by a conventionally known method. From the viewpoint that the adhesiveness between the respective layers is enhanced, the adhesive layer of a thin film is easily formed, and generation of a contamination derived from the metal thin film or the metal oxide thin film is further suppressed, it is preferred to adopt a dry lamination system as a method for producing the seal material. When using the seal material obtained by the dry lamination system, mixing of a contamination in the inner space S of the bottomed container is largely reduced or completely suppressed.

The seal material 31 having such a laminated structure is heat-sealed so that the outer periphery of the lower face of the heat-seal layer 32 of the seal material 31 and the upper end face of the flange 24 of the bottomed container 21 are in contact with each other. Then, the seal material 31 is heat-sealed in a state of being planarly suspended at the opening of the opening portion 21a so as to form a planar face coinciding with the opening end face (a face overlapped with the opening of the opening portion 21a in plan view) of the opening portion 21a.

Incidentally, the joining form of the seal material 31 may be appropriately selected according to the type of the material to be used, and is not particularly limited. Representative examples include welding such as heat welding, ultrasonic welding, laser welding, vibration welding, and high-frequency welding, however, for example, pressure-sensitive adhesion or pressure bonding such as using an easily peelable sealant agent or the like, or heat pressure bonding can also be adopted.

Further, by using a silica powder having a predetermined sieve diameter described above as the silica powder, a silica powder storage package 100 in which the silica powder is quantitatively determined with high accuracy in advance in the bottomed container 21 can be realized, and by using this as a test kit, the accuracy of test results can be improved.

<<Sixth Embodiment>>

<Silica Powder Storage Package>

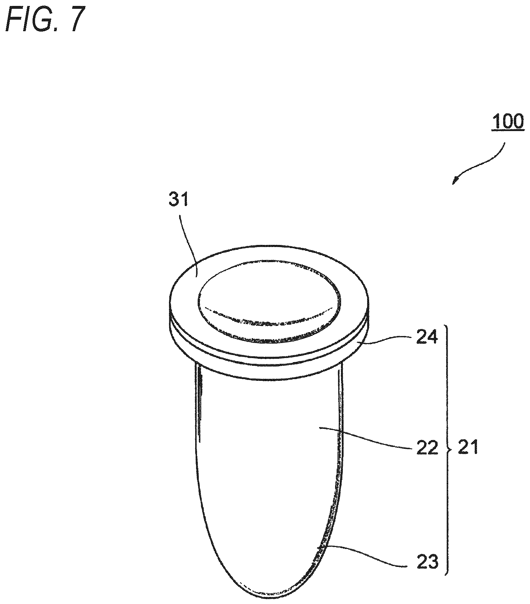

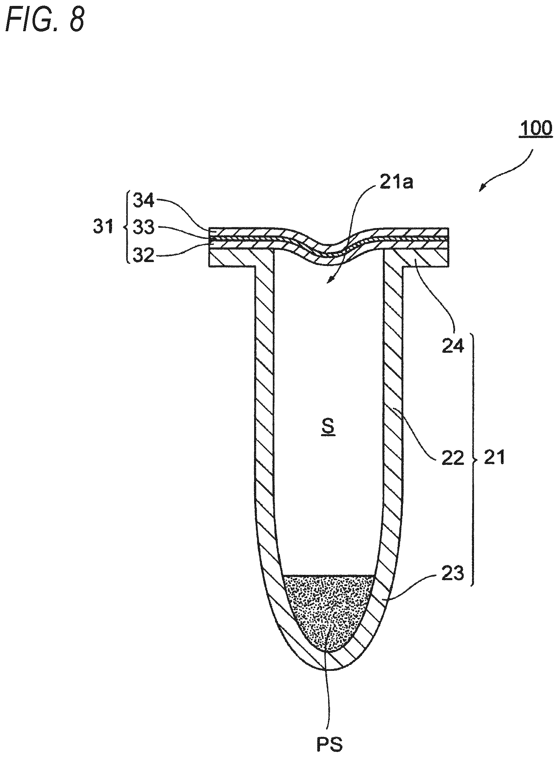

Figs. 7 and 8 are a perspective view and a cross-sectional view each schematically showing a silica powder storage package 100 of a sixth embodiment. In this embodiment, the silica powder storage package 100 includes at least a bottomed container 21 having an opening portion 21a, a seal material 31 that closes the opening portion 21a so as to tightly close or hermetically seal an inner space S of the bottomed container 21, and a silica powder PS stored in the bottomed container 21.

Incidentally, the seal material 31 is preferably a seal material that can be pierced with a pipetter for injecting a liquid sample at a tip side. In this embodiment, the seal material that can be pierced with a pipetter for injecting a liquid sample at a tip side shall mean a seal material that can be pierced when it is pressed by a pipette made of polypropylene having an opening end face area of 0.1 mm$^2$ to 10 mm$^2$ with a force of 70 N or less. The pierceability of such a seal material can be controlled by appropriately selecting the thickness or the material of each layer constituting the below-mentioned seal material.

Then, the seal material 31 used here is characterized by being convexly curved toward the inner space S of the bottomed container 21. Hereinafter, the respective constituent components will be described in detail.

[Silica Powder]

The silica powder particularly preferably used in this embodiment is a silica powder having a particle size distribution such that when the silica powder is sieved for 1 minute on a sieve with a nominal mesh opening of 250 $\mu$m in accordance with JIS standard sieve list (JIS Z 8801-1982), 99 mass% or more, and preferably 99.5 mass% or more of the powder passes through the sieve, and when the silica powder is sieved for 1 minute on a sieve with a nominal mesh opening of 106 μm in accordance with JIS standard sieve list (JIS Z 8801-1982), a mass change on the sieve is 1 mass% or less, and preferably 0.8 mass% or less.

According to the finding of the present inventors, it has been found that the presence of fine particles having a sieve diameter of less than 106 μm not only causes adhesion to the container upon weighing or an adverse effect on the operation environment due to stirring up upon weighing, but also causes an increase in fluctuation upon weighing due to uneven distribution in the silica powder. In addition, the presence of coarse particles having a sieve diameter of more than 250 μm becomes a factor that causes an increase in fluctuation upon weighing so as to make the weighing accuracy vary significantly. Therefore, by using the silica powder that hardly contains such coarse particles and fine particles, the accuracy of individual weighing on the order of several hundreds of milligrams or less, and in some cases, on the order of several to several tens of milligrams can be significantly increased without excessively deteriorating the handleability as a powder. According to this, when it is used in a test kit for application requiring highly accurate individual weighing (for example, medical application or application to a biological material test, or the like), in the case where there is a quantitative test item, the accuracy of test results is improved. Note that in the present description, the treatment using sieves described above shall be performed in accordance with "6.1 Dry sieving test method" in JIS K 0069:1992.

Further, in order to easily obtain the silica powder of this embodiment having the above-mentioned particle size distribution with good reproducibility, a silica powder obtained by a known production method is preferably subjected to a classification treatment. The classification treatment is generally roughly categorized into sieving using a sieve and fluid classification. The latter is further categorized into dry classification and wet classification, and further, the principles thereof are categorized into those utilizing a gravitational field, an inertial force, or a centrifugal force, and the like, but the type is not particularly limited.

The silica powder having such a particle size distribution is configured to enhance the handleability and the quantitative feeding performance, and by using this in small amount filling devices (quantitative feeding devices) of various systems, highly accurate quantitative determination can be achieved without sacrificing the handleability.

Then, according to the handleability and quantitative feeding performance of the silica powder having such a particle size distribution, it is possible to achieve industrial mass production of a silica powder storage package in which a silica powder is quantitatively determined with high accuracy, specifically, a silica powder storage package in which a silica powder is stored in each container so as to satisfy the following conditions.

a standard deviation $\sigma$: $\sigma < 1.0$

a standard deviation $\sigma$ / an average filling amount f = less than 1.0 (%)

(In the above conditions, the number n of samples is set to 10 or more.)

Note that in the present description, the number n of samples (the number n of individual housing portions to be subjected to extraction) to form a population for calculating a standard deviation $\sigma$ and an average filling amount f for highly accurate quantitative determination is set to 10 or more from the statistical viewpoint. Further, in the extraction of n number of samples, when the number of individual housing portions (bottomed containers) in one test kit (one product) is 10 or more, all individual housing portions (bottomed containers) shall be subjected to extraction. Otherwise, a plurality of products, for which the same weighing and filling methods are adopted, may be collected and combined so as to prepare 10 or more individual housing portions to be subjected to extraction.

The above-mentioned standard deviation $\sigma$ is preferably 0.8 or less, and more preferably 0.7 or less. Incidentally, the lower limit of the standard deviation $\sigma$ is not particularly limited and may be 0 or more, but is preferably 0.1 or more in consideration of productivity and economic efficiency. Further, the above-mentioned standard deviation $\sigma$ / the average filling amount f is preferably 0.8 (%) or less, and more preferably 0.7 (%) or less. Incidentally, the lower limit of $\sigma$/f is not particularly limited and may be 0 or more, but is preferably 0.1 or more in consideration of productivity and economic efficiency. When the value of $\sigma$ or $\sigma$/f is less than the above preferred lower limit, a powder having a single particle diameter with an extremely small variation and a highly accurate filling machine are required, and therefore, the cost becomes very high, and a problem that it is impractical can occur. If the value of $\sigma$ or $\sigma$/f is more than the above preferred upper limit, a lot-to-lot difference in the total surface area of the silica powder used for filling is increased, and for example, when a drug is supported on the silica powder, a problem that the fluctuation of the amount of the supported drug is increased can occur.

In the quantitative feeding of the silica powder, various known powders and powder filling can be used, and the types thereof are not particularly limited. Further, it is also possible to link it with a deaerator, a vacuum device, a sterile device, a packing device, a bag feeder, or the like as needed.

[Bottomed Container and Seal Material]

The bottomed container 21 preferably has a cylindrical portion 22 having a hollow cylindrical shape, and a bottom portion 23 having a hollow conical shape located on a bottom side of the cylindrical portion 22. In this embodiment, it is preferred that a flange 24 having an outer brim shape is peripherally provided on a peripheral edge of the opening portion 21a, that is, on an outer circumferential face of an upper end part of the cylindrical portion 22.

The seal material 31 is for closing the opening portion 21a of the above-mentioned bottomed container 21 so as to tightly close or hermetically seal (hereinafter these are also collectively referred to as "seal") the inner space S of the bottomed container 21.

In the silica powder storage package 100 of this embodiment, as the seal material 31, a seal material that has a gas barrier property and can be pierced with a pipetter for injecting a liquid sample at a tip side is preferably used. By using the seal material that has a gas barrier property and can be pierced with a pipetter, it becomes possible to inject a liquid sample such as a material to be tested or a drug solution into the inner space S of the bottomed container 21 without performing a removal treatment of the seal material. Further, by using the seal material having a gas barrier property, the airtightness is excellent.

As a material constituting the seal material 31, a known material can be used without any particular limitation as long as it can seal the inner space S of the bottomed container 21. It may be appropriately selected from various functional films according to desired performance. For example, if a film or a lamination film that can be pierced with a pipetter is used, a liquid sample can be injected or the like without performing a removal treatment of the seal material 31. As such an easily pierceable film, films in various forms such as a lamination film in which an aluminum vapor deposition layer is provided on an unstretched or uniaxially or biaxially stretched resin film, a lamination film in which an easily pierceable layer (a paper, a non-woven fabric, a resin film, or the like) having fine perforations formed therein is provided on an unstretched or uniaxially or biaxially stretched resin film, and a lamination film in which an adhesive layer, a protective film, or the like is further provided on such a film are known.

From the viewpoint of airtightness or the like, a film having a gas barrier property is preferably used as the seal material. As the film having a gas barrier property, films in various forms are known, and one appropriately selected from known films according to desired performance can be used. As an example, a lamination film in which a gas barrier layer composed of a metal foil or a metal vapor deposition film of aluminum or the like, or a thin film or the like of a metal oxide such as aluminum oxide, a metal nitride, a metal carbide, a metal oxynitride, a metal oxide carbide, an inorganic oxide, or the like is provided on an unstretched or uniaxially or biaxially stretched resin film, a lamination film in which an adhesive layer, a protective film, or the like is further provided on such a film, or the like is suitably used.

From the viewpoint of responding to various needs, a film having heat-sealability and a gas barrier property is particularly preferably used as the seal material 31. When using a seal material having heat-sealability, the bottomed container can be easily sealed, and therefore, the productivity of the silica powder storage package is improved.

As such a film, in this embodiment, it is preferred to use a lamination film including at least an unstretched or uniaxially or biaxially stretched base resin film 34, a gas barrier layer 33, and a heat-seal layer 32. Here, as the base resin film 34, a polyolefin-based film of polyethylene, polypropylene, or the like, a PET film, or the like is preferably used. In addition, as the gas barrier layer 33, a metal foil or a vapor deposition film of aluminum or the like, or a vapor deposition film or a sputtering film of a metal oxide such as aluminum oxide is preferably used. Further, as the heat-seal layer 32, a pressure-sensitive or heat-sensitive resin layer containing an easily adhesive resin such as a polymer alloy in which polypropylene, polyethylene, polystyrene, etc. are blended at a predetermined ratio; a polyolefin-based resin such as low-density polyethylene (LDPE) or linear low-density polyethylene (LLDPE); or an ethylene-vinyl acetate copolymer is preferably used. Further, a lamination film in which an adhesive layer, a protective film, or the like is further provided on such a film, or the like can be used.

The thickness of the base resin film 34 is not particularly limited, but can be selected from, for example, about 5 to 40 $\mu$m. Further, the thickness of the gas barrier layer 33 is not particularly limited, but can be selected from, for example, about 100 Å to 50 $\mu$m. Further, the thickness of the heat-seal layer 32 is not particularly limited, but can be selected from, for example, about 10 to 70 $\mu$m.

Examples of an adhesive used for the adhesive layer provided between the respective layers of the above-mentioned lamination film include an isocyanate-based adhesive, a polyester-based adhesive, and an acrylic adhesive. Among these, an isocyanate-based adhesive and a polyester-based adhesive are preferred. An isocyanate-based adhesive and a polyester-based adhesive have a high adhesive strength and high heat resistance, and therefore have an excellent anti-peeling property for a metal face, and moreover have excellent resistance during heat-sealing to the bottomed container, and the like.

In the case where a metal material of an aluminum vapor deposition layer or the like is used as the material constituting the seal material, a contamination or the like derived from the metal material is sometimes mixed in the bottomed container at the time of piercing with a pipetter.

When the anti-peeling property for a metal face is excellent, a contamination derived from the metal material can be captured in the adhesive layer, and therefore, mixing of a contamination in the container can be suppressed. Further, the bottomed container is sometimes sealed by heat-sealing the seal material.

When the resistance during heat-sealing to the bottomed container is excellent, interlayer peeling of the respective layers constituting the seal material can be prevented during heat-sealing, and therefore, the productivity of the silica powder storage package is improved.

The thickness of the adhesive layer is not particularly limited, and can be appropriately selected from, for example, about 0.5 to 10 μm.

The protective film is provided on the front face of the seal material. The front face of the seal material refers to a face on the opposite side to a face opposed to the opening portion of the bottomed container. By providing the protective film on the front face of the seal material, water resistance or the like of the seal material can be improved.

As the protective film, a resin film is preferred. As a resin constituting the resin film, a polyamide resin such as Nylon 6 or Nylon 6,6; a polyester resin such as polyethylene terephthalate, polybutylene terephthalate, or polyethylene naphthalate; a polyolefin-based resin such as polypropylene or polyethylene can be used.

The thickness of the protective film is not particularly limited, and can be appropriately selected from, for example, about 5 to 100 μm.

The seal material can be produced by laminating the above-mentioned respective layers by a conventionally known method. From the viewpoint that the adhesiveness between the respective layers is enhanced, the adhesive layer of a thin film is easily formed, and generation of a contamination derived from the metal material is further suppressed, it is preferred to provide the adhesive layer between the respective layers, and adopt a dry lamination system as a method for producing the seal material.

Then, as shown in Figs. 7 and 8, the seal material 31 is joined to the bottomed container 21 in a state of being convexly curved toward the inner space S of the bottomed container 21. More specifically, the outer periphery of the lower face of the seal material 31 is joined to the upper end face of the flange 24 of the bottomed container 21 in a state where the seal material 31 is curved so that a developed area of the seal material 31 in the opening portion 21a becomes larger than a plan view area PA ($cm^2$) of the opening portion 21a. Here, the developed area of the seal material 31 in the opening portion 21a means an area ($cm^2$) in plan view when the seal material 31 located at the opening of the opening portion 21a (the seal material 31 in a portion overlapped with the opening of the opening portion 21a in plan view) is cut and developed into a planar shape.

The curved shape of the seal material 31 is not particularly limited as long as it is convexly curved toward the inner space S of the bottomed container 21. For example, there may be a plurality of curved portions. From the viewpoint that displacement at the time of piercing with a pipetter for injecting a liquid sample is relaxed, when the ratio of the developed area of the seal material 31 in the opening portion 21a to the plan view area PA ($cm^2$) of the opening portion 21a is defined as a developed area ratio, the developed area ratio is preferably 100.5% or more, more preferably 101% or more, and particularly preferably 102% or more. On the other hand, if the curved portion is excessively large, dust or the like is accumulated, and when a liquid sample is injected, the dust may be sometimes mixed in the bottomed container, and therefore, the developed area ratio is preferably 140% or less, more preferably 120% or less, and particularly preferably 110% or less.

The silica powder storage package is stored in an analyzer that performs a blood test or the like. Then, through an autosampler or the like, a liquid sample such as blood is injected into the bottomed container containing the silica powder via a pipette. At that time, liquid dripping may sometimes occur due to a trouble or the like of the pipette. In particular, if the pipette is located immediately above the bottomed container containing the silica powder and liquid dripping has occurred before the seal material is perforated with the pipette, the liquid stays on the seal material, and the pipette sticks there. Therefore, the liquid overflows and scatters to foul the sample therearound or the analyzer, and thus, such a case is not preferred. When the seal material is configured to be convexly curved toward the inner space of the bottomed container so that the liquid can be held there, even if liquid dripping occurs, the liquid does not immediately overflow, and therefore, its surrounding can be prevented from being fouled, and thus such a configuration is preferred.

Further, the area of the hole when the seal material is perforated is not particularly limited, but from the viewpoint of injection of the sample, the area of the hole with respect to the opening area of the opening portion of the bottomed container is preferably 30% or more, and more preferably 40% or more. On the other hand, when the hole at the time of perforation is excessively large, the container may be damaged at the time of perforation, and therefore, the area of the hole with respect to the opening area of the opening portion of the bottomed container is preferably 90% or less, and more preferably 80% or less.

Incidentally, the joining form of the seal material 31 may be appropriately selected according to the type of the material to be used, and is not particularly limited. Representative examples include welding such as heat welding, ultrasonic welding, laser welding, vibration welding, and high-frequency welding, however, for example, pressure-sensitive adhesion or pressure bonding such as using an easily peelable sealant agent or the like, or heat pressure bonding can also be adopted.

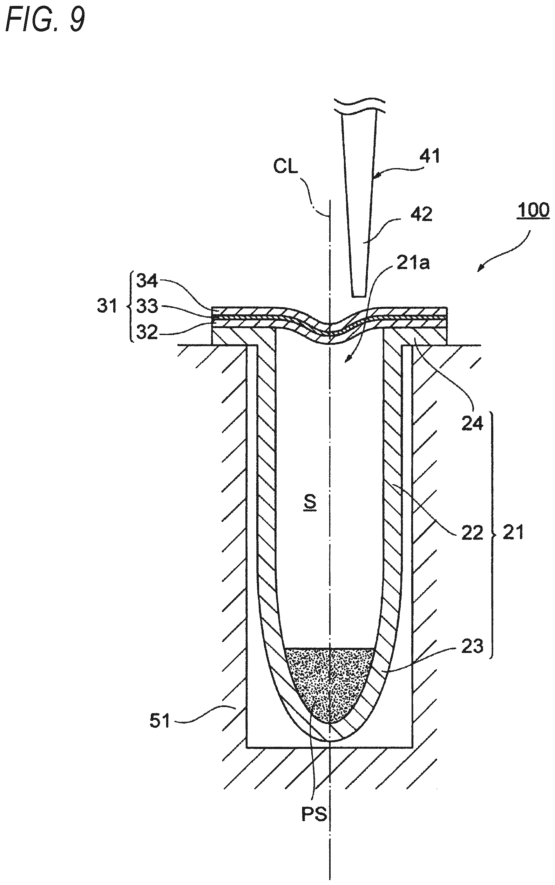

Figs. 9 to 12 are each an explanatory view showing a state before and after the seal material 31 of the silica powder storage package 100 is pierced with a tip portion 42 (pipette) of a pipetter 41. Hereinafter, an operational effect of this embodiment will be described with reference to these drawings.

Fig. 9 shows a state before the seal material 31 is pierced. Here, the tip portion 42 of the pipetter 41 for injecting a liquid sample is located at a position shifted with respect to a center line CL of the silica powder storage package 100, that is, at an offset position.

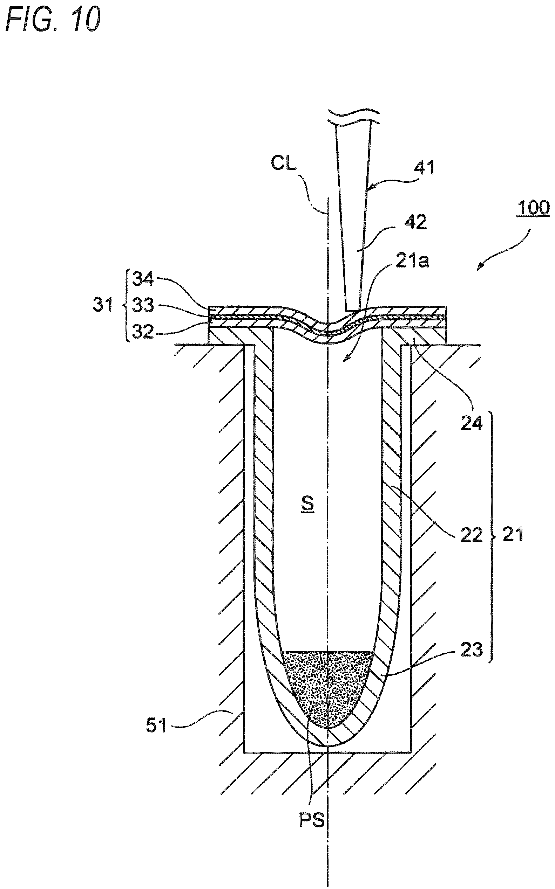

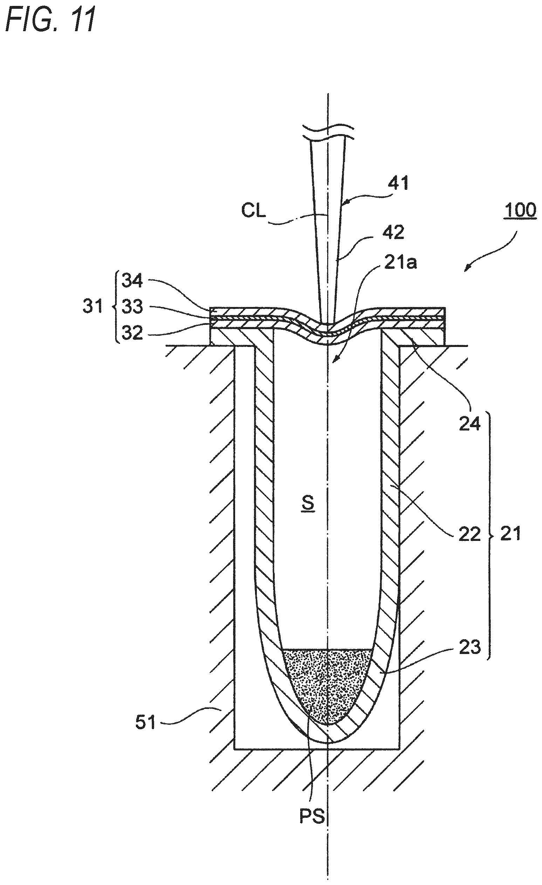

When the pipetter 41 in such a state is moved to the lower side of the drawing so as to bring the tip portion 42 of the pipetter 41 into contact with the seal material 31 of the bottomed container 21, and a pressure is applied thereto, the bottomed container 21 held by a holder 51 in a state where a predetermined allowable play clearance is maintained and/or the pipetter 41 held by a holder (not shown) in a state where a predetermined allowable play clearance is maintained is displaced (moved) within the allowable clearance (see Figs. 10 and 11).

Here, a state where the bottomed container 21 is shifted to the right side of the drawing is shown, however, the tip portion 42 of the pipetter 41 may be shifted to the left side of the drawing within the predetermined allowable clearance, and also both may be shifted simultaneously. In any case, in a state where the maximum pressure is applied immediately before piercing, the tip portion 42 of the pipetter 41 is displaced (moved) so as to come into contact with a position closer to the center line CL of the silica powder storage package 100 than the position before contact occurs (see Fig. 9), here, a substantially central position of the seal material 31 (see Fig. 11).

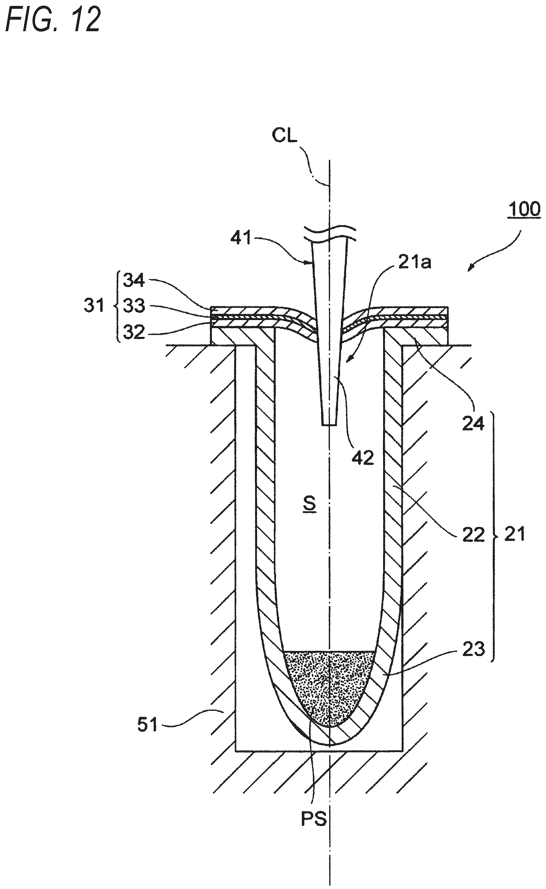

Then, the tip portion 42 of the pipetter 41 pierces the seal material 31 in this state, and a perforation is formed at a position close to the center line CL of the silica powder storage package 100, here, at a substantially central position of the seal material 31 (see Fig. 12).

As described above, according to the silica powder storage package 100 of this embodiment, even if the tip portion 42 of the pipetter 41 is present at a position shifted with respect to the center line CL of the silica powder storage package 100, that is, at an offset position before the seal material 31 is pierced (see Fig. 9), due to the curved seal material 31, a perforation is formed at a position close to the center line CL of the silica powder storage package 100, in other words, at a substantially central position of the seal material 31 (see Fig. 12).

Further, since the seal material 31 is convexly curved toward the inner space S of the bottomed container 21, even if a liquid sample spills down from the pipetter 41 at the time of piercing, the liquid sample is guided to the inner space S of the bottomed container 21 along the curved shape of the seal material 31, and therefore, fouling of the outer wall or the like of the container is less likely to occur (see Fig. 12).

Further, when the tip portion 42 of the pipetter 41 is taken out, the outer circumference of the pipetter 41 is rubbed by the peripheral edge of the perforation of the seal material 31, so that the liquid sample is retained in the inner space S of the bottomed container 21 (see Fig. 12).

Moreover, since the seal material 31 that is convexly curved toward the inner space S of the bottomed container 21 is adopted, an external tool or instrument or the like and the seal material 31 hardly come into contact with each other. Therefore, breakage of the seal material 31 during transportation, storage, use, etc. is significantly reduced. Further, even if the external environment becomes a high temperature or becomes a low-pressure environment during transportation, storage, use, etc., for example, by convexly deforming the curved seal material 31 toward the upper side of the drawing, the change in the volume of the inner space S of the bottomed container 21 is relaxed. Therefore, it is also possible to suppress breakage of the seal material 31 due to a change in the external environment.

Further, by using a silica powder having a predetermined sieve diameter described above as the silica powder, a silica powder storage package 100 in which the silica powder is quantitatively determined with high accuracy in advance in the bottomed container 21 can be realized. By using this as a test kit, the accuracy of test results can be improved.

<<Seventh Embodiment>>

<Silica Powder Storage Package>

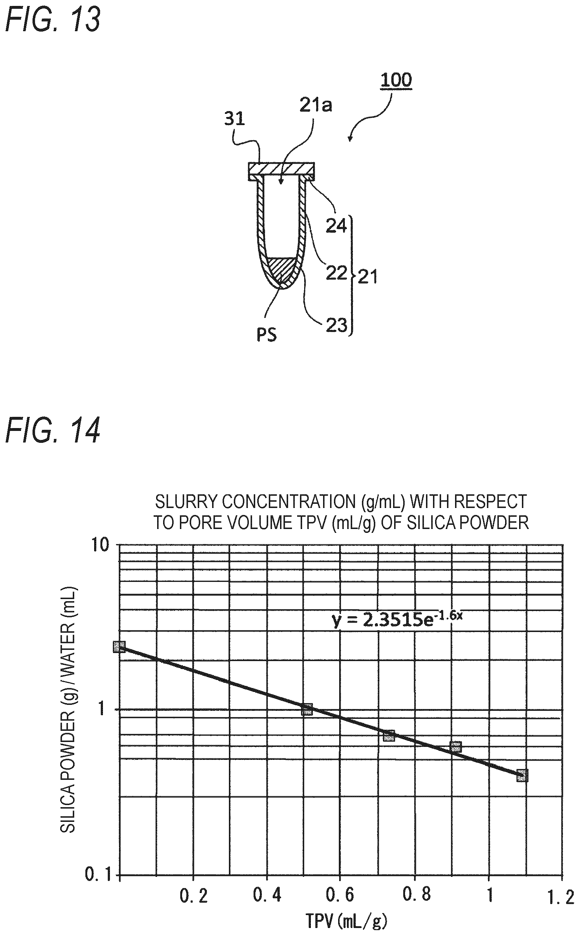

Fig. 13 is a cross-sectional view schematically showing a silica powder storage package 100 of a seventh embodiment. As a bottomed container 21 constituting the silica powder storage package 100, a bottomed container 21 having an opening portion can be used. Note that in this embodiment, the silica powder storage package 100 includes at least the bottomed container 21 and a silica powder PS stored in the bottomed container 21, and is characterized in that a filling amount W (g) of the silica powder PS to a volume V (mL) of the bottomed container 21 is W (g)/V (mL) $\leq$ 0.6 (g/mL). Hereinafter, the respective constituent components will be described in detail.

[Silica Powder]

The silica powder is not particularly limited, however, when porous silica is used as the silica powder, from the viewpoint of selective adsorptivity, adsorptivity, or desorptivity for a biological material or a chemical material, and further handleability or the like at the time of solid-liquid separation, the pore volume TPV (mL/g) per unit mass thereof is preferably 0.4 mL/g or more, more preferably 0.5 mL/g or more, and further more preferably 0.6 mL/g or more. On the other hand, the upper limit thereof is not particularly limited, but from the viewpoint that the production is easy, the adsorption selectivity or the desorption selectivity is easily ensured, and the like, it is preferably 1.2 mL/g or less, and more preferably 1.1 mL/g or less. Incidentally, the pore volume TPV of the porous silica can be determined from the adsorption amount of nitrogen gas at a relative pressure of 0.98 in the adsorption isotherm. With respect to a commercially available product, a catalog value can be adopted.

The size of the silica powder is not particularly limited, and may be appropriately set according to the application or required performance. For example, from the viewpoint of selective adsorptivity or favorable adsorptivity or desorptivity for a biological material or a chemical material, or the like, 80% or more (preferably 90% or more, and more preferably 95% or more) of all particles have a maximum Feret diameter of preferably 20 $\mu$m or more, and more preferably 50 $\mu$m or more, and the upper limit thereof is preferably 1 mm or less, and more preferably 800 $\mu$m or less. When the maximum Feret diameter is equal to or more than the above preferred lower limit, the amount of a fine powder is small, and therefore, dusting can be suppressed, and the handleability tends to be improved. When the maximum Feret diameter is equal to or less than the above preferred upper limit, particles are not excessively large, and the weighing accuracy upon weighing tends to be improved.

Further similarly, the average particle diameter $D_{50}$ of the silica powder is not particularly limited, and may be appropriately set according to the application or required performance. For example, from the viewpoint of selective adsorptivity or favorable adsorptivity or desorptivity for a biological material or a chemical material, or the like, the average particle diameter $D_{50}$ of the silica powder is preferably 50 $\mu$m or more, and more preferably 70 $\mu$m or more, and the upper limit thereof is preferably 700 $\mu$m or less, and more preferably 600 $\mu$m or less. When the average particle diameter is equal to or more than the above preferred lower limit, the amount of a fine powder is small, and therefore, dusting can be suppressed, and the handleability tends to be improved. When the average particle diameter is equal to or less than the above upper limit, particles are not excessively large, and the weighing accuracy upon weighing tends to be improved. Here, the average particle diameter $D_{50}$ is an average particle size of primary particles.

Above all, the silica powder particularly preferably used in this embodiment is a silica powder having a particle size distribution such that when the silica powder is sieved for 1 minute on a sieve with a nominal mesh opening of 250 $\mu$m in accordance with JIS standard sieve list (JIS Z 8801-1982), 99 mass% or more, and preferably 99.5 mass% or more of the powder passes through the sieve, and when the silica powder is sieved for 1 minute on a sieve with a nominal mesh opening of 106 $\mu$m, a mass change on the sieve is 1 mass% or less, and preferably 0.8 mass% or less. According to the finding of the present inventors, it has been found that the presence of fine particles having a sieve diameter of less than 106 $\mu$m not only causes adhesion to the container upon weighing or an adverse effect on the operation environment due to stirring up upon weighing, but also causes an increase in fluctuation upon weighing due to uneven distribution in the silica powder. In addition, the presence of coarse particles having a sieve diameter of more than 250 $\mu$m becomes a factor that causes an increase in fluctuation upon weighing so as to make the weighing accuracy vary significantly. Therefore, by using the silica powder that hardly contains coarse particles having a sieve diameter of more than 250 $\mu$m and fine particles having a sieve diameter of less than 106 $\mu$m in this manner, the accuracy of individual weighing on the order of several hundreds of milligrams or less, and in some cases, on the order of several to several tens of milligrams can be significantly increased without excessively deteriorating the handleability as a powder. According to this, when it is used in a test kit for application requiring such highly accurate individual weighing (for example, medical application or application to a biological material test, or the like), in the case where there is a quantitative test item, the accuracy of test results is improved. Note that in the present description, the treatment using sieves described above shall be performed in accordance with "6.1 Dry sieving test method" in JIS K 0069:1992.

Further, in order to easily obtain the silica powder of this embodiment having the above-mentioned particle size distribution with good reproducibility, a silica powder obtained by a known production method is preferably subjected to a classification treatment. The classification treatment is generally roughly categorized into sieving using a sieve and fluid classification. The latter is further categorized into dry classification and wet classification, and further, the principles thereof are categorized into those utilizing a gravitational field, an inertial force, or a centrifugal force, and the like, but the type is not particularly limited.

The silica powder having such a particle size distribution is configured to enhance the handleability and the quantitative feeding performance, and by using this in small amount filling devices (quantitative feeding devices) of various systems, highly accurate quantitative determination can be achieved without sacrificing the handleability.

Then, according to the handleability and quantitative feeding performance of the silica powder having such a particle size distribution, it is possible to achieve industrial mass production of a silica powder storage package in which a silica powder is quantitatively determined with high accuracy, specifically, a silica powder storage package in which a silica powder is stored in a bottomed container so as to satisfy the following conditions.

a standard deviation $\sigma$: $\sigma < 1.0$

a standard deviation $\sigma$ / an average filling amount f = less than 1.0 (%)

(In the above conditions, the number n of samples is set to 10 or more.)

Note that in the present description, the number n of samples (the number n of individual housing portions to be subjected to extraction) to form a population for calculating a standard deviation $\sigma$ and an average filling amount f for highly accurate quantitative determination is set to 10 or more from the statistical viewpoint. Further, in the extraction of n number of samples, when the number of individual housing portions (bottomed containers) in one test kit (one product) is 10 or more, all individual housing portions (bottomed containers) shall be subjected to extraction. Otherwise, a plurality of products, for which the same weighing and filling methods are adopted, may be collected and combined so as to prepare 10 or more individual housing portions to be subjected to extraction.

The above-mentioned standard deviation σ is preferably 0.8 or less, and more preferably 0.7 or less. Incidentally, the lower limit of the standard deviation σ is not particularly limited and may be 0 or more, but is preferably 0.1 or more in consideration of productivity and economic efficiency. Further, the above-mentioned standard deviation σ / the average filling amount f is preferably 0.8 (%) or less, and more preferably 0.7 (%) or less. Incidentally, the lower limit of σ/f is not particularly limited and may be 0 or more, but is preferably 0.1 or more in consideration of productivity and economic efficiency. When the value of σ or σ/f is less than the above preferred lower limit, a powder having a single particle diameter with an extremely small variation and a highly accurate filling machine are required, and therefore, the cost becomes very high, and a problem that it is impractical can occur. If the value of σ or σ/f is more than the above preferred upper limit, a lot-to-lot difference in the total surface area of the silica powder used for filling is increased, and for example, when a drug is supported on the silica powder, a problem that the fluctuation of the amount of the supported drug is increased can occur.

In the quantitative feeding of the silica powder, various known powders and powder filling can be used, and the types thereof are not particularly limited. Further, it is also possible to link it with a deaerator, a vacuum device, a sterile device, a packing device, a bag feeder, or the like as needed.

[Bottomed Container and Lid Member]

The bottomed container 21 preferably has a cylindrical portion 22 having a hollow cylindrical shape, and a bottom portion 23 having a hollow conical shape located on a bottom side of the cylindrical portion 22. In this embodiment, it is preferred that a flange 24 having an outer brim shape is peripherally provided on a peripheral edge of the opening portion 21a, that is, on an outer circumferential face of an upper end part of the cylindrical portion 22.

The silica powder storage package according to this embodiment preferably includes a lid member. The lid member is for closing the opening portion 21a of the above-mentioned bottomed container 21 so as to tightly close or hermetically seal (hereinafter these are also collectively referred to as "seal") the inner space of the bottomed container 21. In this embodiment, as the lid member, a seal material 31 that has a gas barrier property and can be pierced with a needle, a pipetter, or the like can be used. In that case, by welding a lower face of the seal material 31 to an upper end face of the flange 24 of the bottomed container 21, the bottomed container 21 and the seal material 31 are joined to each other.

As a material constituting the seal material 31, a known material can be used without any particular limitation as long as it can seal the inner space of the bottomed container 21. It may be appropriately selected from various functional films according to desired performance. For example, if a film that can be pierced with a needle, a pipetter, or the like is used, a material to be tested or a drug solution can be injected or the like without performing a removal treatment of the seal material 31. As such an easily pierceable film, films in various forms such as a lamination film in which an aluminum vapor deposition layer is provided on an unstretched or uniaxially or biaxially stretched resin film, and a lamination film in which an easily pierceable layer (a paper, a non-woven fabric, a resin film, or the like) having fine perforations formed therein is provided on an unstretched or uniaxially or biaxially stretched resin film are known.

Further, by using, for example, various known easily peelable films such as an easy peel film, an easy open film, and a peelable film to be used for food packaging purposes or for pharmaceutical packaging purposes, easy peelability can be imparted to the seal material 31. If an easily peelable film is used, it is easy to remove the seal material 31 upon use. As such an easily peelable film, for example, various easily peelable films utilizing a peeling mechanism such as interfacial peeling, cohesive peeling, or interlayer peeling are known, and one appropriately selected from known easily peelable films according to desired performance can be used. In general, a lamination film in which a fusion layer of a polymer blend (polymer alloy) is provided on a base resin film, a lamination film in which a hot-melt type fusion layer is provided on a base resin film, an interfacial peeling-type lamination film having a seal layer or a peeling layer, or the like can be suitably used.

From the viewpoint of airtightness or the like, a film having a gas barrier property is preferably used as the seal material 31. As the film having a gas barrier property, films in various forms are known, and one appropriately selected from known films according to desired performance can be used. As an example, a lamination film in which a gas barrier layer composed of a metal foil or a metal vapor deposition film of aluminum or the like, or a thin film or the like of a metal oxide such as aluminum oxide, a metal nitride, a metal carbide, a metal oxynitride, a metal oxide carbide, an inorganic oxide, or the like is provided on an unstretched or uniaxially or biaxially stretched resin film is suitably used.

From the viewpoint of responding to various needs, a film having easy peelability and a gas barrier property is particularly preferably used as the seal material 31. Specific examples of such a film include a lamination film including at least an unstretched or uniaxially or biaxially stretched base resin film, a gas barrier layer, and a sealant layer. Here, as the base resin film, a polyolefin-based film of polyethylene, polypropylene, or the like, a PET film, or the like is preferably used. In addition, as the gas barrier layer, a metal foil or a vapor deposition film of aluminum or the like, or a vapor deposition film or a sputtering film of silicon oxide or a metal oxide such as aluminum oxide is preferably used. Further, as the sealant layer, a pressure-sensitive or heat-sensitive resin layer containing an easily adhesive resin such as a polymer alloy in which polypropylene, polyethylene, polystyrene, etc. are blended at a predetermined ratio; a polyolefin-based resin such as low-density polyethylene (LDPE) or linear low-density polyethylene (LLDPE); or an ethylene-vinyl acetate copolymer is preferably used. Here, even when such a film having easy peelability and a gas barrier property is used, by using a needle having a sharp tip end, or attaching a cap, an adapter, a tip, or the like having a sharp tip end to a pipetter, generally required pierceability can also be ensured.

Incidentally, the joining form of the seal material 31 may be appropriately selected according to the type of the material to be used, and is not particularly limited. Representative examples include welding such as heat welding, ultrasonic welding, laser welding, vibration welding, and high-frequency welding, however, for example, pressure-sensitive adhesion or pressure bonding such as using an easily peelable sealant agent or the like, or heat pressure bonding can also be adopted.

Further, in this embodiment, an example in which as the lid member, the seal material 31 using a seal material that has a gas barrier property and can be pierced with a needle, a pipetter, or the like is used and combined with the bottomed container 21 of capless type is shown, however, the configuration of the bottomed container 21 is not limited thereto. For example, as the lid member, a cap that closes the opening portion 21a by fitting or screwing to the bottomed container 21 so as to seal the inner space of the bottomed container 21 can be used. Further, in that case, as the bottomed container 21, various known bottomed containers with a cap such as a so-called cap type, a hinged cap type, and a screw cap type can be used. However, for such a bottomed container with a cap, an operation of detaching the cap upon use or the like is needed, and therefore, from the viewpoint of operability or handleability, it is preferred to use the seal material 31 having pierceability in combination with the capless bottomed container 21. When these members are used in such a combination, it is possible to access the inside of the bottomed container 21 by perforating the seal material 31 with a pipetter or the like without detaching the seal material 31.

[Filling Amount]

In this embodiment, by adjusting a filling amount of the silica powder PS with respect to a volume V (mL) of the bottomed container 21, the handleability at the time of solid-liquid separation described above is enhanced. Here, the filling amount W (g) of the silica powder PS with respect to the volume V (mL) of the bottomed container 21 is set as follows: W (g)/V (mL) $\leq$ 0.6 (g/mL).

Therefore, when a liquid material and a silica powder are separated and recovered by injecting a liquid sample such as a biological fluid or a drug solution into the bottomed container 21, allowing the silica powder PS to selectively adsorb at least some components in the liquid sample, and preparing a slurry in which a liquid material and the silica powder PS are subjected to solid-liquid separation, if W (g)/V (mL) is within the above range, an appropriate solid-liquid separation state tends to be easily obtained.

On the other hand, if W (g)/V (mL) is outside the above range, when a relatively small amount of the liquid sample is injected, the silica powder PS remains in its powder state or is transformed to such an extent that a slurry in an almost solid (clay-like) state is obtained, and it is difficult to separate and recover the liquid material and the silica powder. In order to avoid this, an excess amount of the liquid sample may be injected, however, in such a case, a larger amount of the liquid sample is needed, and also it is necessary to use the bottomed container 21 having a relatively large volume V, resulting in low economic efficiency.

W (g)/V (mL) preferably satisfies W (g)/V (mL) $\leq$ 0.4 (g/mL), and more preferably satisfies W (g)/V (mL) $\leq$ 0.3 (g/mL). Incidentally, the lower limit of W (g)/V (mL) is not particularly limited, however, in the case where there is a quantitative test item, it is preferred that the filling amount W is larger, and from such a viewpoint, W (g)/V (mL) preferably satisfies 0.01 (g/mL) $\leq$ W (g)/V (mL), and more preferably satisfies 0.05 (g/mL) $\leq$ W (g)/V (mL).

When the above-mentioned slurry subjected to solid-liquid separation is prepared, the slurry concentration (a mass of the silica powder (g) / a volume of the liquid sample (mL)) is not particularly limited, however, from the viewpoint that an appropriate solid-liquid separation state is obtained when the liquid material and the silica powder are separated and recovered, and also the used amount of the liquid sample is not increased so as to avoid the increase in the size of the bottomed container 21 as described above, the slurry concentration is preferably 0.3 to 2.4 (g/mL). Here, when a porous silica powder is used as the silica powder PS, the slurry concentration is more preferably 0.3 to 1.0 (g/mL). On the other hand, when a non-porous silica powder such as a quartz powder is used as the silica powder PS, the slurry concentration is more preferably 2.0 to 2.4 (g/mL). Incidentally, the slurry concentration can be adjusted by the filling amount W of the silica powder PS and the amount of the liquid sample to be injected.

Here, it has been found that in the case where a porous silica powder is used as the silica powder PS, when the above-mentioned slurry subjected to solid-liquid separation is prepared, the slurry concentration (g/mL) has a certain correlation with the pore volume TPV (mL/g) thereof. Fig. 14 shows a graph indicating the slurry concentration (g/mL) with respect to the pore volume TPV (mL/g). That is, from the viewpoint that an appropriate solid-liquid separation state is obtain, when the horizontal axis X represents the pore volume TPV and the vertical axis Y represents the slurry concentration, the slurry concentration of the above-mentioned slurry subjected to solid-liquid separation is preferably within a range of Y = 2.3515e$^{-1.6x}$ or less. That is, it is preferred that the relationship between the pore volume X of the porous silica powder and the slurry concentration Y satisfies the following relationship: Y $\leq$ 2.3515e$^{-1.6x}$.

<<Eighth Embodiment>>

<Silica Powder Storage Package>

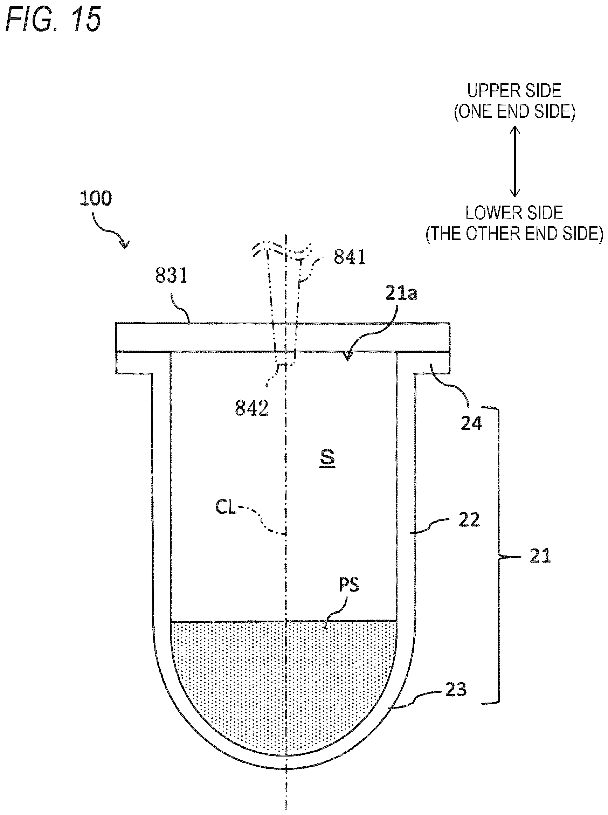

Fig. 15 is a longitudinal cross-sectional view (a view obtained by cutting a bottomed container 21 into halves along a center line CL thereof) schematically showing a silica powder storage package 100 of an eighth embodiment. Note that in Fig. 15, hatching indicating a cross section is omitted so as to prevent the drawing from becoming complicated.
In the silica powder storage package 100, a bottomed container having an opening portion can be used. In this embodiment, the silica powder storage package 100 includes at least a bottomed container 21 having an opening portion 21a at one end side and a closing portion at the other end side, a silica powder PS stored in the bottomed container 21, and a seal portion 831, which is provided in the opening portion 21a so as to tightly close or hermetically seal an inner space S of the bottomed container 21, and is pierced with a tip of a pipette for filling a liquid sample in the inner space S
The seal portion 831 tightly closes or hermetically seals the inner space S of the bottomed container 21, and is also configured to be pierceable with a tip face 842 of a pipette tip 841 attached to a tip of a pipette body (not shown) for injecting the liquid sample as indicated by the long dashed double-dotted line.
The tip face 842 corresponds to an "opening end face" of this embodiment, and hereinafter also referred to as "pipette tip face" or "opening end face". Incidentally, in the case where the pipette tip 841 is not attached, the tip face of the pipette body corresponds to the "opening end face" of this embodiment.
Hereinafter, the respective constituent components of the silica powder storage package 100 and the pipette tip 841 will be described in detail.

[Silica Powder]

The silica powder is not particularly limited, however, when porous silica is used as the silica powder, from the viewpoint of selective adsorptivity, adsorptivity, or desorptivity for a biological material or a chemical material, the pore volume TPV (mL/g) per unit mass thereof is preferably 0.4 mL/g or more, more preferably 0.5 mL/g or more, and further more preferably 0.6 mL/g or more. On the other hand, the upper limit thereof is not particularly limited, but from the viewpoint that the production is easy, the adsorption selectivity or the desorption selectivity is easily ensured, and the like, it is preferably 1.2 mL/g or less, and more preferably 1.1 mL/g or less. Incidentally, the pore volume TPV of the porous silica can be determined from the adsorption amount of nitrogen gas at a relative pressure of 0.98 in the adsorption isotherm. With respect to a commercially available product, a catalog value can be adopted.
The size of the silica powder is not particularly limited, and may be appropriately set according to the application or required performance. For example, from the viewpoint of selective adsorptivity or favorable adsorptivity or desorptivity for a biological material or a chemical material, or the like, 80% or more (preferably 90% or more, and more preferably 95% or more) of all particles have a maximum Feret diameter of preferably 20 μm or more, and more preferably 50 μm or more, and the upper limit thereof is preferably 1 mm or less, and more preferably 800 μm or less. When the maximum Feret diameter is equal to or more than the above preferred lower limit, the amount of a fine powder is small, and therefore, dusting can be suppressed, and the handleability tends to be improved. When the maximum Feret diameter is equal to or less than the above preferred upper limit, particles are not excessively large, and the weighing accuracy upon weighing tends to be improved.
Further similarly, the average particle diameter $D_{50}$ of the silica powder is not particularly limited, and may be appropriately set according to the application or required performance. For example, from the viewpoint of selective adsorptivity or favorable adsorptivity or desorptivity for a biological material or a chemical material, or the like, the average particle diameter $D_{50}$ of the silica powder is preferably 50 μm or more, and more preferably 70 μm or more, and the upper limit thereof is preferably 700 μm or less, and more preferably 600 μm or less. When the average particle diameter is equal to or more than the above preferred lower limit, the amount of a fine powder is small, and therefore, dusting can be suppressed, and the handleability tends to be improved. When the average particle diameter is equal to or less than the above upper limit, particles are not excessively large, and the weighing accuracy upon weighing tends to be improved. Here, the average particle diameter $D_{50}$ is an average particle size of primary particles.
Further, in order to easily obtain the silica powder of this embodiment having the above-mentioned particle size distribution with good reproducibility, a silica powder obtained by a known production method is preferably subjected to a classification treatment. The classification treatment is generally roughly categorized into sieving using a sieve and fluid classification. The latter is further categorized into dry classification and wet classification, and further, the principles thereof are categorized into those utilizing a gravitational field, an inertial force, or a centrifugal force, and the like, but the type is not particularly limited.

[Bottomed Container]

The shape of the bottomed container 21 of this embodiment will be described in detail with reference again to Fig. 15.

The bottomed container 21 used in this embodiment is opened at one end side (the upper side in Fig. 15) and is closed at the other end side (the lower side in Fig. 15) as described above. In the opening portion 21a of the bottomed container 21, the seal portion 831 is provided. The seal portion 831 will be described in detail later.

The bottomed container 21 is a rotator with the center line CL as the center of rotation, and has a longitudinal cross section shown in Fig. 15. The bottomed container 21 has a round bottom shape, and specifically, preferably has a cylindrical portion 22 with a hollow cylindrical shape, and a bottom portion 23 that is provided continuously on the other end side of the cylindrical portion 22 and closes the cylindrical portion 22. In this embodiment, it is preferred that a flange 24 having an outer brim shape is peripherally provided on a peripheral edge of the opening portion 21a, that is, on an outer circumferential face of an upper end part of the cylindrical portion 22. Incidentally, the shape of the bottomed container 21 is not limited to the shape shown in Fig. 15.

[Seal Portion and Pipette]

The seal portion 831 is for closing the opening portion 21a of the above-mentioned bottomed container 21 so as to seal the inner space S of the bottomed container 21. In this embodiment, as the seal portion 831, a lamination film that has a gas barrier property and can be pierced with the pipette tip face 842 is used. By welding a lower face of the seal portion 831 to an upper end face of the flange 24 of the bottomed container 21, the bottomed container 21 and the seal portion 831 are joined to each other.

The seal portion 831 is configured to be pierceable with the pipette tip face 842 having the below-mentioned area.

By using the seal portion 831 having pierceability and combining this with the bottomed container 21, it is possible to easily access the inside of the bottomed container 21 by piercing the seal portion 831 with the pipette tip face 842 without detaching the seal portion 831.

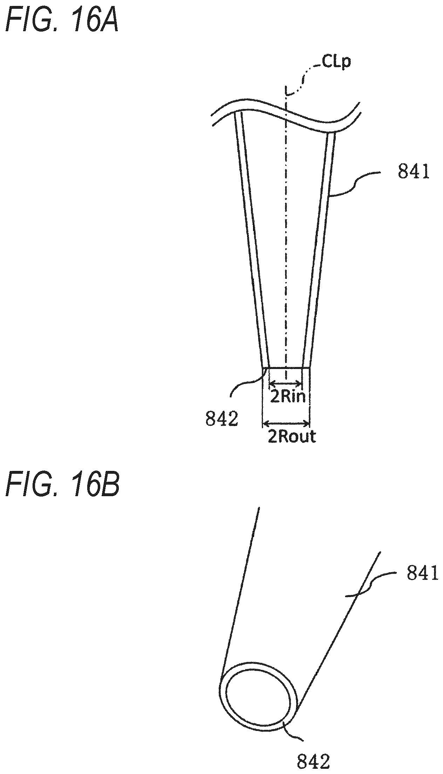

Here, a configuration of the pipette tip 841 that pierces the seal portion 831 will be described with reference to Fig. 16.

Fig. 16 is a schematic view showing a configuration at a tip side of the pipette tip 841, and Fig. 16(a) is a longitudinal cross-sectional view thereof (a view obtained by cutting the pipette tip 841 into halves along a center line CLp), and Fig. 16(b) is a perspective view viewed from an obliquely lower side thereof. Note that in Fig. 16(a), hatching indicating a cross section is omitted so as to prevent the drawing from becoming complicated.

The pipette tip 841 is a rotator with the center line CLp as the center of rotation, and has a longitudinal cross section having a tapered shape as shown in Fig. 16(a) at a tip side. The pipette tip face 842 is an end face (opening end face) surrounding a circular opening for sucking or ejecting (injecting) the liquid sample as shown in Fig. 16(b). Then, the pipette tip face 842 is a planar face orthogonal to a longitudinal direction (an extending direction of the center line CLp) (in other words, a planar face facing the longitudinal direction).

Here, an area A of the opening end face of the pipette tip face 842 is 0.1 $mm^2$ to 10 $mm^2$, preferably 0.3 $mm^2$ to 5 $mm^2$, and more preferably 0.4 $mm^2$ to 3 $mm^2$.

When the pipette tip face 842 is pressed against the seal portion 831 (when a pressing force is applied to the seal portion 831) for piercing the seal portion 831 (see Fig. 15), if the area A of the opening end face of the pipette tip face 842 is excessively small, an excessively large pressure acts counter to the pipette tip face 842 from the seal portion 831, and therefore, the pipette tip 841 may be deformed. Further, if the area A of the opening end face of the pipette tip face 842 is excessively large, a pressure that acts on the seal portion 831 from the pipette tip face 842 becomes small, and therefore, it becomes difficult to pierce the seal portion 831 with the pipette tip face 842.

Incidentally, the area A of the opening end face of the pipette tip face 842 can be determined according to the following formula (1) using an outer radius Rout and an inner radius Rin of the pipette tip face 842.

$$A = \pi \times (Rout^2 - Rin^2) \qquad (1)$$

As a material constituting the seal portion 831, a known material can be used without any particular limitation as long as it is a lamination film that can seal the inner space S of the bottomed container 21 and can be pierced with the pipette tip face 842. It may be appropriately selected from various functional films according to desired performance.

If a lamination film that can be pierced with the pipette tip face 842 is used, a material to be tested or a drug solution can be injected or the like without performing a removal treatment of the seal portion 831.

As such an easily pierceable lamination film, lamination films in various forms such as a lamination film in which an aluminum vapor deposition layer is provided on an unstretched or uniaxially or biaxially stretched resin film, and a lamination film in which an easily pierceable layer (a paper, a non-woven fabric, a resin film, or the like) having fine piercing formed therein is provided on an unstretched or uniaxially or biaxially stretched resin film are known.

More specifically, it is preferred that the seal portion 831 can be pierced with the opening end face of the pipette when it is pressed by the opening end face with a force of 70 N or less, it is more preferred that it can be pierced with the opening end face when it is pressed with a force of 60 N or less, and it is particularly preferred that it can be pierced with the opening end face when it is pressed with a force of 55 N or less.

From the viewpoint of airtightness or the like, a lamination film having a gas barrier property is preferably used as the seal portion 831. As the lamination film having a gas barrier property, films in various forms are known, and one appropriately selected from known films according to desired performance can be used. As an example, a lamination film in which a gas barrier layer composed of a metal foil or a metal vapor deposition film of aluminum or the like, or a thin film or the like of a metal oxide such as aluminum oxide, a metal nitride, a metal carbide, a metal oxynitride, a metal oxide carbide, an inorganic oxide, or the like is provided on an unstretched or uniaxially or biaxially stretched resin film is suitably used.

From the viewpoint of responding to various needs, on the premise that it can be pierced with the pipette tip face 842, as the seal portion 831, a lamination film having easy peelability and a gas barrier property is particularly preferably used. Specific examples of such a lamination film include a lamination film including at least an unstretched or uniaxially or biaxially stretched base resin film, a gas barrier layer, and a sealant layer. Here, as the base resin film, a polyolefin-based film of polyethylene, polypropylene, or the like, a PET (polyethylene terephthalate) film, or the like is preferably used. In addition, as the gas barrier layer, a metal foil or a vapor deposition film of aluminum or the like, or a vapor deposition film or a sputtering film of a metal oxide such as aluminum oxide is preferably used. Further, as the sealant layer, a pressure-sensitive or heat-sensitive resin layer containing an easily adhesive resin such as a polymer alloy in which polypropylene, polyethylene, polystyrene, etc. are blended at a predetermined ratio; a polyolefin-based resin such as low-density polyethylene (LDPE) or linear low-density polyethylene (LLDPE); or an ethylene-vinyl acetate copolymer is preferably used.

There is no particular restriction on the Young's modulus at 25°C of the seal portion 831, however, in order to prevent damage to the seal portion 831 and/or tearing of the seal portion 831 due to a sharp portion other than the pipette tip portion, it is preferably 1000 MPa or more, and more preferably 2000 MPa or more. As a material of such a seal portion 831, among the above-mentioned materials, a multilayer sheet having a structure in which an aluminum sheet is sandwiched by a polyethylene terephthalate resin or a polyethylene resin is exemplified. Note that the Young's modulus can be measured in accordance with JIS K 7127:1999.

Incidentally, the joining form of the seal material 831 may be appropriately selected according to the type of the material to be used, and is not particularly limited. Representative examples include welding such as heat welding, ultrasonic welding, laser welding, vibration welding, and high-frequency welding, however, for example, pressure-sensitive adhesion or pressure bonding such as using an easily peelable sealant agent or the like, or heat pressure bonding can also be adopted.

[Filling Amount]

In this embodiment, by adjusting a filling amount of the silica powder PS with respect to a volume V (mL) of the bottomed container 21, the handleability at the time of solid-liquid separation is enhanced. Here, the filling amount W (g) of the silica powder PS with respect to the volume V (mL) of the bottomed container 21 preferably satisfies W (g)/V (mL) $\leq$ 0.6 (g/mL).

Therefore, when a liquid material and a silica powder are separated and recovered by injecting a liquid sample such as a biological fluid or a drug solution into the bottomed container 21, allowing the silica powder PS to selectively adsorb at least some components in the liquid sample, and preparing a slurry in which a liquid material and the silica powder PS are subjected to solid-liquid separation, if W (g)/V (mL) is within the above range, an appropriate solid-liquid separation state tends to be easily obtained.

On the other hand, if W (g)/V (mL) is outside the above range, when a relatively small amount of the liquid sample is injected, the silica powder PS remains in a powder state or is transformed to such an extent that a slurry in an almost solid (clay-like) state is obtained, and it is difficult to separate and recover a liquid material and the silica powder. In order to avoid this, an excess amount of the liquid sample may be injected, however, in such a case, a larger amount of the liquid sample is needed, and also it is necessary to use the bottomed container 21 having a relatively large volume V, resulting in low economic efficiency.

W (g)/V (mL) more preferably satisfies W (g)/V (mL) $\leq$ 0.4 (g/mL), and particularly preferably satisfies W (g)/V (mL) ≤ 0.3 (g/mL). Incidentally, the lower limit of W (g)/V (mL) is not particularly limited, however, in the case where there is a quantitative test item, it is preferred that the filling amount W is larger, and from such a viewpoint, W (g)/V (mL) preferably satisfies 0.01 (g/mL) ≤ W (g)/V (mL), and more preferably satisfies 0.05 (g/mL) ≤ W (g)/V (mL).

When the above-mentioned slurry subjected to solid-liquid separation is prepared, the slurry concentration (a mass of the silica powder (g) / a volume of the liquid sample (mL)) is not particularly limited, however, from the viewpoint that an appropriate solid-liquid separation state is obtained when the liquid material and the silica powder are separated and recovered, and also the used amount of the liquid sample is not increased so as to avoid the increase in the size of the bottomed container 21 as described above, the slurry concentration is preferably 0.3 to 2.4 (g/mL). Here, when a porous silica powder is used as the silica powder PS, the slurry concentration is more preferably 0.3 to 1.0 (g/mL). On the other hand, when a non-porous silica powder such as a quartz powder is used as the silica powder PS, the slurry concentration is more preferably 2.0 to 2.4 (g/mL). Incidentally, the slurry concentration can be adjusted by the filling amount W of the silica powder PS and the amount of the liquid sample to be injected.

<<Ninth Embodiment>>

[Silica Powder Storage Package]

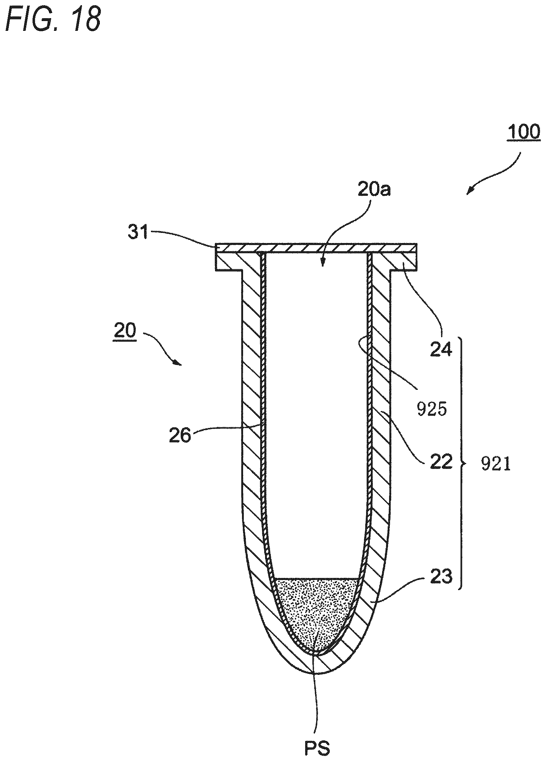

Fig. 18 is a cross-sectional view schematically showing a silica powder storage package 100 of a ninth embodiment. The silica powder storage package 100 includes at least an antistatic container 20 having an opening portion 20a and a silica powder PS stored in the antistatic container 20. Hereinafter, the respective constituent components will be described in detail.

<Antistatic Container and Lid Member>

The antistatic container 20 is a container containing an antistatic agent in at least a portion. Further, as the antistatic container 20, a bottomed container having an opening portion 20a can be used. The antistatic container 20 used in this embodiment is preferably composed of a microtube of capless type (capless bottomed container) made of a synthetic resin and having a bottomed substantially cylindrical shape with an upper part opened. Then, in the opening portion 20a of the antistatic container 20, a seal material 31 as a lid member is preferably provided.

By incorporating an antistatic agent in the antistatic container 20, antistatic performance is imparted to the antistatic container 20. According to this, even if friction occurs between the silica powder PS and the container due to vibration or the like during transportation or use, it is difficult to accumulate static electricity, and thus, adhesion of the silica powder PS stored inside the antistatic container 20 to the wall face can be suppressed.

In this embodiment, as the antistatic container 20, an antistatic container including at least a container body 921 and an antistatic layer 26 that contains an antistatic agent and is provided at least a portion of an inner wall 925 of the container body 921 can be used.

(Container Body)

The container body 921 preferably has a cylindrical portion 22 having a hollow cylindrical shape, and a bottom portion 23 having a hollow conical shape located on a bottom side of the cylindrical portion 22. In this embodiment, it is preferred that a flange 24 having an outer brim shape is peripherally provided on a peripheral edge of the opening portion 20a, that is, on an outer circumferential face of an upper end part of the cylindrical portion 22. As the container body 921 used here, a known container other than the above-mentioned microtube, for example, an Eppendorf tube, a microcentrifuge tube, a microtest tube, or the like can be used as long as it is a container having a bottomed substantially cylindrical shape with an upper part opened.

In this embodiment, as the container body 921, an example of the container having a bottomed substantially cylindrical shape with an upper part opened is shown, however, the shape of the container is not limited thereto. For example, a container that has an opening portion and also has a space portion communicating with the opening portion, and has, for example, a bottle shape, a flask shape, a tray shape, or the like can be used.

The size of the container body 921 is not particularly limited, however, in the case of a container having a substantially cylindrical shape, the diameter is generally 0.3 to 10 cm, preferably 0.5 to 5 cm, and more preferably 1 to 3 cm, and the height is generally 1 to 30 cm, preferably 2 to 10 cm, and more preferably 3 to 5 cm. The thickness of a wall face of the container body 921 is not particularly limited, and is generally 0.1 mm to 5 mm, preferably 0.5 mm to 3 mm, and more preferably 1 mm to 2 mm.

The container body 921 is preferably a substantially transparent to semi-transparent container from the viewpoint that visual confirmation of the content is facilitated.

As a material constituting the container body 921, preferably a substantially transparent to semi-transparent resin is used, and more specifically, a polyolefin-based resin such as polyethylene or polypropylene or a polyester resin such as PET is preferably used. Among these, a polyolefin-based resin is preferred, and polypropylene is more preferred.

(Antistatic Layer)

The antistatic layer 26 is a layer provided for suppressing adhesion of the silica powder PS to the inner wall 925 due to static electricity generated in the container body 921.

As shown in Fig. 18, the antistatic container 20 of this embodiment includes the antistatic layer 26 on the entire inner wall 925 of the container body 921. Incidentally, the inner wall 925 refers to a portion of a face on an inner circumferential side among the faces of the cylindrical portion 22 and the bottom portion 23. By including the antistatic layer 26 on the entire inner wall 925, adhesion of the silica powder PS is effectively suppressed throughout the entire inner wall 925.

Incidentally, by providing the antistatic layer 26 in at least a portion, antistatic performance is imparted, and therefore, the antistatic layer 26 may be provided in at least a portion of the inner wall 925. Such a case is preferred as compared with the case where the antistatic layer 26 is provided on the entire inner wall 925 from the viewpoint of reduction in the production cost and simplification of the production step.

As for a place where the antistatic layer 26 is provided, the antistatic layer 26 may be provided in the entire part or a part of the cylindrical portion 22 in the inner wall 925, or may be provided in the entire part or a part of the bottom portion 23, or may be provided in a place combining these places.

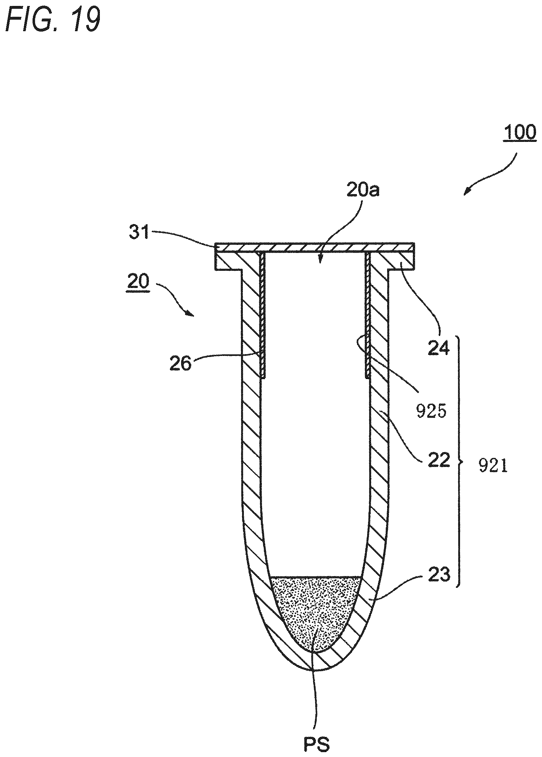

For example, as shown in Fig. 19, the antistatic layer 26 may be provided in an upper part of the cylindrical portion 22 at the opening portion 20a side of the inner wall 925 (first modification).

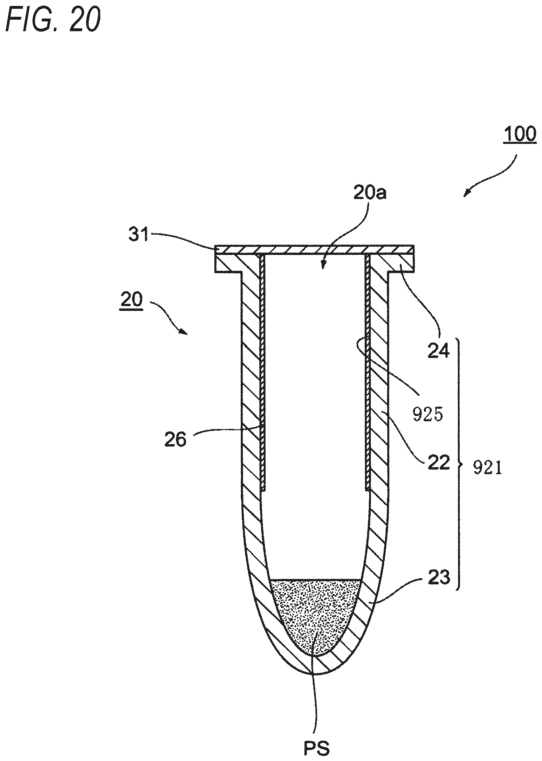

Further, as shown in Fig. 20, the antistatic layer 26 may be provided in a place from an upper part of the cylindrical portion 22 at the opening portion 20a side to a lower part of the cylindrical portion 22 of the inner wall 925 (second modification).

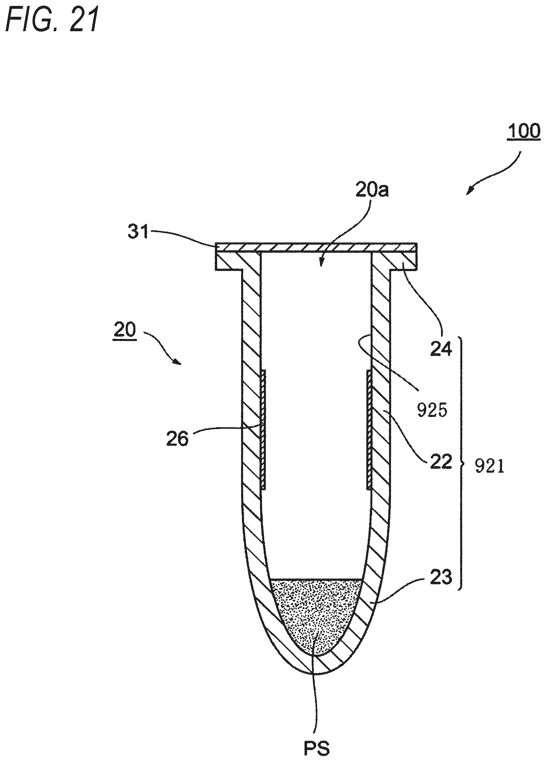

Further, as shown in Fig. 21, the antistatic layer 26 may be provided in a place from a middle part to a lower part of the cylindrical portion 22 of the inner wall 925 (third modification).

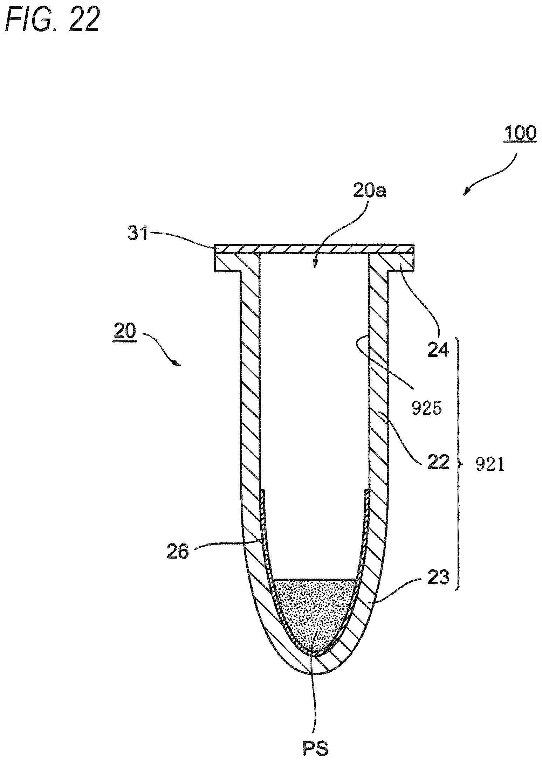

Further, as shown in Fig. 22, the antistatic layer 26 may be provided in the bottom portion 23 of the inner wall 925 (fourth modification).

Further, the antistatic layer 26 may be provided in a dot shape, or may be provided in a line shape, or may be provided in a plane shape occupying a predetermined region.

When the antistatic layer 26 is provided in a dot shape, a plurality of antistatic layers 26 may be provided in a random positional relationship or may be provided in a regular positional relationship.

Further, when the antistatic layer 26 is provided in a line shape, the shape may be a straight line shape, a curved line shape, a wavy line shape, a zigzag shape, a belt-like shape, an amorphous line shape, or the like, and moreover, a plurality of these lines may be provided in a striped pattern, a radial pattern, a lattice pattern, or the like.

Incidentally, when the antistatic layer 26 is provided in a line shape, it may be provided in the height direction of the cylindrical portion 22 and the bottom portion 23, or may be provided in the circumferential direction of the cylindrical portion 22 and the bottom portion 23, or may be provided in a direction inclined with respect to the height and circumferential directions of the cylindrical portion 22 and the bottom portion 23.

Further, the antistatic layer 26 may be provided over one round in the circumferential direction of the cylindrical portion 22 and the bottom portion 23 so as to form a ring. In addition, the antistatic layer 26 may be provided in a spiral shape by being provided in a direction inclined with respect to the height and circumferential directions of the cylindrical portion 22 and the bottom portion 23 and also being provided continuously over one or more rounds in the circumferential direction of the inner wall 925.

Note that, in general, the silica powder PS is stored in the antistatic container 20, which is provided for use in an upright state. In such a state, the silica powder PS is stored in a state where it is accumulated in the height direction from the bottom portion 23.

On the other hand, for example, when the silica powder storage package is subjected to vibration, inclination, or the like during transportation or use thereof, the silica powder PS may sometimes adhere to a position higher than the height of a portion where the silica powder PS is accumulated in the upright state in the inner wall 925. Then, it becomes difficult for the silica powder PS adhering at such a high position to come into contact with the liquid sample injected into the antistatic container 20, resulting in occurrence of loss due to the adhesion of the silica powder PS.

In such a case, in order to bring the silica powder PS and the liquid sample into contact with each other, it is necessary to increase the amount of the liquid sample or stir the contents after the liquid sample is injected. Above all, when the silica powder PS adheres in the vicinity of the opening portion 20a on the inner wall 925, the above-mentioned loss is likely to occur, and moreover, scattering of the silica powder PS may be caused when it is unsealed.

Therefore, from the viewpoint of suppressing such adhesion of the silica powder PS, it is preferred that the antistatic layer 26 is provided at least on the opening portion 20a side on the inner wall 925 of the antistatic container 20.

From such a viewpoint, the example described with reference to Fig. 22 is preferred because adhesion of the silica powder PS accumulated in the bottom portion 23 can be suppressed.

Further, the example described with reference to Fig. 21 is more preferred because adhesion of the silica powder PS to the wall face in the vicinity of the upper part than the bottom portion 23 can be suppressed.

Further, the examples described with reference to Figs. 19 and 20 are further more preferred because loss caused by adhesion of the silica powder PS in the vicinity of the opening portion 20a on the inner wall 925 can be suppressed.

(Antistatic Agent)

The antistatic agent is used for suppressing adhesion of the silica powder PS by being incorporated in the antistatic layer 26 so as to release static electricity generated in the container body 921.

The antistatic agent used in the antistatic layer 26 is not particularly limited as long as it can impart electrical conductivity to a material incorporating the antistatic agent, however, examples thereof include a polymer-type antistatic agent, an alkali metal salt, an alkaline earth metal salt, an ionic liquid, a surfactant, and an electrically conductive inorganic filler. Among these antistatic agents, any one type may be used alone or two or more types may be mixed and used. Among these agents, from the viewpoint that transparency is excellent and bleed-out is less likely to occur, a polymer-type antistatic agent is preferred.

As the polymer-type antistatic agent, a nonionic type, a cationic type, an anionic type, an amphoteric type, an electron conductive polymer, or the like is used. As the nonionic type, for example, a polyether copolymer having an alkylene oxide structure is exemplified. As the cationic type, for example, a quaternary ammonium salt-type copolymer having an ammonium salt structure in its molecular structure is exemplified. As the anionic type, for example, a sulfonate salt-containing copolymer having an alkali metal sulfonate salt structure and an olefin-based ionomer resin having an alkali metal salt structure of a copolymer of an unsaturated carboxylic acid and $\alpha$-olefin is exemplified. As the amphoteric type, one containing both a cationic type structure and an anionic type structure in the same molecule, for example, a betaine type is exemplified.

Examples of the polyether copolymer include polyethylene oxide, polyether ester, polyether ester amide, polyether amide imide, a polyethylene oxide-epihalohydrin copolymer, a methoxy polyethylene glycol (meth)acrylate copolymer, and polyoxyethylene alkyl amide ether.

Examples of the polyoxyethylene alkyl amide ether include polyoxyethylene oleylamide ether.

Examples of the quaternary ammonium salt-type copolymer include a quaternary ammonium base-containing (meth)acrylate copolymer, a quaternary ammonium base-containing maleimide copolymer, and a quaternary ammonium base-containing methacrylic copolymer.

Examples of the sulfonate salt-containing copolymer include a polyethylene sulfonate salt and a polystyrene sulfonate salt.

Examples of the olefin-based ionomer resin include a resin in which a carboxy group of a copolymer of acrylic acid or methacrylic acid and ethylene is substituted with an alkali metal such as lithium, sodium, or potassium.

Examples of the electron conductive polymer include polythiophene, polypyrrole, polyaniline, and polyacetylene.

Further, as the antistatic agent, an ion conductive antistatic agent obtained by adding an alkali metal salt to the above-mentioned polyether copolymer is also preferably used. At that time, as the alkali metal salt, an alkali metal salt composed of a cation of an alkali metal such as $Li^+$, $Na^+$, or $K^+$, and an anion such as $Cl^-$, $Br^-$, $I^-$, $SO_4^{2-}$, $NO_3^-$, $BF_4^-$, $PF_6^-$, $SCN^-$, $ClO_4^-$, $CF_3SO_3^-$, $(CF_3SO_2)_2N^-$, or $(CF_3SO_2)_3C^-$ is preferred.

The ion conductive antistatic agent preferably contains such an alkali metal salt in an amount of 1 to 30% with respect to the total amount of the ion conductive antistatic agent.

Further, as the antistatic agent, an ion conductive antistatic agent obtained by adding an ammonium salt to the above-mentioned sulfonate salt-containing copolymer is used.

Among these antistatic agents, a polyether copolymer is preferred, polyoxyethylene alkyl amide ether is more preferred, and polyoxyethylene oleylamide ether is further more preferred. Still further, the ion conductive antistatic agent obtained by adding an alkali metal salt to such a polyether copolymer is particularly preferred.

(Binder Resin)

The antistatic layer 26 may further contain a binder resin in addition to the antistatic agent. The binder resin in the antistatic layer 26 is used for improving the coating property of the antistatic layer 26.

The binder resin used in the antistatic layer 26 is not particularly limited, however, examples thereof include an acrylic resin, a polyvinyl-based resin, a urethane-based resin, a polyester-based resin, a polyamide-based resin, a polyimide-based resin, a melamine-based resin, an epoxy-based resin, a polystyrene-based resin, a polyvinyl alcohol-based resin, and a vinyl acetate-based resin. Among these binder resins, any one type may be used alone or two or more types may be mixed and used. Among these agents, from the viewpoint of suppressing generation of static electricity with the silica powder PS, an acrylic resin is preferred.

As the acrylic resin, a polymer constituted by using an acrylic monomer containing an acryloyl group or a methacryloyl group as an essential monomer component, that is, a polymer (a homopolymer or a copolymer) having at least a constituent unit derived from an acrylic monomer is exemplified.

Examples of the acrylic monomer include alkyl (meth)acrylate esters having a linear or branched alkyl group such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, nonyl (meth)acrylate, isononyl (meth)acrylate, decyl (meth)acrylate, and dodecyl (meth)acrylate; (meth)acrylate esters containing a carboxyl group such as carboxyethyl acrylate; (meth)acrylate esters containing a hydroxyl group such as 2-hydroxymethyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, diethylene glycol mono(meth)acrylate, and dipropylene glycol mono(meth)acrylate; cycloalkyl (meth)acrylate esters such as cyclopentyl (meth)acrylate and cyclohexyl (meth)acrylate; aromatic hydrocarbon group-containing (meth)acrylate esters such as phenyl (meth)acrylate and phenoxyethyl (meth)acrylate; (meth)acrylamide derivatives such as N-methylol (meth)acrylamide, N-butoxymethyl (meth)acrylamide, N,N-dimethyl (meth)acrylamide, and N,N-diethyl (meth)acrylamide; and dialkylaminoalkyl (meth)acrylate esters such as dimethylaminoethyl (meth)acrylate, diethylaminoethyl (meth)acrylate, dipropylaminoethyl (meth)acrylate, dimethylaminopropyl (meth)acrylate, and dipropylaminopropyl (meth)acrylate.

Among these acrylic monomers, any one type may be used alone or two or more types may be mixed and used.

Note that in the present description, the "(meth)acrylate" means methacrylate and/or acrylate. Further, the "(meth)acrylic" means methacrylic and/or acrylic.

The acrylic resin may be copolymerized with another monomer component in addition to the acrylic monomer component. The another monomer component is not particularly limited, however, examples thereof include carboxyl group-containing polymerizable unsaturated compounds such as crotonic acid, itaconic acid, fumaric acid, and maleic acid or anhydrides thereof; unsaturated amides such as (meth)acrylamide and N-methylol (meth)acrylamide; styrenic compounds such as styrene, vinyl toluene, and $\alpha$-methylstyrene; vinyl esters such as vinyl acetate and vinyl propionate; vinyl halides such as vinyl chloride; vinyl ethers such as methyl vinyl ether; cyano group-containing vinyl compounds such as (meth)acrylonitrile; and $\alpha$-olefins such as ethylene and propylene.

The antistatic layer 26 may contain another component as needed other than the antistatic agent and the binder resin. Examples of the another component include resins other than those described above, an electrically conductive material, a polymerization initiator, a polymerization accelerator, a pH adjusting agent, a dispersion stabilizer, a plasticizer, a heat stabilizer, an antioxidant, a UV absorber, a thickener, a coloring preventing agent, a coloring agent, an antifoaming agent, a leveling agent, and a flame retardant.

The antistatic layer 26 can be formed by applying a coating solution containing an antistatic agent, a binder resin, and another additive as needed to the inner wall 925 of the container body 921, followed by performing drying, a heat treatment, a UV irradiation treatment, or the like as needed. At that time, a solvent may be added to the coating solution.

The solvent used in the coating solution is not particularly limited, however, examples thereof include water; alcohols such as methanol, ethanol, isopropanol, butanol, and benzyl alcohol; ketones such as acetone, methyl ethyl ketone, methyl isobutyl ketone, and cyclohexanone; esters such as methyl acetate, ethyl acetate, propyl acetate, butyl acetate, methyl formate, ethyl formate, propyl formate, butyl formate, and $\gamma$-butyrolactone; aliphatic hydrocarbons such as hexane and cyclohexane; halogenated hydrocarbons such as methylene chloride, chloroform, and carbon tetrachloride; aromatic hydrocarbons such as benzene, toluene, and xylene; amides such as N,N-dimethylformamide, N,N-dimethylacetamide, and N-methylpyrrolidone; ethers such as diethyl ether, dioxane, and tetrahydrofuran; and ether alcohols such as 1-methoxy-2-propanol.

Among these, water is preferred. The use of water as the solvent is preferred from the viewpoint that the coating solution is an aqueous solution or an aqueous dispersion, and therefore, an organic solvent that may have an effect on the measurement sample or the environment is not used. Further, the use of water as the solvent is preferred from the viewpoint that the workability is excellent and the facility can be simplified as compared with the case where a solvent-based solvent is used.

The solid content concentration in the coating solution is not particularly limited, but is preferably 1 mass% to 50 mass%, and more preferably 3 mass% to 30 mass%.

A method for applying the coating solution to the inner wall 925 is not particularly limited, however, for example, a method such as brush coating, roller coating, spray coating, or dip coating can be used. Alternatively, the application can be performed by adhering the coating solution to a spatula, a glass rod, or the like, and bringing this into contact with the inner wall 925.

As for the application amount of the coating solution, the application amount after drying (a solid content mass per unit area) is preferably 0.001 to 5.0 g/m$^2$, more preferably 0.01 to 2.0 g/m$^2$, and further more preferably 0.1 to 1 g/m$^2$. When the application amount is equal to or more than the above lower limit, the antistatic performance tends to be exhibited. When the application amount is equal to or less than the above upper limit, the decrease in the transparency of the antistatic container 20 can be suppressed, and the increase in the cost due to excessive application can be prevented.

The contents of the antistatic agent and the binder resin in the antistatic layer 26 are preferably 0.1 to 100 mass% of the antistatic agent and 0 to 99.9 mass% of the binder resin, more preferably 1 to 50 mass% of the antistatic agent and 50 to 99 mass% of the binder resin, and further more preferably 5 to 30 mass% of the antistatic agent and 70 to 95 mass% of the binder resin.

(Lid Member)

The lid member is for closing the opening portion 20a of the above-mentioned antistatic container 20 so as to tightly close or hermetically seal (hereinafter these are also collectively referred to as "seal") the inner space of the antistatic container 20. In this embodiment, as the lid member, a seal material 31 that has a gas barrier property and can be pierced with a needle, a pipetter, or the like can be used. In that case, by welding a lower face of the seal material 31 to an upper end face of the flange 24 of the antistatic container 20, the antistatic container 20 and the seal material 31 are joined to each other.

As a material constituting the seal material 31, a known material can be used without any particular limitation as long as it can seal the inner space of the antistatic container 20. It may be appropriately selected from various functional films according to desired performance. For example, if a film that can be pierced with a needle, a pipetter, or the like is used, a material to be tested or a drug solution can be injected or the like without performing a removal treatment of the seal material 31. As such an easily pierceable film, films in various forms such as a lamination film in which an aluminum vapor deposition layer is provided on an unstretched or uniaxially or biaxially stretched resin film, and a lamination film in which an easily pierceable layer (a paper, a non-woven fabric, a resin film, or the like) having fine perforations formed therein is provided on an unstretched or uniaxially or biaxially stretched resin film are known.

Further, by using, for example, various known easily peelable films such as an easy peel film, an easy open film, and a peelable film to be used for food packaging purposes or for pharmaceutical packaging purposes, easy peelability can be imparted to the seal material 31. If an easily peelable film is used, it is easy to remove the seal material 31 upon use. As such an easily peelable film, for example, various easily peelable films utilizing a peeling mechanism such as interfacial peeling, cohesive peeling, or interlayer peeling are known, and one appropriately selected from known easily peelable films according to desired performance can be used. In general, a lamination film in which a fusion layer of a polymer blend (polymer alloy) is provided on a base resin film, a lamination film in which a hot-melt type fusion layer is provided on a base resin film, an interfacial peeling-type lamination film having a seal layer or a peeling layer, or the like can be suitably used.

From the viewpoint of airtightness or the like, a film having a gas barrier property is preferably used as the seal material 31. As the film having a gas barrier property, films in various forms are known, and one appropriately selected from known films according to desired performance can be used. As an example, a lamination film in which a gas barrier layer composed of a metal foil or a metal vapor deposition film of aluminum or the like, or a thin film or the like of a metal oxide such as aluminum oxide, a metal nitride, a metal carbide, a metal oxynitride, a metal oxide carbide, an inorganic oxide, or the like is provided on an unstretched or uniaxially or biaxially stretched resin film is suitably used.

From the viewpoint of responding to various needs, a film having easy peelability and a gas barrier property is particularly preferably used as the seal material 31. Specific examples of such a film include a lamination film including at least an unstretched or uniaxially or biaxially stretched base resin film, a gas barrier layer, and a sealant layer. Here, as the base resin film, a polyolefin-based film of polyethylene, polypropylene, or the like, a PET film, or the like is preferably used. In addition, as the gas barrier layer, a metal foil or a vapor deposition film of aluminum or the like, or a vapor deposition film or a sputtering film of silicon oxide or a metal oxide such as aluminum oxide is preferably used. Further, as the sealant layer, a pressure-sensitive or heat-sensitive resin layer containing an easily adhesive resin such as a polymer alloy in which polypropylene, polyethylene, polystyrene, etc. are blended at a predetermined ratio; a polyolefin-based resin such as low-density polyethylene (LDPE) or linear low-density polyethylene (LLDPE); or an ethylene-vinyl acetate copolymer is preferably used. Here, even when such a film having easy peelability and a gas barrier property is used, by using a needle having a sharp tip end, or attaching a cap, an adapter, a tip, or the like having a sharp tip end to a pipetter, generally required pierceability can also be ensured.

The seal material 31 preferably has an antistatic property from the viewpoint of suppressing adhesion of the silica powder to the seal material 31. The antistatic property can be imparted by forming an antistatic layer on the seal material 31 using an antistatic agent in the same manner as the container body 921. Alternatively, an antistatic agent may be kneaded into a base resin film constituting the seal material 31. As the antistatic agent used in the seal material 31, the same antistatic agent as contained in the above-mentioned antistatic layer 26 can be used.

Incidentally, the joining form of the seal material 31 may be appropriately selected according to the type of the material to be used, and is not particularly limited. Representative examples include welding such as heat welding, ultrasonic welding, laser welding, vibration welding, and high-frequency welding, however, for example, pressure-sensitive adhesion or pressure bonding such as using an easily peelable sealant agent or the like, or heat pressure bonding can also be adopted.

Further, in this embodiment, an example in which as the lid member, the seal material 31 using a seal material that has a gas barrier property and can be pierced with a needle, a pipetter, or the like is used and combined with the antistatic container 20 of capless type is shown, however, the configuration of the container body 921 is not limited thereto. For example, as the lid member, a cap that closes the opening portion 20a by fitting or screwing to the antistatic container 20 so as to seal the inner space of the antistatic container 20 can be used. Further, in that case, as the antistatic container 20, various known bottomed containers with a cap such as a so-called cap type, a hinged cap type, and a screw cap type can be used.

However, for such a bottomed container with a cap, an operation of detaching the cap upon use or the like is needed, and therefore, from the viewpoint of operability or handleability, it is preferred to use the seal material 31 having pierceability in combination with the capless antistatic container 20. When these members are used in such a combination, it is possible to access the inside of the antistatic container 20 by perforating the seal material 31 with a pipetter or the like without detaching the seal material 31.

<Silica Powder>

The silica powder of this embodiment is preferably composed of a silica powder in which when the silica powder is sieved for 1 minute on a sieve with a nominal mesh opening of 250 $\mu$m in accordance with JIS standard sieve list (JIS Z 8801-1982), 99 mass% or more of the powder passes through the sieve, and when the silica powder is sieved for 1 minute on a sieve with a nominal mesh opening of 106 $\mu$m, a mass change on the sieve is 1 mass% or less.

The size of the silica powder is not particularly limited, and may be appropriately set according to the application or required performance. For example, from the viewpoint of selective adsorptivity or favorable adsorptivity or desorptivity for a biological material or a chemical material, or the like, 80% or more, preferably 90% or more, and more preferably 95% or more of all particles have a maximum Feret diameter of preferably 20 $\mu$m or more, and more preferably 50 $\mu$m or more, and also preferably 1 mm or less, and more preferably 800 $\mu$m or less. When the maximum Feret diameter is equal to or more than the above lower limit, the amount of a fine powder is small, and therefore, dusting can be suppressed, and such a maximum Feret diameter is preferred from the viewpoint of handleability. When the maximum Feret diameter is equal to or less than the above upper limit, particles are not excessively large, and such a maximum Feret diameter is preferred from the viewpoint that a predetermined amount is easily weighed out upon weighing.

Further similarly, the average particle diameter $D_{50}$ of the silica powder is also not particularly limited, and may be appropriately set according to the application or required performance. For example, from the viewpoint of selective adsorptivity or favorable adsorptivity or desorptivity for a biological material or a chemical material, or the like, the average particle diameter $D_{50}$ of the silica powder is preferably 50 $\mu$m or more, and more preferably 70 $\mu$m or more, and preferably 700 $\mu$m or less, and more preferably 600 $\mu$m or less. When the average particle diameter is equal to or more than the above lower limit, the amount of a fine powder is small, and therefore, dusting can be suppressed, and such an average particle diameter is preferred from the viewpoint of handleability. When the average particle diameter is equal to or less than the above upper limit, particles are not excessively large, and such an average particle diameter is preferred from the viewpoint that a predetermined amount is easily weighed out upon weighing. Here, the average particle diameter $D_{50}$ is an average particle size of primary particles.

The silica powder of this embodiment preferably has a particle size distribution such that when the silica powder is sieved for 1 minute on a sieve with a nominal mesh opening of 250 $\mu$m in accordance with JIS standard sieve list (JIS Z 8801-1982), 99 mass% or more, and preferably 99.5 mass% or more of the powder passes through the sieve, and when the silica powder is sieved for 1 minute on a sieve with a nominal mesh opening of 106 $\mu$m, a mass change on the sieve is 1 mass% or less, and preferably 0.8 mass% or less. According to the finding of the present inventors, it has been found that the presence of fine particles having a sieve diameter of less than 106 $\mu$m not only causes adhesion to the container upon weighing or an adverse effect on the operation environment due to stirring up upon weighing, but also causes an increase in fluctuation upon weighing due to uneven distribution in the silica powder. In addition, the presence of coarse particles having a sieve diameter of more than 250 $\mu$m becomes a factor that causes an increase in fluctuation upon weighing so as to make the weighing accuracy vary significantly. Therefore, by using the silica powder that hardly contains coarse particles having a sieve diameter of more than 250 $\mu$m and fine particles having a sieve diameter of less than 106 $\mu$m in this manner, the accuracy of individual weighing on the order of several hundreds of milligrams or less, and in some cases, on the order of several to several tens of milligrams can be significantly increased without excessively deteriorating the handleability as a powder. Note that in the present description, the treatment using sieves described above shall be performed in accordance with "6.1 Dry sieving test method" in JIS K 0069:1992.

Further, in order to easily obtain the silica powder of this embodiment having the above-mentioned particle size distribution with good reproducibility, a silica powder obtained by a known production method is preferably subjected to a classification treatment. The classification treatment is generally roughly categorized into sieving using a sieve and fluid classification. The latter is further categorized into dry classification and wet classification, and further, the principles thereof are categorized into those utilizing a gravitational field, an inertial force, or a centrifugal force, and the like, but the type is not particularly limited.

The silica powder having such a particle size distribution is configured to enhance the handleability and the quantitative feeding performance, and by using this in small amount filling devices (quantitative feeding devices) of various systems, highly accurate quantitative determination can be achieved without sacrificing the handleability.

Then, according to the handleability and quantitative feeding performance of the silica powder having such a particle size distribution, it is possible to achieve industrial mass production of a silica powder storage package in which a silica powder is quantitatively determined with high accuracy, specifically, a silica powder storage package in which a silica powder is stored in each container so as to satisfy the following conditions.

a standard deviation $\sigma$: $\sigma < 1.0$

a standard deviation $\sigma$ / an average filling amount f = less than 1.0 (%)

(In the above conditions, the number n of samples is set to 10 or more.)

Note that in the present description, the number n of samples (the number n of individual housing portions to be subjected to extraction) to form a population for calculating a standard deviation $\sigma$ and an average filling amount f for highly accurate quantitative determination is set to 10 or more from the statistical viewpoint. Further, in the extraction of n number of samples, when the number of individual housing portions (bottomed containers) in one test kit (one product) is 10 or more, all individual housing portions (bottomed containers) shall be subjected to extraction. Otherwise, a plurality of products, for which the same weighing and filling methods are adopted, may be collected and combined so as to prepare 10 or more individual housing portions to be subjected to extraction.

The above-mentioned standard deviation $\sigma$ is preferably 0.8 or less, and more preferably 0.7 or less. Incidentally, the lower limit of the standard deviation $\sigma$ is not particularly limited and may be 0 or more, but is preferably 0.1 or more in consideration of productivity and economic efficiency. Further, the above-mentioned standard deviation $\sigma$ / the average filling amount f is preferably 0.8 (%) or less, and more preferably 0.7 (%) or less. Incidentally, the lower limit of $\sigma/f$ is not particularly limited and may be 0 or more, but is preferably 0.1 or more in consideration of productivity and economic efficiency. When the value of $\sigma$ or $\sigma/f$ is less than the above preferred lower limit, a powder having a single particle diameter with an extremely small variation and a highly accurate filling machine are required, and therefore, the cost becomes very high, and a problem that it is impractical can occur. If the value of $\sigma$ or $\sigma/f$ is more than the above preferred upper limit, a lot-to-lot difference in the total surface area of the silica powder used for filling is increased, and for example, when a drug is supported on the silica powder, a problem that the fluctuation of the amount of the supported drug is increased can occur.

In the quantitative feeding of the silica powder, various known powders and powder filling can be used, and the types thereof are not particularly limited. Further, it is also possible to link it with a deaerator, a vacuum device, a sterile device, a packing device, a bag feeder, or the like as needed.

As for the filling amount of the silica powder stored in the antistatic container 20, the ratio of the volume of the silica powder to the volume of the antistatic container 20 is preferably 90% or less, more preferably 50% or less, and further more preferably 30% or less. When the filling amount of the silica powder is excessively larger than the above upper limit, the silica powder is filled in the antistatic container 20, and the ratio occupied by the wall face in a state of being in contact with the silica powder in a standing state becomes large, and therefore, the effect of adhesion of the silica powder is reduced. On the other hand, when the filling amount of the silica powder is equal to or less than the above upper limit, the ratio occupied by the wall face in a state of being in non-contact with the silica powder in a standing state becomes large, and therefore, the contribution to prevention of adhesion of the silica powder by the antistatic layer 26 becomes large.

The charge potential of the antistatic container 20 is preferably -0.06 to 0.06 kV, more preferably -0.05 to 0.05 kV, further more preferably -0.04 to 0.04 kV, and particularly preferably -0.03 to 0.03 kV. The charge potential is a value measured in a state where the silica powder PS is stored in the antistatic container 20. When the charge potential is within the above range, adhesion of the silica powder PS to the antistatic container 20 tends to be suppressed. Note that in the present description, the charge potential shall be a value measured under the conditions described in the below-mentioned Example (Test Example 9).

[Operations and Effects]

In the silica powder storage package 100 of the ninth embodiment, by storing the silica powder PS in the antistatic container 20, static electricity generated in the antistatic container 20 is released to the outside, so that it is difficult to accumulate static electricity. According to this, adhesion of the silica powder PS to the inner wall 925 of the antistatic container 20 is suppressed. Therefore, when the silica powder PS filled in the antistatic container 20 is taken out, it can be taken out while suppressing loss due to adhesion. In addition, when the liquid sample is injected into the antistatic container 20 and adsorbed on the silica powder, the silica powder PS can be used for adsorption while suppressing loss due to adhesion. In this manner, in the silica powder storage package 100 of the ninth embodiment, adhesion loss of the silica powder PS is low.

Further, in the silica powder storage package 100 of the ninth embodiment, by filling the silica powder PS that has a specific particle size distribution described above and has excellent quantitative feeding performance, the silica powder PS is quantitatively fed with high accuracy, and the yield and handleability are excellent. Further, at that time, in the silica powder storage package 100, adhesion loss of the silica powder PS is low, and therefore, by adsorbing the liquid sample injected into the antistatic container 20 on a predetermined amount of the silica powder, a purification kit for a biological material having high reproducibility and excellent quantitative performance can be realized.

[Modification]

In the above-mentioned embodiment, an example in which the antistatic container 20 includes at least the container body 921 and the antistatic layer 26 that contains an antistatic agent and is provided at least a portion of the inner wall 925 of the container body 921 is described. The antistatic container 20 may include at least the container body 921 containing a synthetic resin and an antistatic agent. Such a container body 921 obtained by kneading the antistatic agent into the synthetic resin can be produced by using a resin composition obtained by blending the antistatic agent together with a resin raw material when molding the container body 921, and molding the resin composition. At that time, the container body 921 may further contain a binder resin in addition to the antistatic agent.

«Tenth Embodiment»

<Method for Producing Silica Powder Storage Package>

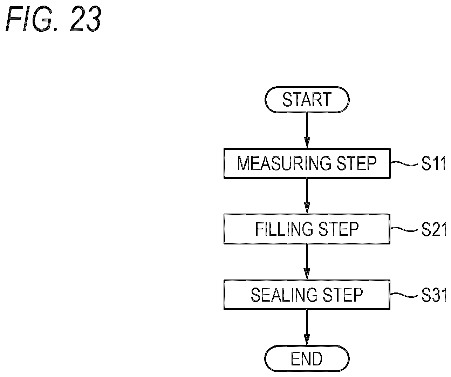

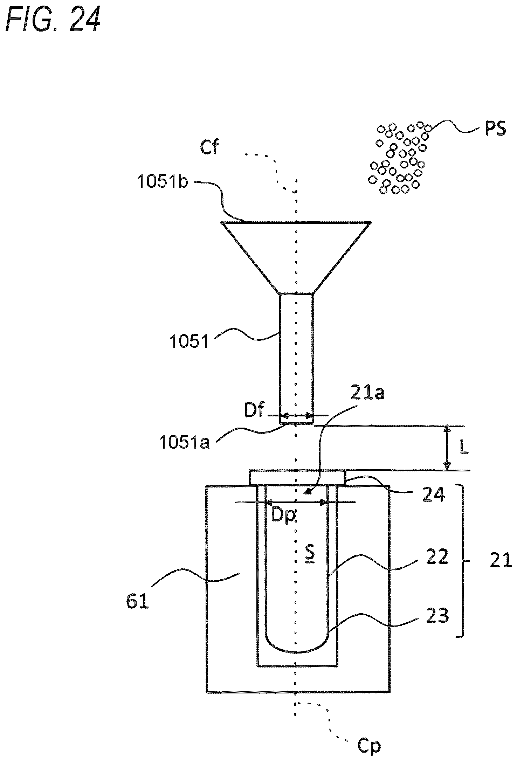

Fig. 23 is a flowchart showing a method for producing the silica powder storage package 100 of a tenth embodiment. Further, Figs. 24 to 26 are each an explanatory view schematically showing each step of this production method.

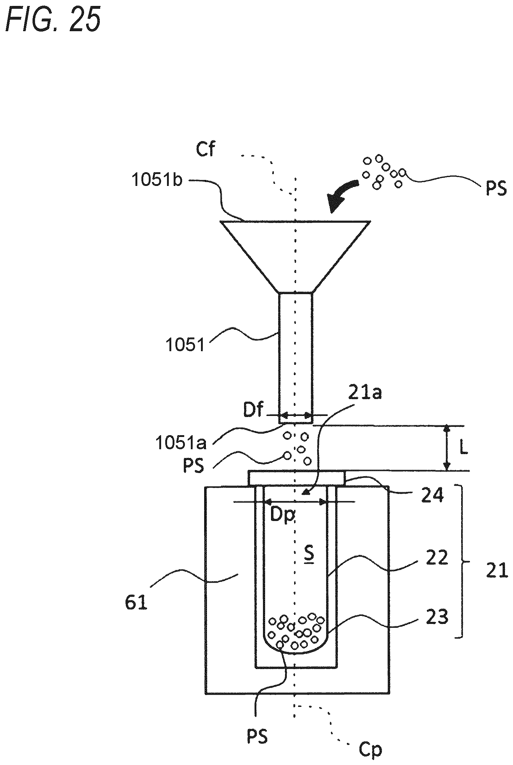

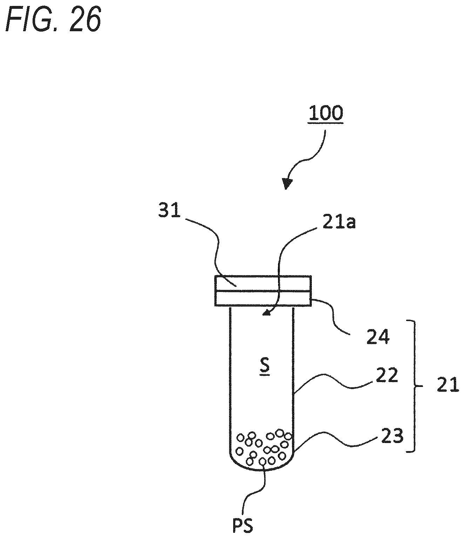

As shown in Figs. 23 to 25, the method for producing the silica powder storage package 100 of this embodiment includes at least a measuring step S11 of weighing a specified amount of the silica powder PS (see Fig. 24), and a filling step S21 of feeding the weighed silica powder PS into the bottomed container 21 having the opening portion 21a disposed at a lower side in the vertical direction through a feed tube 1051 from an upper side in the vertical direction (see Fig. 25). Here, after the filling step S21, this production method may further include a sealing step S31 of providing the seal material 31 as the lid member that tightly closes or hermetically seals the inner space S of the bottomed container 21 in the opening portion 21a of the bottomed container 21 (see Fig. 26).

(Measuring Step S11)

In the measuring step S11, a specified amount of the silica powder PS is weighed. In this embodiment, it is preferred to perform small amount weighing of 5 g or less of the silica powder PS. When the filling step S21 following this step is performed using the silica powder PS subjected to small amount weighing in this manner, even if the scattered amount of the silica powder PS is very small, the contribution ratio is relatively large, and therefore, it may have a relatively large effect. Due to this, when small amount weighing of 5 g or less is performed in the measuring step S11, the operational effect of this embodiment becomes obvious.

When the silica powder PS is weighed, various known measuring devices or measuring feeding machines for a powder body or a powder, and the like can be used. For example, an electronic automatic measuring machine, a screw-type measuring feeding device, a rotary-type measuring feeding device, a cup-type measuring device, a screen-type measuring feeding device, a vibration-type measuring feeding device, or the like can be suitably used. At that time, it may be linked to a deaerator, a vacuum device, a sterile device, or the like as needed.

(Filling Step S21)

In the filling step S21, the specified amount of the silica powder PS weighed in the measuring step S11 is fed into the inner space S of the bottomed container 21. At that time, as shown in Fig. 24, the bottomed container 21 is held by a holder 61 in an upright state so that the opening portion 21a is located on the upper side in the vertical direction.

On the other hand, the feed tube 1051 is held by a holder (not shown) at a position on the upper side in the vertical direction spaced from the opening portion 21a of the bottomed container 21, more specifically, at a position, which is on the upper side in the vertical direction of the opening portion 21a of the bottomed container 21, and at which a lower opening 1051a and the opening portion 21a are spaced from each other by a distance L.

Then, the specified amount of the silica powder PS weighed in the measuring step S11 is fed from an upper opening 1051b side of the feed tube 1051, passes through the inside of the feed tube 1051, and thereafter is fed into the inner space S of the bottomed container 21 from the lower opening 1051a of the feed tube 1051.

The bottomed container 21 preferably has the cylindrical portion 22 having a hollow cylindrical shape, and the bottom portion 23 having a hollow spherical shape located on a bottom side of the cylindrical portion 22. In this embodiment, it is preferred that the flange 24 having an outer brim shape is peripherally provided on a peripheral edge of the opening portion 21a, that is, on an outer circumferential face of an upper end part of the cylindrical portion 22.

On the other hand, the feed tube 1051 used in this embodiment is composed of a tubular body having the lower opening 1051a and the upper opening 1051b. As such a tubular body, a tubular body known in the art can be used, and those made of a metal, an alloy, or a resin are known.

In this embodiment, the feed tube 1051 is preferably constituted by connecting a funnel made of a synthetic resin and having the upper opening 1051b to the hollow cylindrical tube having the lower opening 1051a.

Incidentally, the full length, that is, the length in the vertical direction of the feed tube 1051 is not particularly limited, but may be appropriately set in consideration of the feeding rate of the silica powder PS or the like, and is generally about 5 mm to 10000 mm, and preferably 10 mm to 1000 mm.

The size of the bottomed container 21 is not particularly limited, and the height thereof is generally 1 to 30 cm, preferably 2 to 10 cm, and more preferably 3 to 5 cm. The thickness of a wall face of the bottomed container 21 is not particularly limited, and is generally 0.1 to 5 mm, preferably 0.5 to 3 mm, and more preferably 1 to 2 mm.

Here, an inner diameter Dp of the opening portion 21a of the bottomed container 21 is 6 mm or more, preferably 8 mm or more, and more preferably 10 mm or more. Incidentally, the upper limit of the inner diameter Dp of the opening portion 21a is not particularly limited, but is generally set to about 20 mm as a guide.

On the other hand, an inner diameter Df of the lower opening 1051a of the feed tube 1051 is set smaller than the inner diameter Dp of the opening portion 21a of the bottomed container 21.

The inner diameter Df of the lower opening 1051a varies depending on the inner diameter Dp of the opening portion 21a of the bottomed container 21, the particle diameter of the silica powder PS to be used, or the like, and is not particularly limited, but is preferably 2 to 10 mm, more preferably 3 to 7 mm, and further more preferably 3 to 5 mm.

On the other hand, the bottomed container 21 and the feed tube 1051 are disposed so that a central axis $C_P$ in a longitudinal cross section of the bottomed container 21 and a central axis CF in a longitudinal cross section of the feed tube 1051 coincide or substantially coincide with each other. According to this, the lower opening 1051a of the feed tube 1051 is completely overlapped within the opening portion 21a of the bottomed container 21 in plan view. By adopting a positional relationship in which the opening portion 21a of the bottomed container 21 to serve as a receiving port is sufficiently larger than the lower opening 1051a of the feed tube 1051 to serve as a discharge port for the silica powder PS and also is included (overlapped) in plan view in this manner, the silica powder PS fed from the feed tube 1051 is reliably guided to the inner space S of the bottomed container 21 from the feed tube 1051.

Incidentally, the distance L between the lower opening 1051a and the opening portion 21a is not particularly limited, but is preferably 0.5 mm or more and 50 mm or less, more preferably 0.7 mm or more and 20 mm or less, and further more preferably 0.8 mm or more and 10 mm or less from the viewpoint of efficiency at the time of the filling operation, prevention of scattering of the silica powder PS, or the like. When the distance L is within the above preferred numerical range, scattering of the silica powder PS tends to be easily suppressed while maintaining the clearance between the bottomed container 21 and the feed tube 1051.

Incidentally, it is also possible to insert the lower opening 1051a of the feed tube 1051 into the inner space S on the lower side than the opening portion 21a of the bottomed container 21 (in that case, the distance L between the lower opening 1051a and the opening portion 21a becomes a negative value), and thereafter retract the feed tube 1051 to the upper side when feeding the silica powder PS by lifting and lowering the feed tube 1051. However, if such an operation of lifting and lowering the feed tube 1051 is performed, an increase in the size of the device is caused, and also the operation efficiency is decreased by the amount corresponding to the operation. Therefore, from such a viewpoint, the distance L is preferably set within a positive numerical range.

(Sealing Step S31)

Then, in the sealing step S31, the seal material 31 as the lid member that tightly closes or hermetically seals the inner space S of the bottomed container 21 is provided in the opening portion 21a of the bottomed container 21 in which the specified amount of the silica powder PS is stored (filled) (see Fig. 26). Here, in the production method of this embodiment, scattering of the silica powder PS in the above-mentioned filling step S21 is suppressed, and therefore, there is very little silica powder PS adhering to the opening portion 21a (flange 24) of the bottomed container 21. Due to this, when the seal material 31 is provided, sealing failure caused by biting of the silica powder PS adhering to the opening portion 21a (flange 24) is suppressed, and a favorable sealing property is obtained.

The seal material 31 as the lid member used in this embodiment is for closing the opening portion 21a of the above-mentioned bottomed container 21 so as to tightly close or hermetically seal (hereinafter these are also collectively referred to as "seal") the inner space of the bottomed container 21. Here, as the seal material 31, a seal material that has a gas barrier property and can be pierced with a needle, a pipetter, or the like can be used. In that case, by welding a lower face of the seal material 31 to an upper end face of the flange 24 of the bottomed container 21, the bottomed container 21 and the seal material 31 are joined to each other.

As a material constituting the seal material 31, a known material can be used without any particular limitation as long as it can seal the inner space of the bottomed container 21. It may be appropriately selected from various functional films according to desired performance. For example, if a film that can be pierced with a needle, a pipetter, or the like is used, a material to be tested or a drug solution can be injected or the like without performing a removal treatment of the seal material 31. As such an easily pierceable film, films in various forms such as a lamination film in which an aluminum vapor deposition layer is provided on an unstretched or uniaxially or biaxially stretched resin film, and a lamination film in which an easily pierceable layer (a paper, a non-woven fabric, a resin film, or the like) having fine perforations formed therein is provided on an unstretched or uniaxially or biaxially stretched resin film are known.

Further, by using, for example, various known easily peelable films such as an easy peel film, an easy open film, and a peelable film to be used for food packaging purposes or for pharmaceutical packaging purposes, easy peelability can be imparted to the seal material 31. If an easily peelable film is used, it is easy to remove the seal material 31 upon use. As such an easily peelable film, for example, various easily peelable films utilizing a peeling mechanism such as interfacial peeling, cohesive peeling, or interlayer peeling are known, and one appropriately selected from known easily peelable films according to desired performance can be used. In general, a lamination film in which a fusion layer of a polymer blend (polymer alloy) is provided on a base resin film, a lamination film in which a hot-melt type fusion layer is provided on a base resin film, an interfacial peeling-type lamination film having a seal layer or a peeling layer, or the like can be suitably used.

From the viewpoint of airtightness or the like, a film having a gas barrier property is preferably used as the seal material 31. As the film having a gas barrier property, films in various forms are known, and one appropriately selected from known films according to desired performance can be used. As an example, a lamination film in which a gas barrier layer composed of a metal foil or a metal vapor deposition film of aluminum or the like, or a thin film or the like of a metal oxide such as aluminum oxide, a metal nitride, a metal carbide, a metal oxynitride, a metal oxide carbide, an inorganic oxide, or the like is provided on an unstretched or uniaxially or biaxially stretched resin film is suitably used.

From the viewpoint of responding to various needs, a film having easy peelability and a gas barrier property is particularly preferably used as the seal material 31. Specific examples of such a film include a lamination film including at least an unstretched or uniaxially or biaxially stretched base resin film, a gas barrier layer, and a sealant layer. Here, as the base resin film, a polyolefin-based film of polyethylene, polypropylene, or the like, a PET film, or the like is preferably used. In addition, as the gas barrier layer, a metal foil or a vapor deposition film of aluminum or the like, or a vapor deposition film or a sputtering film of silicon oxide or a metal oxide such as aluminum oxide is preferably used. Further, as the sealant layer, a pressure-sensitive or heat-sensitive resin layer containing an easily adhesive resin such as a polymer alloy in which polypropylene, polyethylene, polystyrene, etc. are blended at a predetermined ratio; a polyolefin-based resin such as low-density polyethylene (LDPE) or linear low-density polyethylene (LLDPE); or an ethylene-vinyl acetate copolymer is preferably used. Here, even when such a film having easy peelability and a gas barrier property is used, by using a needle having a sharp tip end, or attaching a cap, an adapter, a tip, or the like having a sharp tip end to a pipetter, generally required pierceability can also be ensured.

Incidentally, the joining form of the seal material 31 may be appropriately selected according to the type of the material to be used, and is not particularly limited. Representative examples include welding such as heat welding, ultrasonic welding, laser welding, vibration welding, and high-frequency welding, however, for example, pressure-sensitive adhesion or pressure bonding such as using an easily peelable sealant agent or the like, or heat pressure bonding can also be adopted.

Further, in this embodiment, an example in which as the lid member, the seal material 31 using a seal material that has a gas barrier property and can be pierced with a needle, a pipetter, or the like is used and combined with the bottomed container 21 of capless type is shown, however, the configuration of the bottomed container 21 is not limited thereto. For example, as the lid member, a cap that closes the opening portion 21a by fitting or screwing to the bottomed container 21 so as to seal the inner space of the bottomed container 21 can be used.

Further, in that case, as the bottomed container 21, various known bottomed containers with a cap such as a so-called cap type, a hinged cap type, and a screw cap type can be used. However, in a hinge type, a foreign substance is likely to remain in a gap in a folded hinge portion, and also for a bottomed container with a cap, an operation of detaching the cap upon use or the like is needed, and therefore, from the viewpoint of operability or handleability, it is preferred to use the seal material 31 having pierceability in combination with the capless bottomed container 21. When these members are used in such a combination, it is possible to access the inside of the bottomed container 21 by perforating the seal material 31 with a pipetter or the like without detaching the seal material 31.

<Silica Powder>

Hereinafter, the silica powder used in this embodiment will be described in detail.

The silica powder particularly preferably used in this embodiment is a silica powder having a particle size distribution such that when the silica powder is sieved for 1 minute on a sieve with a nominal mesh opening of 425 $\mu$m in accordance with JIS standard sieve list (JIS Z 8801-1982), 99 mass% or more, and preferably 99.5 mass% or more of the powder passes through the sieve, and when the silica powder is sieved for 1 minute on a sieve with a nominal mesh opening of 106 $\mu$m in accordance with JIS standard sieve list (JIS Z 8801-1982), a mass change on the sieve is 1 mass% or less, and preferably 0.8 mass% or less. According to the finding of the present inventors, it has been found that the presence of fine particles having a sieve diameter of less than 106 $\mu$m is likely to cause stirring up or scattering upon weighing or filling, and is also likely to cause an increase in fluctuation upon weighing due to uneven distribution in the silica powder. In addition, the presence of coarse particles having a sieve diameter of more than 425 $\mu$m becomes a factor that causes an increase in fluctuation upon weighing so as to make the weighing accuracy vary significantly. Further, is can become a factor that causes blockage inside the feed tube 1051 upon filling. Therefore, by using the silica powder that hardly contains such coarse particles and fine particles, the accuracy of individual weighing and individual filling on the order of several hundreds of milligrams or less, and in some cases, on the order of several to several tens of milligrams can be significantly increased without excessively deteriorating the handleability as a powder. According to this, when it is used in a test kit for application requiring highly accurate individual weighing (for example, medical application or application to a biological material test, or the like), in the case where there is a quantitative test item, the accuracy of test results is improved. Above all, it is more preferred to use a silica powder having a particle size distribution such that when the silica powder is sieved for 1 minute on a sieve with a nominal mesh opening of 250 $\mu$m in accordance with JIS standard sieve list (JIS Z 8801-1982), 99 mass% or more, and preferably 99.5 mass% or more of the powder passes through the sieve, and when the silica powder is sieved for 1 minute on a sieve with a nominal mesh opening of 106 $\mu$m in accordance with JIS standard sieve list (JIS Z 8801-1982), a mass change on the sieve is 1 mass% or less, and preferably 0.8 mass% or less. Note that in the present description, the treatment using sieves described above shall be performed in accordance with "6.1 Dry sieving test method" in JIS K 0069:1992.

Further, in order to easily obtain the silica powder of this embodiment having the above-mentioned particle size distribution with good reproducibility, a silica powder obtained by a known production method is preferably subjected to a classification treatment. The classification treatment is generally roughly categorized into sieving using a sieve and fluid classification. The latter is further categorized into dry classification and wet classification, and further, the principles thereof are categorized into those utilizing a gravitational field, an inertial force, or a centrifugal force, and the like, but the type is not particularly limited.

The silica powder having such a particle size distribution is configured to enhance the handleability and the quantitative feeding performance, and by using this in small amount filling devices (quantitative feeding devices) of various systems, highly accurate quantitative determination can be achieved without sacrificing the handleability.

Incidentally, from the viewpoint of preventing scattering of the silica powder and also from the viewpoint of suppressing blockage inside the feed tube 1051 described above, or the like, the silica powder used here is a porous silica powder, and is preferably a porous silica powder in which the porosity of the particles constituting the powder is 30.0 to 80.0%, and more preferably a porous silica powder in which the porosity is 50.0 to 65.0%.

Incidentally, in order to make the porosity small, it is preferred to synthesize silica so that the pore diameter of the silica becomes small, and further, when the porosity is made large, it is preferred to synthesize silica so that the pore diameter of the silica becomes large. For example, when silica having a pore diameter of 2 nm is synthesized, the porosity tends to become about 35 to 40%, and when silica having a pore diameter of 15 nm is synthesized, the porosity tends to become about 70 to 75%.

Note that in the present description, the porosity of the particles constituting the porous silica powder can be determined by measuring a pore volume by the above-mentioned method using a full-automatic specific surface area/pore distribution measuring device, Autosorb-6-MP manufactured by Quantachrome Corporation, and performing calculation from the measured value and the value of the true specific gravity (2.2 g/mL) of silica.

Further, from the viewpoint of preventing scattering of the silica powder and also from the viewpoint of suppressing blockage inside the feed tube 1051 described above, or the like, the silica powder used here is preferably a hydrated silica powder having a wet basis moisture content of 10 $\pm$ 5 mass%. In particular, when the wet basis moisture content is small, static electricity is easily generated, and scattering of the powder becomes prominent.

Incidentally, the wet basis moisture content of the silica powder can be measured using an infrared moisture meter with a heating mechanism. As the infrared moisture meter, for example, an infrared moisture meter FD-240 manufactured by Kett Electric Laboratory is exemplified. That is, the wet basis moisture content of the silica powder can be determined by heating the silica powder to 170°C to remove water (adsorbed water) until the mass change does not occur for 60 seconds or more (until the powder is brought into an absolutely dry state) using an infrared moisture meter with a heating mechanism, and performing calculation from the amount of water removed at that time.

Incidentally, in order to accurately measure the mass of the silica powder before heating, when the mass of the silica powder hermetically sealed in the container or the like is measured, it is preferred that a time from when the silica powder is taken out from the container to when the silica powder is placed in an infrared moisture meter is set within 60 seconds.

Note that the hydrated silica powder having a wet basis moisture content of 10 ± 5 mass% as used herein means that the content of water with respect to 100 mass% of the hydrated silica powder is 5 to 15 mass%.

From the viewpoint of suppressing generation of static electricity and preventing scattering of the silica powder, the content of water with respect to 100 mass% of the hydrated silica powder is more preferably 6 to 12 mass%, and particularly preferably 7 to 10 mass%.

Incidentally, some or all of the respective components and the respective features in the first embodiment to the tenth embodiment may be appropriately combined with the other embodiments.

EXAMPLES

Hereinafter, the content of the present invention will be more specifically described with reference to Examples and Comparative Examples, however, the present invention is not limited to the following Examples unless departing from the gist of the invention. Note that values of various production conditions and evaluation results in the following Examples have meanings as preferred values of the upper limit or the lower limit in the embodiments of the present invention, and the preferred range may be a range specified by a combination of the value of the above-mentioned upper limit or lower limit and a value in the following Example or values in Examples.

<<Test Example 1>>

<Production Examples 1-1 and 1-2>

(1) Preparation of Silica Powder

First, based on the Examples described in Japanese Patent Laid-Open No. 2002-80217, tetramethoxysilane was hydrolyzed by the following method, thereby synthesizing a silica gel. Pure water (1000 g) was put into a 5-L separable flask (with a jacket) made of glass and fitted with a water-cooled condenser opening to the atmosphere in an upper portion. Tetramethoxysilane (1400 g) was added thereto over 3 minutes while stirring at 80 rpm. The molar ratio of water/tetramethoxysilane was about 6. Hot water at 50°C was allowed to pass through the jacket of the separable flask. Stirring was continued, and when the content reached the boiling point, stirring was stopped. Thereafter, the generated sol was gelled while allowing hot water at 50°C to pass through the jacket for about 0.5 hours. Thereafter, the gel was promptly taken out and then allowed to pass through a net made of nylon with a mesh opening of 1.2 mm to pulverize the gel, whereby a particulate wet gel (silica hydrogel) was obtained. The hydrogel (450 g) and pure water (450 g) were charged into a 1-L autoclave made of glass, and then subjected to a hydrothermal treatment at a treatment temperature of 130°C for a treatment time of 3 hours. After the hydrothermal treatment, the resultant was filtered through a No. 5A filter paper, and the filter cake was vacuum dried at 100°C without washing with water until it reached a constant weight, whereby a dry silica gel was obtained. The obtained silica powder was mesoporous silica having mesopores with an average pore diameter of 4 nm.

(2) Classification of Silica Powder

Subsequently, the obtained silica gel was classified as follows. Note that in this Test Example, the classification was performed using standard sieves according to JIS Z 8801-1982 except for a classification net with a mesh size of 900 μm (manufactured by Kansai Wire Netting Co., Ltd., item number: 23GG-900) by sieving using a vibratory classifier (manufactured by Tsutsui Rikagaku Kikai Co., Ltd.) in accordance with JIS K 0069:1992 until a change in the weight of the silica gel on the sieve was 1% or less. Further, "a particle with a sieve diameter of x to y μm" means a particle that passed through a sieve with a mesh opening of y μm as a result of sieving with the sieve, but did not pass through a sieve with a mesh opening of x μm as a result of sieving with the sieve. First, a sieve with a mesh opening of 75 μm and a sieve with a mesh opening of 900 μm were used, whereby a silica gel having a particle diameter (sieve diameter) of 75 to 900 μm was obtained. Further, this silica gel was subjected to classification using a sieve with a mesh opening of 180 μm and a sieve with a mesh opening of 250 μm, whereby a sample of a silica coarse powder having a particle diameter (sieve diameter) of 180 to 250 μm (Production Example 1-1) was obtained. In addition, classification was performed using a sieve with a mesh opening of 106 μm in the same manner, whereby a sample of a silica fine powder having a particle diameter (sieve diameter) of 75 to 106 μm (Production Example 1-2) was obtained.

<Reference Example 1-1>

The sample of the silica coarse powder of Production Example 1-1 (0.102 g) was filled in a 2.0-mL volume capless tube made of polypropylene (manufactured by FCR & Bio Co., Ltd., item number: MP-200NC) as a bottomed container, and thereafter an opening portion of the bottomed container was capped with an aluminum foil, whereby a silica powder storage package of Reference Example 1-1 was produced.

Subsequently, the obtained silica powder storage package was placed in a vortex mixer (manufactured by Jeio Tech, Inc.), and vibration was applied thereto by stirring under the condition of 3000 rpm for 3 hours (a vibration state during transportation is assumed). Thereafter, an aluminum foil lid was detached from the silica powder storage package, and the silica powder was discharged from the opening portion by turning the bottomed container upside down by 180°. The mass of the silica powder taken out by discharging was measured, and an adhesion loss amount that was not discharged due to adhesion to the inner wall or the like of the microtube was calculated from the amount of the silica powder charged at the beginning, and an adhesion ratio (%) was calculated. The results are shown in Table 1-1. Note that in Table 1-1, the filling amount (g/cm$^2$) of the silica powder with respect to the inner wall area of the bottomed container is shown.

<Reference Example 1-2>

A silica powder storage package of Reference Example 1-2 was produced in the same manner as in Reference Example 1-1 except that the sample of the silica coarse powder of Production Example 1-1 in Reference Example 1-1 was changed to the sample of the silica fine powder of Production Example 1-2, and 0.098 g of the sample was filled. Then, stirring was performed under the same condition as in Reference Example 1-1, and measurement of the mass of the silica powder taken out and calculation of an adhesion ratio (%) were performed. The results are shown in Table 1-1.

[Table 1]

Table 1-1

|  | Filling amount (g) | Filling amount (g/cm$^2$) | Taking-out amount (g) | Adhesion ratio (%) |
|---|---|---|---|---|
| Reference Example 1-1 | 0.102 | 0.008 | 0.062 | 39 |
| Reference Example 1-2 | 0.098 | 0.008 | 0.081 | 18 |

<Example 1-1>

The sample of the silica coarse powder of Production Example 1-1 (0.113 g) and 0.100 g of the sample of the silica fine powder of Production Example 1-2 were mixed, whereby a silica powder of Example 1-1 was obtained.

Subsequently, a silica powder storage package of Example 1-1 was produced in the same manner as in Reference Example 1-1 except that the sample of the silica coarse powder of Production Example 1-1 in Reference Example 1-1 was changed to the silica powder of Example 1-1, and the entire amount was filled. Then, stirring was performed under the same condition as in Reference Example 1-1.

After stirring, an aluminum foil lid was detached from the silica powder storage package, and the silica powder was discharged from the opening portion by turning the bottomed container upside down by 180°. The silica powder was subjected to classification using a sieve with a mesh opening of 150 μm, whereby a silica coarse powder sample that did not pass through the sieve and a silica fine powder sample that passed through the sieve were obtained. Incidentally, the silica coarse powder sample and the silica fine powder sample obtained here correspond to those which did not adhered to the bottomed container in the sample of the silica coarse powder of Production Example 1-1 and the sample of the silica fine powder of Production Example 1-2 filled in the bottomed container, respectively.

The mass of each of the silica coarse powder sample and the silica fine powder sample taken out was measured, and an adhesion loss amount that was not discharged due to adhesion to the inner wall or the like of the microtube was calculated from the amounts of the sample of the silica coarse powder and the sample of the silica fine powder charged at the beginning, and an adhesion ratio (%) was calculated. The results are shown in Table 1-2. Note that in Table 1-2, the filling amount (g/cm$^2$) of the silica coarse powder or the silica fine powder with respect to the inner wall area of the bottomed container is shown.

[Table 2]

Table 1-2

| | Filling amount (g) | Filling amount (g/cm$^2$) | Taking-out amount (g) | Adhesion ratio (%) |
|---|---|---|---|---|
| Silica coarse powder | 0.113 | 0.009 | 0.113 | 0 |
| Silica fine powder | 0.100 | 0.008 | 0.086 | 14 |
| Total | 0.213 | 0.017 | 0.199 | 7 |

As apparent from Table 1-1, in the case where the silica coarse powder was filled in the bottomed container alone, the adhesion ratio reached nearly 40%. On the other hand, as apparent from Table 1-2, in the silica powder storage package of Example 1-1 in which the silica coarse powder and the silica fine powder were used in combination, the adhesion ratio of the total silica powder was 7%, and the adhesion ratio of the silica fine powder was 14%, however, the adhesion ratio of the silica coarse powder was 0%, and thus, it was confirmed that adhesion of the silica coarse powder can be prevented.

<Examples 1-2 to 1-5>

A sample of a silica coarse powder was obtained in the same manner as in Production Example 1-1 except that the silica gel was subjected to classification using a sieve with a mesh opening of 425 $\mu$m and a sieve with a mesh opening of 106 $\mu$m. Silica powder storage packages of Examples 1-2 to 1-5 were produced in the same manner as in Example 1-1 except that the filling amounts (g) of the sample of the silica coarse powder and the sample of the silica fine powder of Production Example 1-2 were set as shown in the following Table 1-3.

(Adhesion Ratio)

An adhesion ratio (%) of the silica powder was calculated in the same manner as in Example 1-1. The results are shown in Table 1-3. Note that in Table 1-3, the filling amount (g/cm$^2$) of the silica coarse powder or the silica fine powder with respect to the inner wall area of the bottomed container is shown.

(Evaluation of Handleability of Silica Powder)

Each of the silica powder storage packages obtained above was stirred under the same condition as in Example 1-1. After stirring, an aluminum foil lid was detached from the silica powder storage package, and the silica powder was discharged from the opening portion by turning the bottomed container upside down by 180°. The handleability at that time was evaluated according to the following criteria, and the results are shown in Table 1-3.

A: The powder flowed without being caught in the bottomed container and was discharged.
B: The powder was sometimes caught in the bottomed container, but could be discharged to such an extent that there is no practical problem by lightly shaking.
C: The powder was caught in the bottomed container, and some of the powder was not discharged merely by turning the container upside down, and when vibration was applied thereto for discharging the powder, some of the powder was stirred up due to sudden dropping of the fine powder and could not be recovered.

(Determination)

The usefulness of each of the silica powder storage packages obtained above was determined according to the following criteria. The results are shown in Table 1-3.

A: The adhesion ratio of the silica coarse powder to the bottomed container was less than 10% and the handleability was evaluated as A.
B: The adhesion ratio of the silica coarse powder to the bottomed container was 10% or more or the handleability was not evaluated as A.

[Table 3]

Table 1-3

| | Filling amount (g) | | Filling amount (g/cm²) | | Taking-out amount (g) | | Adhesion ratio (%) | | Handleability of silica powder | Determination |
|---|---|---|---|---|---|---|---|---|---|---|
| | Silica coarse powder | Silica fine powder | Silica coarse powder | Silica fine powder | Silica coarse powder | Silica fine powder | Silica coarse powder | Silica fine powder | | |
| Example 1-2 | 0.301 | 0.338 | 0.025 | 0.028 | 0.301 | 0.328 | 0 | 3 | A | A |
| Example 1-3 | 0.484 | 0.121 | 0.040 | 0.010 | 0.443 | 0.096 | 9 | 21 | A | A |
| Example 1-4 | 0.413 | 0.181 | 0.034 | 0.015 | 0.396 | 0.161 | 4 | 11 | A | A |
| Example 1-5 | 0.190 | 0.418 | 0.015 | 0.034 | 0.200 | 0.395 | -5 | 6 | A | A |

As apparent from Table 1-3, it was confirmed that in the silica powder storage packages of Examples 1-2 to 1-5 in which the silica coarse powder and the silica fine powder were used in combination, adhesion of the silica coarse powder hardly occurs.

<<Test Example 2>>

<Examples 2-1 to 2-10 and Comparative Examples 2-1 to 2-4>

Silica powder storage packages of Examples 2-1 to 2-10 and Comparative Examples 2-1 to 2-4 were produced by filling a predetermined amount of each of the silica powders having a particle size distribution shown in Table 2-1 in a commercially available 1.5-mL volume microtube with a lid (manufactured by Eppendorf AG, made of polypropylene, without hydrophilic coating on the inner wall).

Subsequently, each of the obtained silica powder storage packages was set in a commercially available microtube mixer, and stirring was performed at 2000 rpm for 15 minutes (a vibration state during transportation is assumed). Thereafter, the lid of the silica powder storage package was opened, and the silica powder was discharged from the opening portion by turning the bottomed container upside down by 180°. The mass of the discharged silica powder was measured, and an adhesion loss amount that was not discharged due to adhesion to the inner wall or the like of the microtube was calculated from the amount of the silica powder charged at the beginning, and an adhesion ratio (%) was calculated. The results are shown in Table 2-1.

[Table 4]

Table 2-1

| Silica powder | Particle size distribution (cumulative %) | | | | Average particle diameter $D_{50}$ ($\mu$m) | Charged amount | Adhesion ratio (%) |
|---|---|---|---|---|---|---|---|
| | up to 44 $\mu$m | up to 148 $\mu$m | up to 498 $\mu$m | up to 592 $\mu$m | | | |
| Comparative Example 2-1 | 100.0 | 100.0 | 100.0 | 100.0 | 5 | 0.1 g | 89.2 |
| Comparative Example 2-2 | 99.4 | 100.0 | 100.0 | 100.0 | 17 | | 88.8 |
| Example 2-1 | 56.1 | 100.0 | 100.0 | 100.0 | 41 | | 9.8 |
| Example 2-2 | 9.1 | 95.8 | 100.0 | 100.0 | 88 | | 11.6 |
| Example 2-3 | 0.0 | 24.7 | 100.0 | 100.0 | 189 | | 3.8 |
| Example 2-4 | 0.0 | 6.8 | 95.2 | 99.1 | 311 | | 10.4 |
| Example 2-5 | 0.0 | 0.5 | 43.2 | 95.9 | 508 | | 9.8 |
| Comparative Example 2-3 | 100.0 | 100.0 | 100.0 | 100.0 | 5 | 0.05 g | 67.1 |
| Comparative Example 2-4 | 99.4 | 100.0 | 100.0 | 100.0 | 17 | | 30.3 |
| Example 2-6 | 56.1 | 100.0 | 100.0 | 100.0 | 41 | | 13.9 |
| Example 2-7 | 9.1 | 95.8 | 100.0 | 100.0 | 88 | | 17.2 |
| Example 2-8 | 0.0 | 24.7 | 100.0 | 100.0 | 189 | | 2.7 |
| Example 2-9 | 0.0 | 6.8 | 95.2 | 99.1 | 311 | | 10.9 |
| Example 2-10 | 0.0 | 0.5 | 43.2 | 95.9 | 508 | | 6.9 |

As apparent from Table 2-1, it was confirmed that in the silica powder storage packages of Examples 2-1 to 2-10 corresponding to the present invention, adhesion loss is significantly smaller as compared with Comparative Examples 2-1 to 2-4.

Subsequently, when the silica powders used in Examples 2-3 and 2-8 in which the adhesion ratio was particularly small in either case where the charged amount was 0.1 g or 0.05 g were sieved for 1 minute on a sieve with a nominal mesh opening of 425 $\mu$m in accordance with JIS standard sieve list (JIS Z 8801-1982), 99.5 mass% or more of the powder passed through the sieve. Further similarly, when the silica powders were sieved for 1 minute on a sieve with a nominal mesh opening of 106 $\mu$m in accordance with JIS standard sieve list (JIS Z 8801-1982), a mass change on the sieve was 0.5 mass% or less in both cases. Further, when the silica powders used in Examples 2-3 and 2-8 were sieved for 1 minute on a sieve with a nominal mesh opening of 250 $\mu$m in accordance with JIS standard sieve list (JIS Z 8801-1982), 99.5 mass% or more of the powder passed through the sieve.

<<Test Example 3>>

<Examples 3-1 to 3-4 and Comparative Examples 3-1 to 3-3>

Silica powder storage packages of Examples 3-1 to 3-4 and Comparative Examples 3-1 to 3-3 were produced by filling a predetermined amount of each of the silica powders having a particle size distribution shown in Table 3-1 in a commercially available 1.5-mL volume microtube with a screw cap (manufactured by Sarstedt K.K., brand name: 72.692MPC, made of polypropylene, coated on the inner wall with MPC polymer having a phospholipid-like structure (MPC: 2-methacryloyloxyethyl phosphorylcholine polymer)), followed by capping the microtube.

Subsequently, each of the obtained silica powder storage packages was set in a commercially available microtube mixer, and stirring was performed at 2000 rpm for 15 minutes (a vibration state during transportation is assumed). Thereafter, the cap of the silica powder storage package was opened, and the silica powder was discharged from the opening portion by turning the bottomed container upside down by 180°. The mass of the discharged silica powder was measured, and an adhesion loss amount that was not discharged due to adhesion to the inner wall or the like of the microtube bottomed container was calculated from the amount of the silica powder charged at the beginning, and an adhesion ratio (%) was calculated. The results are shown in Table 3-1.

[Table 5]

Table 3-1

| Silica powder | Particle size distribution (cumulative %) | | | | Average particle diameter $D_{50}$ ($\mu$m) | Charged amount | Adhesion ratio (%) |
|---|---|---|---|---|---|---|---|
| | up to 44 $\mu$m | up to 148 $\mu$m | up to 498 $\mu$m | up to 592 $\mu$m | | | |
| Comparative Example 3-1 | 100.0 | 100.0 | 100.0 | 100.0 | 5 | 0.1 g | 100.0 |
| Comparative Example 3-2 | 99.4 | 100.0 | 100.0 | 100.0 | 17 | | 82.7 |
| Example 3-1 | 56.1 | 100.0 | 100.0 | 100.0 | 41 | | 12.9 |
| Example 3-2 | 9.1 | 95.8 | 100.0 | 100.0 | 88 | | 16.9 |
| Example 3-3 | 0.0 | 24.7 | 100.0 | 100.0 | 189 | | 9.4 |
| Example 3-4 | 0.0 | 6.8 | 95.2 | 99.1 | 311 | | 9.2 |
| Comparative Example 3-3 | 0.0 | 0.5 | 43.2 | 95.9 | 508 | | 87.1 |

As apparent from Table 3-1, it was confirmed that in the silica powder storage packages of Examples 3-1 to 3-4 corresponding to the present invention, the adhesion ratio is significantly smaller as compared with Comparative Examples 3-1 to 3-3.

When the silica powders used in Examples 3-3 and 3-4 in which the adhesion ratio was particularly small were sieved for 1 minute on a sieve with a nominal mesh opening of 425 $\mu$m in accordance with JIS standard sieve list (JIS Z 8801-1982), 99.5 mass% or more of the powder passed through the sieve. Further similarly, when the silica powders were sieved for 1 minute on a sieve with a nominal mesh opening of 106 $\mu$m in accordance with JIS standard sieve list (JIS Z 8801-1982), a mass change on the sieve was 0.5 mass% or less in both cases. Incidentally, when the silica powder used in Example 3-3 was sieved for 1 minute on a sieve with a nominal mesh opening of 250 $\mu$m in accordance with JIS standard sieve list (JIS Z 8801-1982), 99.5 mass% or more of the powder passed through the sieve, however, in the case of the silica powder used in Example 3-4, a half or more of the silica powder remained on the sieve.

<Examples 3-5 to 3-8 and Comparative Examples 3-4 to 3-6>

Silica powder storage packages of Examples 3-5 to 3-8 and Comparative Examples 3-4 to 3-6 were produced in the same manner as in Examples 3-1 to 3-4 and Comparative Examples 3-1 to 3-3, respectively, except that a commercially available 1.5-mL volume microtube with a cap (manufactured by Sumitomo Bakelite Company Limited, made of polypropylene, brand name: MS-4215M ProteoSave SS, coated on the inner wall with a photocrosslinkable superhydrophilic polymer) was used in place of the microtube manufactured by Sarstedt K.K.

Thereafter, adhesion ratios (%) were calculated in the same manner as in Examples 3-1 to 3-4 and Comparative Examples 3-1 to 3-3. The results are shown in Table 3-2.

[Table 6]

Table 3-2

| Silica powder | Particle size distribution (cumulative %) | | | | Average particle diameter $D_{50}$ ($\mu$m) | Charged amount | Adhesion ratio (%) |
|---|---|---|---|---|---|---|---|
| | up to 44 $\mu$m | up to 148 $\mu$m | up to 498 $\mu$m | up to 592 $\mu$m | | | |
| Comparative Example 3-4 | 100.0 | 100.0 | 100.0 | 100.0 | 5 | 0.1 g | 99.9 |
| Comparative Example 3-5 | 99.4 | 100.0 | 100.0 | 100.0 | 17 | | 99.1 |
| Example 3-5 | 56.1 | 100.0 | 100.0 | 100.0 | 41 | | 5.0 |
| Example 3-6 | 9.1 | 95.8 | 100.0 | 100.0 | 88 | | 9.5 |
| Example 3-7 | 0.0 | 24.7 | 100.0 | 100.0 | 189 | | 26.8 |
| Example 3-8 | 0.0 | 6.8 | 95.2 | 99.1 | 311 | | 23.6 |
| Comparative Example 3-6 | 0.0 | 0.5 | 43.2 | 95.9 | 508 | | 95.2 |

<<Test Example 4>>

(Preparation Example 4-1)

First, based on the Examples described in Japanese Patent Laid-Open No. 2002-80217, tetramethoxysilane was hydrolyzed by the following method, thereby synthesizing a silica gel. Pure water (1000 g) was put into a 5-L separable flask (with a jacket) made of glass and fitted with a water-cooled condenser opening to the atmosphere in an upper portion. Tetramethoxysilane (1400 g) was added thereto over 3 minutes while stirring at 80 rpm. The molar ratio of water/tetramethoxysilane was about 6. Hot water at 50°C was allowed to pass through the jacket of the separable flask. Stirring was continued, and when the content reached the boiling point, stirring was stopped. Thereafter, the generated sol was gelled while allowing hot water at 50°C to pass through the jacket for about 0.5 hours. Thereafter, the gel was promptly taken out and then allowed to pass through a net made of nylon with a mesh opening of 1.2 mm to pulverize the gel, whereby a particulate wet gel (silica hydrogel) was obtained. The hydrogel (450 g) and pure water (450 g) were charged into a 1-L autoclave made of glass, and then subjected to a hydrothermal treatment at a treatment temperature of 130°C for a treatment time of 3 hours. After the hydrothermal treatment, the resultant was filtered through a No. 5A filter paper, and the filter cake was vacuum dried at 100°C without washing with water until it reached a constant weight, whereby a dry silica gel was obtained. The obtained silica powder was mesoporous silica having mesopores with an average pore diameter of 4 nm.

Subsequently, the obtained silica gel was classified as follows. Note that as for the classification, a sieve, 23GG-900 manufactured by Kansai Wire Netting Co., Ltd. was used for classification at 900 $\mu$m, and standard sieves according to JIS Z 8801-1982 were used for the other classification, and the classification was performed by sieving using a vibratory classifier (manufactured by Tsutsui Rikagaku Kikai Co., Ltd.) in accordance with JIS K 0069:1992 until a change in the weight of the silica gel on the sieve was 1% or less. Further, "a particle with a sieve diameter of x to y μm" means a particle that passed through a sieve with a mesh opening of y μm as a result of sieving with the sieve, but did not pass through a sieve with a mesh opening of x μm as a result of sieving with the sieve. First, a sieve with a mesh opening of 75 μm and a sieve with a mesh opening of 900 μm were used, whereby a silica gel having a particle diameter (sieve diameter) of 75 to 900 μm was obtained. Subsequently, this silica gel was subjected to classification using a sieve with a mesh opening of 425 μm and a sieve with a mesh opening of 900 μm, whereby a silica powder having a particle diameter (sieve diameter) of 425 to 900 μm was obtained.

Subsequently, a sample (200 mg) was weighed out from the obtained silica powder having a particle diameter (sieve diameter) of 425 to 900 μm, and this sample was set in a holder of an infrared moisture meter FD-240 manufactured by Kett Electric Laboratory. Thereafter, a heat treatment was performed at 170°C until a mass change due to water loss did not occur for 60 seconds or more, whereby 182 mg of a silica powder in an absolutely dry state was obtained. The obtained silica powder in an absolutely dry state was stored in a desiccator in which a desiccant was enclosed.

(Comparative Example 4-1)

The obtained silica powder in an absolutely dry state (182 mg) was filled in a 2.0-mL volume capless tube made of polypropylene (manufactured by FCR & Bio Co., Ltd., item number: MP-200NC), and thereafter, a film having a gas barrier property was heat-sealed to an opening portion of the capless tube, whereby a silica powder storage package of Comparative Example 4-1 was produced. Incidentally, the filling ratio of the silica powder to the volume of the tube was 17 vol%.

(Example 4-1)

The silica powder before the heat treatment (200 mg) was filled in a 2.0-mL volume capless tube made of polypropylene (manufactured by FCR & Bio Co., Ltd., item number: MP-200NC), and thereafter, a film having a gas barrier property was heat-sealed to an opening portion of the capless tube, whereby a silica powder storage package of Example 4-1 was produced. Incidentally, the filling ratio of the silica powder to the volume of the tube was 17 vol%.

(Examples 4-2 to 4-10)

The silica powder before the heat treatment (200 mg) and ultrapure water (Milli-Q water, manufactured by Merck Millipore) in an amount shown in Table 4-1 were filled in a 2.0-mL volume capless tube made of polypropylene (manufactured by FCR & Bio Co., Ltd., item number: MP-200NC), and thereafter, a film having a gas barrier property was heat-sealed to an opening portion of the capless tube, whereby silica powder storage packages of Examples 4-2 to 4-10 were produced. Incidentally, the filling ratio of the silica powder to the volume of the tube was 17 vol%.

<Measurement of Electric Charge Amount>

The film having a gas barrier property was peeled off from each of the produced silica powder storage packages in an environment of 23°C and 20% RH, and thereafter, an electric charge amount (electrostatic voltage, direct current) of each of the silica powder storage packages before vibration was promptly measured using an electrostatic potential measuring instrument (manufactured by Shishido Electrostatic Ltd., model number: STATIRON-DZ3). The measurement of the electric charge amount was performed by maintaining each of the silica powder storage packages in an upright state, and irradiating it with LED light of the electrostatic potential measuring instrument from a distance of 5 cm in a horizontal direction. At that time, the position of each of the silica powder storage packages and the electrostatic potential measuring instrument was adjusted so that a central portion of the silica powder accumulated on the bottom portion is irradiated with the LED light.

Subsequently, the opening portion of each of the silica powder storage packages was covered with aluminum foil, and the silica powder storage package was placed in a vortex mixer (manufactured by Jeio Tech, Inc.), and vibration was applied thereto by stirring under the condition of 3000 rpm for 6 hours (a vibration state during transportation is assumed). Thereafter, the measurement of the electric charge amount was promptly performed in the same manner as before vibration. The measurement results are shown in Table 4-1.

<Evaluation of Adhesion of Silica Powder>

Each of the silica powder storage packages obtained in Examples 4-1 to 4-10 and Comparative Example 4-1 was visually observed, and the amount of the silica powder adhering to the wall face of the container was confirmed. The obtained results are shown in Table 4-1. Incidentally, as the criteria of the evaluation results were as follows.

D: The adhesion amount of the silica powder adhering to the wall face was large.
C: The adhesion amount of the silica powder adhering to the wall face was medium.
B: The adhesion amount of the silica powder adhering to the wall face was small.
A: The silica powder hardly adhered to the wall face.

[Table 7]

Table 4-1

| | Silica powder (absolute dry amount) [mg] | Amount of water in system | | | Measurement value of initial electric charge amount [kV] | Measurement value of electric charge amount after 6 hr vibration [kV] | Electric charge amount (electrostatic voltage) [kV] | Evaluation of adhesion of silica powder | State of added water |
| | | Adsorbed water [mg] | Water addition amount [mg] | Total [mg] | | | | | |
|---|---|---|---|---|---|---|---|---|---|
| Comparative Example 4-1 | 182.00 | 0 | 0 | 0.00 | 0.02 | -0.92 | 0.94 | D | - |
| Example 4-1 | 182.00 | 18.00 | 0.00 | 18.00 | -0.03 | -0.62 | 0.59 | C | Adsorbed in pores |
| Example 4-2 | 182.00 | 18.00 | 50.00 | 68.00 | 0.04 | -0.26 | 0.30 | C | |
| Example 4-3 | 182.00 | 18.00 | 100.00 | 118.00 | 0.04 | -0.14 | 0.18 | B | |
| Example 4-4 | 182.00 | 18.00 | 150.00 | 168.00 | 0.03 | -0.14 | 0.17 | B | |
| Example 4-5 | 182.00 | 18.00 | 200.00 | 218.00 | 0.11 | -0.07 | 0.18 | B | |
| Example 4-6 | 182.00 | 18.00 | 250.00 | 268.00 | 0.07 | 0.03 | 0.04 | A | Pores filled with water |
| Example 4-7 | 182.00 | 18.00 | 300.00 | 318.00 | 0.04 | -0.03 | 0.07 | A | Water surface and powder surface are the same |
| Example 4-8 | 182.00 | 18.00 | 350.00 | 368.00 | 0.07 | -0.02 | 0.09 | A | Water surface is higher powder surface |
| Example 4-9 | 182.00 | 18.00 | 400.00 | 418.00 | 0.13 | -0.12 | 0.25 | A | |
| Example 4-10 | 182.00 | 18.00 | 500.00 | 518.00 | 0.05 | -0.33 | 0.38 | A | |

As apparent from Table 4-1, it was confirmed that in the silica powder storage packages of Examples 4-1 to 4-10 corresponding to the fourth embodiment of the present invention, the electric charge amount is smaller and the amount of the silica powder adhering to the wall face is significantly smaller as compared with Comparative Example 4-1.

Further, as shown in Examples 4-9 and 4-10, it was confirmed that as the amount of water present in the system becomes larger, the electric charge amount tends to become larger. This is due to generation of static electricity by swinging of water in the bottomed container. It is considered that when the amount of water present in the system becomes larger and exceeds a certain amount, the electric charge amount becomes larger due to swinging of water so that the amount of the silica powder adhering to the wall face of the bottomed container is increased. However, it was confirmed that the silica powder adhering to the wall face of the bottomed container is washed away by swinging of water so that the amount of the silica powder adhering to the wall face of the bottomed container can be largely decreased.

«Test Example 5»

(1) Preparation of Silica Powder

First, based on the Examples described in Japanese Patent Laid-Open No. 2002-80217, tetramethoxysilane was hydrolyzed by the following method, thereby synthesizing a silica gel. Pure water (1000 g) was put into a 5-L separable flask (with a jacket) made of glass and fitted with a water-cooled condenser opening to the atmosphere in an upper portion. Tetramethoxysilane (1400 g) was added thereto over 3 minutes while stirring at 80 rpm. The molar ratio of water/tetramethoxysilane was about 6. Hot water at 50°C was allowed to pass through the jacket of the separable flask. Stirring was continued, and when the content reached the boiling point, stirring was stopped. Thereafter, the generated sol was gelled while allowing hot water at 50°C to pass through the jacket for about 0.5 hours. Thereafter, the gel was promptly taken out and then allowed to pass through a net made of nylon with a mesh opening of 1.2 mm to pulverize the gel, whereby a particulate wet gel (silica hydrogel) was obtained. The hydrogel (450 g) and pure water (450 g) were charged into a 1-L autoclave made of glass, and then subjected to a hydrothermal treatment at a treatment temperature of 130°C for a treatment time of 3 hours. After the hydrothermal treatment, the resultant was filtered through a No. 5A filter paper, and the filter cake was vacuum dried at 100°C without washing with water until it reached a constant weight, whereby a dry silica gel was obtained. The obtained silica powder was mesoporous silica having mesopores with an average pore diameter of 4 nm.

(2) Preparation of Silica Powder for Highly Accurate Quantitative Feeding

Subsequently, the obtained silica gel was classified as follows. Note that as for the classification, a sieve, 23GG-900 manufactured by Kansai Wire Netting Co., Ltd. was used for classification at 900 μm, and standard sieves according to JIS Z 8801-1982 were used for the other classification, and the classification was performed by sieving using a vibratory classifier in accordance with JIS K 0069 until a change in the weight of the silica gel on the sieve was 1% or less. Note that "a particle with a sieve diameter of x to y μm" means a particle that passed through a sieve with a mesh opening of y μm as a result of sieving with the sieve, but did not pass through a sieve with a mesh opening of x μm as a result of sieving with the sieve. First, a sieve with a mesh opening of 75 μm and a sieve with a mesh opening of 900 μm were used, whereby a silica gel having a particle diameter (sieve diameter) of 75 to 900 μm was obtained. Further, this silica gel was subjected to classification using a sieve with a mesh opening of 425 μm, whereby a sample having a particle diameter (sieve diameter) of 425 μm to 900 μm was obtained.

<Example 5-1>

In a 2-mL capless tube made of polypropylene (manufactured by FCR & Bio Co., Ltd.: MP-200NC), 400 mg of the above sample of the silica powder was filled. Subsequently, a film having a gas barrier property was heat-sealed to an opening portion of the capless tube, whereby a storage tube in which the silica powder was hermetically sealed was produced. Incidentally, as a seal material, a lamination sheet in which a polyethylene terephthalate film having a thickness of 12 μm, an aluminum sheet having a thickness of 9 μm, and a linear low-density polyethylene sheet having a thickness of 40 μm were laminated in the thickness direction in this order with an adhesive was used. Incidentally, the seal material was placed on the opening portion of the tube so that the linear low-density polyethylene sheet was opposed to the opening potion of the tube, and this seal material was welded to the opening portion by pressure-bonding while heating using a heat sealer. Incidentally, the heat-sealing conditions were set as follows: temperature: 160°C, pressure-bonding force: 8 N, and pressure-bonding time: 3 minutes.

Such a tube storing the silica powder was placed in a vortex mixer (manufactured by Jeio Tech, Inc., model: VM-96B), and vibration was applied thereto by stirring under the condition of 3000 rpm for 10 hours. Subsequently, the seal material that is a lid of the tube was pierced with a pipette made of polypropylene having an opening end face area

of 1 mm$^2$ with a force of 14 N. Thereafter, in order to measure the mixing amount of aluminum in the container, the silica powder inside the tube was taken out and dissolved, and the content of aluminum was measured with an ICP optical emission spectrometry (after contamination test). Incidentally, before filling the silica powder in the capless tube, the content of aluminum contained in the silica powder was measured in the same manner as described above (before contamination test). The obtained results are shown in Table 5-1.

<Comparative Example 5-1>

A tube storing the silica powder was produced in the same manner as in Example 5-1 except that the tube storing the silica powder was hermetically sealed using a 20-$\mu$m aluminum foil (manufactured by Sumikei Aluminum Foil Co., Ltd.) in place of the seal material, and the same evaluation was performed. The obtained results are shown in Table 5-1.

[Table 8]

Table 5-1

| | Lid seal material | Al ($\mu$g/g) | |
|---|---|---|---|
| | | Before contamination test | After contamination test |
| Example 5-1 | Lamination sheet | <0.2 | <0.2 |
| Comparative Example 5-1 | Al lid | <0.2 | 0.5 |

As shown in Comparative Example 5-1, it is found that in a tube in which an aluminum face such as an aluminum foil is exposed as a lid of the tube, a large amount of aluminum is mixed in the container. On the other hand, it is found that when an aluminum sheet is laminated by a resin layer or the like as in Example 5-1, mixing of a large amount of aluminum in the container can be prevented. Accordingly, it is found that in the case of Example 5-1, mixing of aluminum or the like in the silica powder can be prevented.

<Production Examples 5-1 to 5-4>

The silica gel obtained as in (1) described above was classified as follows. Note that as for the classification, a sieve, 23GG-900 manufactured by Kansai Wire Netting Co., Ltd. was used for classification at 900 $\mu$m, and standard sieves according to JIS Z 8801-1982 were used for the other classification, and the classification was performed by sieving using a vibratory classifier in accordance with JIS K 0069 until a change in the weight of the silica gel on the sieve was 1% or less. Note that "a particle with a sieve diameter of x to y $\mu$m" means a particle that passed through a sieve with a mesh opening of y $\mu$m as a result of sieving with the sieve, but did not pass through a sieve with a mesh opening of x $\mu$m as a result of sieving with the sieve.
First, a sieve with a mesh opening of 75 $\mu$m and a sieve with a mesh opening of 900 $\mu$m were used, whereby a silica gel having a particle diameter (sieve diameter) of 75 to 900 $\mu$m was obtained. Further, this silica gel was subjected to classification using a sieve with a mesh opening of 106 $\mu$m and a sieve with a mesh opening of 250 $\mu$m, whereby a sample having a particle diameter (sieve diameter) of 106 to 250 $\mu$m (Production Example 5-1), a sample having a particle diameter (sieve diameter) of 106 $\mu$m or less (Production Example 5-2), and a sample having a particle diameter (sieve diameter) of 250 $\mu$m or more (Production Example 5-3) were obtained. In addition, classification was performed using a sieve with a mesh opening of 106 $\mu$m and a sieve with a mesh opening of 425 $\mu$m in the same manner, whereby a sample having a particle diameter (sieve diameter) of 106 to 425 $\mu$m (Production Example 5-4) was obtained.

(3) Evaluation of Highly Accurate Quantitative Feeding Performance and Handleability

Each of the obtained samples was weighed by setting a target weight value to 100.0 mg and filled the sample in a container using PF-5-AD model (a screw-type filling machine) manufactured by Ikeda Machine Industry Co., Ltd. Here, the weighing was performed 10 consecutive times, and an average filling amount f (mg), a deviation amount $\Delta$ (mg) between the target weight value and the average filling amount f, a standard deviation $\sigma$, and, the standard deviation $\sigma$/the average filling amount f (%) were calculated, respectively. The measurement results and the evaluation results are shown in Table 5-2.

[Table 9]

Table 5-2

|  | Production Example 5-1 | Production Example 5-2 | Production Example 5-3 | Production Example 5-4 |
|---|---|---|---|---|
| Classification mesh size (μm) | 106/250 | <106 | >250 | 106/425 |
| target weight value | 100.0 mg | 100.0 mg | 100.0 mg | 100.0 mg |
| first time | 99.8 | 95.2 | 92.2 | 100.8 |
| second time | 100.1 | 94.2 | 89.4 | 100.1 |
| third time | 100.2 | 95.8 | 91.1 | 101.7 |
| fourth time | 99.8 | 95.1 | 89.2 | 98.9 |
| fifth time | 100.6 | 96.1 | 91.1 | 101.1 |
| sixth time | 100.6 | 96.2 | 89.9 | 98.7 |
| seventh time | 101.4 | 95.9 | 91.2 | 102.9 |
| eighth time | 99.0 | 95.7 | 89.5 | 98.4 |
| ninth time | 100.3 | 96.1 | 90.4 | 102.1 |
| tenth time | 101.1 | 96.3 | 91.4 | 98.9 |
| average filling amount f (mg) | 100.3 A | 95.7 B | 90.5 C | 100.4 A |
| deviation amount Δ (mg) | 0.3 A | -4.3 B | -9.5 C | 0.4 A |
| standard deviation σ | 0.7 A | 0.5 A | 1.0 C | 1.6 C |
| σ/f (%) | 0.7% A | 0.5% A | 1.1% C | 1.6% C |
| Handleability | A | C | A | A |

As apparent from Table 5-2, in the case of the sample having a sieve diameter of less than 106 μm (Production Example 5-2) and the sample having a sieve diameter of more than 250 μm (Production Example 5-3), the deviation amount Δ with respect to the target weight value reaches 4.3 to 9.5%. This showed that the presence of fine particles having a sieve diameter of less than 106 μm and the presence of coarse particles having a sieve diameter of more than 250 μm become a factor that causes an increase in fluctuation upon weighing so as to make the weighing accuracy vary significantly.

Further, in the case of the sample containing coarse particles having a sieve diameter of more than 250 μm (Production Examples 5-3 and 5-4), the standard deviation with respect to the average filling amount could not achieve less than 1%. This showed that the presence of coarse particles having a sieve diameter of more than 250 μm becomes a factor that causes an increase in fluctuation upon filling so as to make the weighing accuracy vary significantly.

Further, from the comparison between Production Example 5-1 and Production Example 5-4, it was confirmed that by narrowing the classification mesh size from 106/425 μm to 106/250 μm, the fluctuation upon filling becomes smaller. From this, an effect that the inter-lot difference in the total surface area of the filled silica powder can be decreased by setting the classification mesh size narrow, and for example, when a drug is supported on the silica powder, the fluctuation of the amount of the supported drug can be made smaller is expected.

On the other hand, in the case of the sample having a sieve diameter of less than 106 μm (Production Example 5-2), adhesion of fine particles to the inner wall of the container occurred, or the like, and the handleability of the silica powder itself was poor. When the silica powder is filled in a container with a cap, the silica powder adheres to the inner wall of the container or the inside of the cap, and it is difficult to take out the silica powder from the container, and a problem that the amount of the silica powder or the silica powder supporting the drug that can be actually taken out becomes smaller than the filling amount, or the like occurs, and therefore, from such a viewpoint, it is recommended to use the silica powder in which the amount of a fine powder is small.

(4) Measurement of Angle of Repose and Bulk Density

The measurement results of the angle of repose and the bulk density of the silica powder of Production Example 5-1 are shown in Table 5-3. Incidentally, a method for each measurement will be described below.

[Angle of Repose]

The angle of repose was measured using an angle of repose measuring instrument employing a cylinder rotation method manufactured by Tsutsui Rikagaku Kikai Co., Ltd. A cylindrical sample container was well washed and dried, and thereafter filled with a sample so as to fill about a half of the cylinder volume with the sample. Thereafter, the container was rotated at 2 rpm for 3 minutes, and then, the rotation was stopped, and the angle of repose was measured. The measurement was performed three times, and the average value was determined as the angle of repose.

[Bulk Density]

The bulk density was measured using a bulk specific gravity measuring instrument manufactured by Tsutsui Rikagaku Kikai Co., Ltd. (in accordance with JIS K 6891). A sample was put into a funnel of the specific gravity measuring instrument with a damper inserted thereinto, and the damper was quickly pulled out to drop the sample into a weighing bottle. The sample protruding from the weighing bottle was leveled off using a flat plate, and the weight was measured for calculation. The measurement was performed three times, and the average value was determined as the bulk density.

[Table 10]

Table 5-3

|  | Angle of Repose (°) | Bulk Density (g/mL) |
|---|---|---|
| First time | 28.0 | 0.58 |
| Second time | 28.0 | 0.57 |
| Third time | 28.0 | 0.58 |
| Average value | 28.0 | 0.58 |

(5) Measurement of Particle Diameter Before and After Weighing and Filling

Next, it is considered that the silica powder may be crushed by segregation within a hopper or mechanical contact with a screw or the like upon weighing and filling, and therefore, a change in particle diameter before and after weighing and filling was confirmed. The particle size distribution was measured using Microtrac MT3300EX II manufactured by NIKKISO Co., Ltd. that is a laser diffraction/scattering particle size distribution measuring device, and the values of $D_{10}$, $D_{50}$, and $D_{90}$ before and after filling were determined, and a change in particle diameter before and after weighing and filling was confirmed. In Table 5-4, the particle diameter after weighing and filling is expressed by a relative value with respect to the particle diameter before weighing and filling.

[Table 11]

Table 5-4

|  | Average filling amount f (mg) | Standard deviation σ | σ/f (%) | Particle diameter after weighing and filling (relative value with respect to that before treatment) | | |
|---|---|---|---|---|---|---|
|  |  |  |  | $D_{90}$ | $D_{50}$ | $D_{10}$ |
| Production Example 5-1 | 100.3 | 0.7 | 0.7 | 1.04 | 1.05 | 1.03 |
| Production Example 5-2 | 95.7 | 0.5 | 0.5 | 1.00 | 1.01 | 0.96 |
| Production Example 5-3 | 90.5 | 1.0 | 1.1 | 0.99 | 0.90 | 0.50 |

(continued)

| | Average filling amount f (mg) | Standard deviation σ | σ/f (%) | Particle diameter after weighing and filling (relative value with respect to that before treatment) | | |
|---|---|---|---|---|---|---|
| | | | | $D_{90}$ | $D_{50}$ | $D_{10}$ |
| Production Example 5-4 | 100.4 | 1.6 | 1.6 | 0.94 | 0.89 | 0.81 |

As apparent from Table 5-4, in the case of the silica powder having a sieve diameter of more than 250 μm (Production Example 5-3) and the silica powder having a sieve diameter of 106/425 μm (Production Example 5-4), the cumulative 10% particle diameter ($D_{10}$) was decreased by as much as about 20% to 50%. It is considered that such a change in $D_{10}$ may be because the silica powder was crushed in the filling machine or coarse particles and fine particles are unevenly distributed in the filling machine and the fine particles are filled first. Also from this viewpoint, it was indicated that the silica powder having a sieve diameter of more than 250 μm (Production Example 5-3) and the silica powder having a sieve diameter of 106/425 μm (Production Example 5-4) are not suitable in terms of performing highly accurate weighing.

<<Test Examples 6>>

<Production Examples 6-1 to 6-4>

(1) Preparation of Silica Powder

First, based on the Examples described in Japanese Patent Laid-Open No. 2002-80217, tetramethoxysilane was hydrolyzed by the following method, thereby synthesizing a silica gel. Pure water (1000 g) was put into a 5-L separable flask (with a jacket) made of glass and fitted with a water-cooled condenser opening to the atmosphere in an upper portion. Tetramethoxysilane (1400 g) was added thereto over 3 minutes while stirring at 80 rpm. The molar ratio of water/tetramethoxysilane was about 6. Hot water at 50°C was allowed to pass through the jacket of the separable flask. Stirring was continued, and when the content reached the boiling point, stirring was stopped. Thereafter, the generated sol was gelled while allowing hot water at 50°C to pass through the jacket for about 0.5 hours. Thereafter, the gel was promptly taken out and then allowed to pass through a net made of nylon with a mesh opening of 1.2 mm to pulverize the gel, whereby a particulate wet gel (silica hydrogel) was obtained. The hydrogel (450 g) and pure water (450 g) were charged into a 1-L autoclave made of glass, and then subjected to a hydrothermal treatment at a treatment temperature of 130°C for a treatment time of 3 hours. After the hydrothermal treatment, the resultant was filtered through a No. 5A filter paper, and the filter cake was vacuum dried at 100°C without washing with water until it reached a constant weight, whereby a dry silica gel was obtained. The obtained silica powder was mesoporous silica having mesopores with an average pore diameter of 4 nm.

(2) Preparation of Silica Powder for Highly Accurate Quantitative Feeding

Subsequently, the obtained silica gel was classified as follows. Note that as for the classification, a sieve, 23GG-900 manufactured by Kansai Wire Netting Co., Ltd. was used for classification at 900 μm, and standard sieves according to JIS Z 8801-1982 were used for the other classification, and the classification was performed by sieving using a vibratory classifier in accordance with JIS K 0069:1992 until a change in the weight of the silica gel on the sieve was 1% or less. Note that "a particle with a sieve diameter of x to y μm" means a particle that passed through a sieve with a mesh opening of y μm as a result of sieving with the sieve, but did not pass through a sieve with a mesh opening of x μm as a result of sieving with the sieve.
First, a sieve with a mesh opening of 75 μm and a sieve with a mesh opening of 900 μm were used, whereby a silica gel having a particle diameter (sieve diameter) of 75 to 900 μm was obtained. Further, this silica gel was subjected to classification using a sieve with a mesh opening of 106 μm and a sieve with a mesh opening of 250 μm, whereby a sample having a particle diameter (sieve diameter) of 106 to 250 μm (Production Example 6-1), a sample having a particle diameter (sieve diameter) of 106 μm or less (Production Example 6-2), and a sample having a particle diameter (sieve diameter) of 250 μm or more (Production Example 6-3) were obtained. In addition, classification was performed using a sieve with a mesh opening of 106 μm and a sieve with a mesh opening of 425 μm in the same manner, whereby a sample having a particle diameter (sieve diameter) of 106 to 425 μm (Production Example 6-4) was obtained.

(3) Evaluation of Highly Accurate Quantitative Feeding Performance and Handleability

Each of the obtained samples was weighed by setting a target weight value to 100.0 mg and filled the sample in a container using PF-5-AD model (a screw-type filling machine) manufactured by Ikeda Machine Industry Co., Ltd. Here, the weighing was performed 10 consecutive times, and an average filling amount f (mg), a deviation amount Δ (mg) between the target weight value and the average filling amount f, a standard deviation σ, and, the standard deviation σ/the average filling amount f (%) were calculated, respectively. The measurement results and the evaluation results are shown in Table 6-1.

[Table 12]

Table 6-1

|  | Production Example 6-1 | Production Example 6-2 | Production Example 6-3 | Production Example 6-4 |
|---|---|---|---|---|
| Classification mesh size (μm) | 106/250 | <106 | >250 | 106/425 |
| target weight value | 100.0 mg | 100.0 mg | 100.0 mg | 100.0 mg |
| first time | 99.8 | 95.2 | 92.2 | 100.8 |
| second time | 100.1 | 94.2 | 89.4 | 100.1 |
| third time | 100.2 | 95.8 | 91.1 | 101.7 |
| fourth time | 99.8 | 95.1 | 89.2 | 98.9 |
| fifth time | 100.6 | 96.1 | 91.1 | 101.1 |
| sixth time | 100.6 | 96.2 | 89.9 | 98.7 |
| seventh time | 101.4 | 95.9 | 91.2 | 102.9 |
| eighth time | 99.0 | 95.7 | 89.5 | 98.4 |
| ninth time | 100.3 | 96.1 | 90.4 | 102.1 |
| tenth time | 101.1 | 96.3 | 91.4 | 98.9 |
| average filling amount f (mg) | 100.3 A | 95.7 B | 90.5 C | 100.4 A |
| deviation amount Δ (mg) | 0.3 A | -4.3 B | -9.5 C | 0.4 A |
| standard deviation σ | 0.7 A | 0.5 A | 1.0 C | 1.6 C |
| σ/f (%) | 0.7% A | 0.5% A | 1.1% C | 1.6% C |
| Handleability | A | C | A | A |

As apparent from Table 6-1, in the case of the sample having a sieve diameter of less than 106 μm (Production Example 6-2) and the sample having a sieve diameter of more than 250 μm (Production Example 6-3), the deviation amount Δ with respect to the target weight value reaches 4.3 to 9.5%. This showed that the presence of fine particles having a sieve diameter of less than 106 μm and the presence of coarse particles having a sieve diameter of more than 250 μm become a factor that causes an increase in fluctuation upon weighing so as to make the weighing accuracy vary significantly.

Further, in the case of the sample containing coarse particles having a sieve diameter of more than 250 μm (Production Examples 6-3 and 6-4), the standard deviation with respect to the average filling amount could not achieve less than 1%. This showed that the presence of coarse particles having a sieve diameter of more than 250 μm becomes a factor that causes an increase in fluctuation upon filling so as to make the weighing accuracy vary significantly.

Further, from the comparison between Production Example 6-1 and Production Example 6-4, it was confirmed that by narrowing the classification mesh size from 106/425 μm to 106/250 μm, the fluctuation upon filling becomes smaller. From this, an effect that the inter-lot difference in the total surface area of the filled silica powder can be decreased by setting the classification mesh size narrow, and for example, when a drug is supported on the silica powder, the fluctuation of the amount of the supported drug can be made smaller is expected.

On the other hand, in the case of the sample having a sieve diameter of less than 106 μm (Production Example 6-2), adhesion of fine particles to the inner wall of the container occurred, or the like, and the handleability of the silica powder itself was poor. When the silica powder is filled in a container with a cap, the silica powder adheres to the inner wall of the container or the inside of the cap, and it is difficult to take out the silica powder from the container, and a problem that the amount of the silica powder or the silica powder supporting the drug that can be actually taken out becomes smaller than the filling amount, or the like occurs, and therefore, practically, it is considered that improvement of handleability is needed.

(4) Measurement of Angle of Repose and Bulk Density

The measurement results of the angle of repose and the bulk density of the silica powder of Production Example 6-1 are shown in Table 6-2. Incidentally, a method for each measurement will be described below.

[Angle of Repose]

The angle of repose was measured using an angle of repose measuring instrument employing a cylinder rotation method manufactured by Tsutsui Rikagaku Kikai Co., Ltd. A cylindrical sample container was well washed and dried, and thereafter filled with a sample so as to fill about a half of the cylinder volume with the sample. Thereafter, the container was rotated at 2 rpm for 3 minutes, and then, the rotation was stopped, and the angle of repose was measured. The measurement was performed three times, and the average value was determined as the angle of repose.

[Bulk Density]

The bulk density was measured using a bulk specific gravity measuring instrument manufactured by Tsutsui Rikagaku Kikai Co., Ltd. (in accordance with JIS K 6891). A sample was put into a funnel of the specific gravity measuring instrument with a damper inserted thereinto, and the damper was quickly pulled out to drop the sample into a weighing bottle. The sample protruding from the weighing bottle was leveled off using a flat plate, and the weight was measured for calculation. The measurement was performed three times, and the average value was determined as the bulk density.

[Table 13]

Table 6-2

|  | Angle of Repose (°) | Bulk Density (g/mL) |
|---|---|---|
| First time | 28.0 | 0.58 |
| Second time | 28.0 | 0.57 |
| Third time | 28.0 | 0.58 |
| Average value | 28.0 | 0.58 |

(5) Measurement of Particle Diameter Before and After Weighing and Filling

Next, it is considered that the silica powder may be crushed by segregation within a hopper or mechanical contact with a screw or the like upon weighing and filling, and therefore, a change in particle diameter before and after weighing and filling was confirmed. The particle size distribution was measured using Microtrac MT3300EX II manufactured by NIKKISO Co., Ltd. that is a laser diffraction/scattering particle size distribution measuring device, and the values of $D_{10}$, $D_{50}$, and $D_{90}$ before and after filling were determined, and a change in particle diameter before and after weighing and filling was confirmed. In Table 6-3, the particle diameter after weighing and filling is expressed by a relative value with respect to the particle diameter before weighing and filling.

[Table 14]

Table 6-3

| | Average filling amount f (mg) | Standard deviation $\sigma$ | $\sigma$/f (%) | Particle diameter after weighing and filling (relative value with respect to that before treatment) | | |
|---|---|---|---|---|---|---|
| | | | | $D_{90}$ | $D_{50}$ | $D_{10}$ |
| Production Example 6-1 | 100.3 | 0.7 | 0.7 | 1.04 | 1.05 | 1.03 |
| Production Example 6-2 | 95.7 | 0.5 | 0.5 | 1.00 | 1.01 | 0.96 |
| Production Example 6-3 | 90.5 | 1.0 | 1.1 | 0.99 | 0.90 | 0.50 |
| Production Example 6-4 | 100.4 | 1.6 | 1.6 | 0.94 | 0.89 | 0.81 |

As apparent from Table 6-3, in the case of the silica powder having a sieve diameter of more than 250 $\mu$m (Production Example 6-3) and the silica powder having a sieve diameter of 106/425 $\mu$m (Production Example 6-4), the cumulative 10% particle diameter ($D_{10}$) was decreased by as much as about 20% to 50%. It is considered that such a change in $D_{10}$ may be because the silica powder was crushed in the filling machine or coarse particles and fine particles are unevenly distributed in the filling machine and the fine particles are filled first. Also from this viewpoint, it was indicated that the silica powder having a sieve diameter of more than 250 $\mu$m (Production Example 6-3) and the silica powder having a sieve diameter of 106/425 $\mu$m (Production Example 6-4) are not suitable when performing highly accurate individual weighing.

<Reference Example 6-1>

An aluminum foil (manufactured by Sumikei Aluminum Foil Co., Ltd.) having a thickness of 20 $\mu$m as a seal material was horizontally put on an opening portion of a sample tube (AS ONE Corporation, model number: 9-852-05) having an inner diameter of 10 mm. As a developed area of the seal material, an area of a circle having a diameter equal to the inner diameter of the sample tube was employed. The area and the developed area ratio of the seal material are shown in Table 6-4.

<Reference Examples 6-2 to 6-4>

An aluminum foil put in the same manner as in Reference Example 6-1 was pushed toward the inside of the sample tube to form a dent, and the depth of the dent was measured with a vernier caliper. The shape of the dent was assumed to be a conical shape, and the developed area of the seal material was calculated by regarding the depth of the dent as the height of the cone, the inner diameter of the sample tube as the diameter of the bottom face of the cone, and the length of the oblique side as the radius of the seal material. The depth of the dent, and the area and the developed area ratio of the seal material are shown in Table 6-4.

(Antifouling Effect)

From immediately above the aluminum foil face, water droplets were dropped by 0.1 mL using a pipette, and an antifouling effect was evaluated according to the following criteria. The results are shown in Table 6-4.

A: Water did not overflow to the side face of the sample tube.
B: Water overflowed to the side face of the sample tube.

[Table 15]

Table 6-4

| | Depth of dent (mm) | Seal material | | Developed area ratio | Amount of water dropped from upper face (mL) | | | | | | |
|---|---|---|---|---|---|---|---|---|---|---|---|
| | | Radius (mm) | Area (mm²) | | 0.5 | 0.6 | 0.7 | 0.8 | 0.9 | 1.0 | 1.1 |
| Reference Example 6-1 | - | 5.00 | 78.54 | 100.0% | A | B | B | B | B | B | B |
| Reference Example 6-2 | 0.52 | 5.03 | 78.96 | 100.5% | A | A | B | B | B | B | B |
| Reference Example 6-3 | 0.70 | 5.05 | 79.31 | 101.0% | A | A | B | B | B | B | B |
| Reference Example 6-4 | 1.00 | 5.10 | 80.10 | 102.0% | A | A | A | A | A | A | B |

As apparent from Table 6-4, it was found that by setting the developed area ratio to 100.5% or more, a liquid hardly flows out to the side face of the sample tube, and an effect of preventing fouling of the surroundings is obtained.

<<Test Example 7>>

<Examples 7-1 to 7-5 and Comparative Examples 7-1 to 7-2>

A predetermined amount of each of the silica powders shown in Table 7-1 was filled in a commercially available 2-mL volume microtube made of polypropylene. Subsequently, a predetermined amount of water was injected into each of the samples using a pipette, and thereafter, stirring was performed using a commercially available microtube mixer, whereby slurries were prepared in the microtubes, respectively.
A solid-liquid separation state at that time was determined according to the following criteria. The results are shown in Table 7-1.

A: A liquid can be sucked up with a pipette.
B: A liquid cannot be sucked up with a pipette.

[Table 16]

Table 7-1

| | | Pore volume TPV (mL/g) | Filling amount of silica powder (g) | Filling amount of silica powder with respect to volume of bottomed container (g/mL) | Water (g) | Slurry concentration (g/mL) | Solid-liquid separation state |
|---|---|---|---|---|---|---|---|
| Example 7-1 | mesoporous silica | 1.09 | 0.40 | 0.20 | 1.0 | 0.4 | A |
| Example 7-2 | mesoporous silica | 0.91 | 0.60 | 0.30 | 1.0 | 0.6 | A |
| Example 7-3 | mesoporous silica | 0.73 | 0.35 | 0.175 | 0.5 | 0.7 | A |
| Example 7-4 | dry silica gel | 0.51 | 0.50 | 0.25 | 0.5 | 1.0 | A |
| Example 7-5 | quartz powder (fired product) | 0 | 1.20 | 0.60 | 0.5 | 2.4 | A |

(continued)

|  |  | Pore volume TPV (mL/g) | Filling amount of silica powder (g) | Filling amount of silica powder with respect to volume of bottomed container (g/mL) | Water (g) | Slurry concentration (g/mL) | Solid-liquid separation state |
|---|---|---|---|---|---|---|---|
| Comparative Example 7-1 | quartz powder (fired product) | 0 | 1.25 | 0.63 | 0.5 | 2.5 | B |
| Comparative Example 7-2 | quartz powder (fired product) | 0 | 1.40 | 0.70 | 0.5 | 2.8 | B |

Further, a graph showing the slurry concentration (g/mL) with respect to the pore volume TPV (mL/g) of the silica powder in each of Examples 7-1 to 7-5 is shown in Fig. 14.

<<Test Example 8>>

<Piercing Test device>

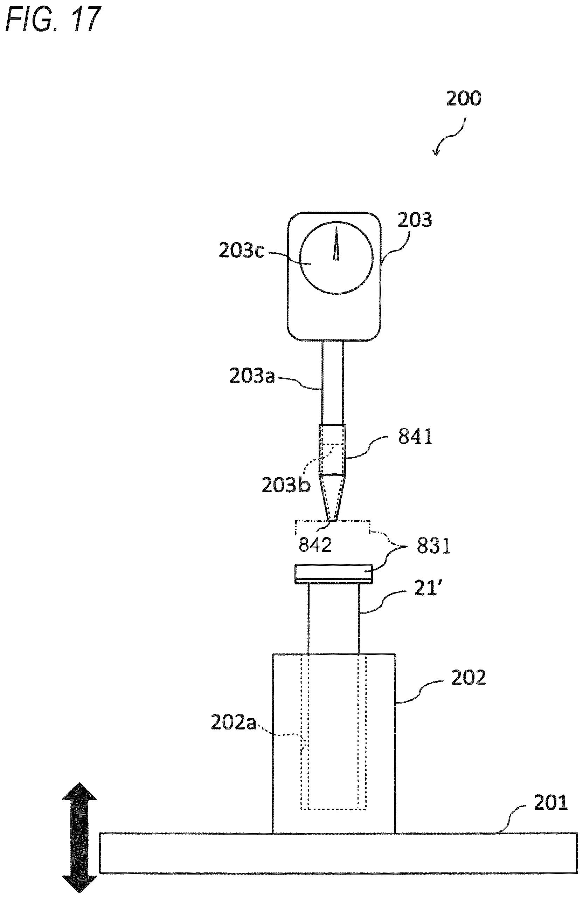

A piercing test was performed using a piercing test device 200 (hereinafter also referred to as "test device") shown in Fig. 17.
Fig. 17 is a schematic side view showing a configuration of the test device 200.
The test device 200 includes a table 201 that is vertically movable as indicated by the solid black arrow by a lifting and lowering mechanism (not shown) (for example, a jack), a stand 202 placed on the table 201, and a pressure detection device 203 disposed above the stand 202. The pressure detection device 203 includes a detection portion 203a having a rod-like shape extending to the stand 202 located therebelow, and a pointer-type meter 203c. To a tip 203b (hereinafter also referred to as "detection portion tip") of the detection portion 203a, an upper portion of the pipette tip 841 is fitted. At that time, a gap is ensured between the detection portion tip 203b and the pipette tip face 842.
In a housing portion 202a recessed in the stand 202, a bottomed container 21' for testing that simulates the bottomed container 21 is housed. In that state, the seal portion 831 provided in an opening portion of an upper end of the bottomed container 21' for testing is in a state of being opposed to the tip face 842 of the pipette tip 841 attached to the detection portion tip 203b of the pressure detection device 203.
In that state, by lifting the stand 202 so as to press the seal portion 831 against the pipette tip face 842 as indicated by the long dashed double-dotted line in Fig. 17, and a pressure when the seal portion 831 is pierced by the pipette tip face 842 is read from the pointer-type meter 203c as a piercing pressure by the detection portion 203a of the pressure detection device 203.

<Examples 8-1 to 8-15 and Comparative Examples 8-1 and 8-2>

A piercing test was performed using the test device 200 by changing the number of laminated seal materials forming the seal portion 831 of the bottomed container 21' for testing and the specification of the pipette tip 841.
As the seal material, a seal material having a thickness of 0.07 mm manufactured by Toho Jushi Kogyo Co., Ltd. was used. Incidentally, the seal material has a laminated structure including PET (polyethylene terephthalate), an aluminum foil, and LLDPE (linear low-density polyethylene) in this order, and the respective layers were adhered through an adhesive by a dry lamination method.
The seal material was placed on the upper end of the bottomed container 21' for testing so as to close the opening portion of the bottomed container 21' for testing in a posture where PET is directed upward and LLDPE is directed downward. Then, the seal material is welded to the upper end by pressing while heating using a heat sealer. The heat-sealing conditions at that time are as shown in Table 8-1. Incidentally, also when a plurality of seal materials are laminated in the thickness direction, each of the seal materials was placed in a posture where PET is directed upward and LLDPE is directed downward, and welding to the upper end and welding between the respective seal materials are simultaneously performed using the heat sealer.

[Table 17]

Table 8-1

| Temperature of heat sealer | 160°C |
|---|---|
| Pressure-bonding force | 8 N |
| Pressure-bonding time | 3 min |

In Table 8-2, the details of the used pipette tip 841 are shown, and in Table 8-3, the evaluation results are shown.
Incidentally, the evaluation of the pierceability of the seal portion 831 (evaluation of pierceability) was determined according to the following criteria.

A: The seal portion 831 could be pierced.
B: The seal portion 831 could not be pierced.

[Table 18]

Table 8-2

|  | Manufacturer name | Brand name | Inner radius ($\mu$m) / outer radius ($\mu$m) | Tip face area (mm$^2$) | Material |
|---|---|---|---|---|---|
| Tip A | Corning | Corning 4867 | 494.01/747.66 | 0.99 | PP |
| Tip B | Eppendorf | ep TIPS 1250 $\mu$L | 490.86/713.96 | 0.84 | PP |
| Tip C | RAININ | GPS-1000 | 381.58/543.77 | 0.47 | PP |
| Tip D | Eppendorf | ep TIPS 200 $\mu$L | 275.42/474.09 | 0.47 | PP |

[Table 19]

Table 8-3

|  | Pipette tip | Number of seal materials | Pressing force at piercing (N) | Evaluation of pierceability | Remarks |
|---|---|---|---|---|---|
| Example 8-1 | tip A | 1 | 13.7 | A | - |
| Example 8-2 | tip A | 2 | 23 | A | - |
| Example 8-3 | tip A | 3 | 32 | A | - |
| Example 8-4 | tip A | 4 | 46 | A | - |
| Example 8-5 | tip A | 5 | 50 | A | - |
| Example 8-6 | tip B | 1 | 15 | A | - |
| Example 8-7 | tip B | 2 | 25 | A | - |
| Example 8-8 | tip B | 3 | 34 | A | - |
| Example 8-9 | tip B | 4 | 46 | A | - |
| Example 8-10 | tip B | 5 | 52 | A | - |
| Example 8-11 | tip C | 1 | 11 | A | - |
| Example 8-12 | tip C | 2 | 21 | A | - |
| Example 8-13 | tip C | 3 | 26 | A | - |

(continued)

| | Pipette tip | Number of seal materials | Pressing force at piercing (N) | Evaluation of pierceability | Remarks |
|---|---|---|---|---|---|
| Example 8-14 | tip D | 1 | 9 | A | - |
| Example 8-15 | tip D | 2 | 14 | A | - |
| Comparative Example 8-1 | tip A | 6 | - | B | Pipette tip was deformed |
| Comparative Example 8-1 | tip B | 6 | - | B | Pipette tip was deformed |

In this manner, it was found that in the case where the area of the opening end face of the pipette tip face 842 was within a range of 0.1 mm$^2$ to 10 mm$^2$, if the pipette tip face 842 pierced the seal portion 831 when the pipette tip face 842 was pressed against the seal portion 831 with a force of 55 N or less, the seal portion 831 did not cause deformation of the pipette tip 841 before it is perforated, and piercing failure due to deformation of the pipette tip 841 can be prevented. That is, it was supported that by setting such conditions, the seal portion 831 can be reliably pierced by a generally distributed pipette.

<<Test Example 9>>

<Example 9-1>

A coating solution was prepared by adding an ion conductive antistatic agent (manufactured by Toei Chemical Co., Ltd., product name/model: Sankonol (registered trademark) N-0750R) as an antistatic agent at a ratio of 10 mass% with respect to an acrylic resin (Aica Kogyo Company, Limited, product name: Ultrasol) containing an acrylate ester and a methacrylate ester as a main component as a binder resin.

The coating solution was applied to substantially the entire face of the inner circumferential wall of a 2-mL volume capless tube made of polypropylene (manufactured by FCR & Bio Co., Ltd., item number: MP-200NC) using a microspatula, followed by drying, whereby an antistatic layer was formed.

After 100 mg of the below-mentioned silica powder of Production Example 9-1 was filled in the container on which the antistatic layer was formed, a film having a gas barrier property as the seal material was heat-sealed to the opening portion, whereby a silica powder storage package of Example 9-1 was produced.

<Examples 9-2 to 9-5 and Comparative Example 9-1>

Silica powder storage packages of Examples 9-2 to 9-5 were produced in the same manner as in Example 9-1 except that the antistatic agent in Example 9-1 was changed to an antistatic agent shown in Table 9-1.

A silica powder storage package of Comparative Example 9-1 was produced in the same manner as in Example 9-1 except that the antistatic layer in Example 9-1 was not formed.

[Table 20]

Table 9-1

| | Binder resin | Antistatic agent | | |
|---|---|---|---|---|
| | | Product name | Model | Remarks |
| Example 9-1 | Ultrasol | Sankonol | N-0750R | lithium salt-containing ion conductive antistatic agent |
| Example 9-2 | Ultrasol | PC | 3562 | lithium salt-containing ion conductive antistatic agent |
| Example 9-3 | Ultrasol | Fujistat YE | 125 | ammonium salt-containing ion conductive antistatic agent |

(continued)

| | Binder resin | Antistatic agent | | |
|---|---|---|---|---|
| | | Product name | Model | Remarks |
| Example 9-4 | Ultrasol | Fujistat YE | 908 | ammonium salt-containing ion conductive antistatic agent |
| Example 9-5 | Ultrasol | Fujistat YE | 915 | ammonium salt-containing ion conductive antistatic agent |
| Comparative Example 9-1 | - | - | - | - |

(1) Evaluation of Anti-Adhesion Property and Measurement of Charge Potential

With respect to the obtained silica powder storage packages, evaluation of an anti-adhesion property and measurement of a charge potential were performed. The results are shown in Table 9-2. Incidentally, evaluation and measurement methods will be described below.

[Anti-Adhesion Property]

Each of the silica powder storage packages was placed in a vortex mixer (manufactured by Jeio Tech, Inc.), and vibration was applied thereto by stirring under the condition of 3000 rpm for 3 hours (a vibration state during transportation is assumed). After stirring, the silica powder adhering to the inner wall of the container was observed with the naked eye in a state where the silica powder storage package was made upright, and the anti-adhesion property was evaluated according to the following criteria.

A: Adhesion of the silica powder to the wall face was not observed.
B: The silica powder slightly adhered to the wall face.
C: The silica powder adhered to the entire wall face.

[Charge Potential]

With respect to the silica powder storage packages before applying vibration, an electrostatic potential was measured using an electrostatic potential measuring instrument (manufactured by Shishido Electrostatic Ltd., model number: STATIRON-DZ3), and this was determined as a charge potential before vibration. The measurement of the electrostatic potential was performed in a state where alignment was performed by making each of the silica powder storage packages upright, and irradiating a central portion of the silica powder accumulated on the bottom portion with LED light emitted from the electrostatic potential measuring instrument from a distance of 5 cm in a horizontal direction. After measurement of the charge potential, each of the silica powder storage packages was placed in a vortex mixer (manufactured by Jeio Tech, Inc.), and vibration was applied thereto by stirring under the condition of 3000 rpm for 3 hours. After stirring, an electrostatic potential was measured in the same manner as before vibration, whereby a measurement value of the charge potential after vibration was obtained.

[Table 21]

Table 9-2

| | Anti-adhesion property | Charge potential (kV) | |
|---|---|---|---|
| | | before vibration | after vibration |
| Example 9-1 | A | 0.00 | -0.01 |
| Example 9-2 | A | -0.01 | -0.02 |
| Example 9-3 | B | -0.02 | -0.05 |
| Example 9-4 | B | 0.02 | -0.02 |

(continued)

|  | Anti-adhesion property | Charge potential (kV) | |
|---|---|---|---|
|  |  | before vibration | after vibration |
| Example 9-5 | A | -0.06 | -0.03 |
| Comparative Example 9-1 | C | -0.02 | -0.08 |

<Production Examples 9-1 to 9-4>

(2) Preparation of Silica Powder

First, based on the Examples described in Japanese Patent Laid-Open No. 2002-80217, tetramethoxysilane was hydrolyzed by the following method, thereby synthesizing a silica gel. Pure water (1000 g) was put into a 5-L separable flask (with a jacket) made of glass and fitted with a water-cooled condenser opening to the atmosphere in an upper portion. Tetramethoxysilane (1400 g) was added thereto over 3 minutes while stirring at 80 rpm. The molar ratio of water/tetramethoxysilane was about 6. Hot water at 50°C was allowed to pass through the jacket of the separable flask. Stirring was continued, and when the content reached the boiling point, stirring was stopped. Thereafter, the generated sol was gelled while allowing hot water at 50°C to pass through the jacket for about 0.5 hours. Thereafter, the gel was promptly taken out and then allowed to pass through a net made of nylon with a mesh opening of 1.2 mm to pulverize the gel, whereby a particulate wet gel (silica hydrogel) was obtained. The hydrogel (450 g) and pure water (450 g) were charged into a 1-L autoclave made of glass, and then subjected to a hydrothermal treatment at a treatment temperature of 130°C for a treatment time of 3 hours. After the hydrothermal treatment, the resultant was filtered through a No. 5A filter paper, and the filter cake was vacuum dried at 100°C without washing with water until it reached a constant weight, whereby a dry silica gel was obtained. The obtained silica powder was mesoporous silica having mesopores with an average pore diameter of 4 nm.

(3) Preparation of Silica Powder for Highly Accurate Quantitative Feeding

Subsequently, the obtained silica gel was classified as follows. Note that the classification was performed using standard sieves according to JIS Z 8801-1982 for all except for a classification net with a mesh size of 900 $\mu$m (manufactured by Kansai Wire Netting Co., Ltd., item number: 23GG-900) by sieving using a vibratory classifier in accordance with JIS K 0069:1992 until a change in the weight of the silica gel on the sieve was 1% or less. Note that "a particle with a sieve diameter of x to y $\mu$m" means a particle that passed through a sieve with a mesh opening of y $\mu$m as a result of sieving with the sieve, but did not pass through a sieve with a mesh opening of x $\mu$m as a result of sieving with the sieve. First, a sieve with a mesh opening of 75 $\mu$m and a sieve with a mesh opening of 900 $\mu$m were used, whereby a silica gel having a particle diameter (sieve diameter) of 75 to 900 $\mu$m was obtained. Further, this silica gel was subjected to classification using a sieve with a mesh opening of 106 $\mu$m and a sieve with a mesh opening of 250 $\mu$m, whereby a sample having a particle diameter (sieve diameter) of 106 to 250 $\mu$m (Production Example 9-1), a sample having a particle diameter (sieve diameter) of 106 $\mu$m or less (Production Example 9-2), and a sample having a particle diameter (sieve diameter) of 250 $\mu$m or more (Production Example 9-3) were obtained. In addition, classification was performed using a sieve with a mesh opening of 106 $\mu$m and a sieve with a mesh opening of 425 $\mu$m in the same manner, whereby a sample having a particle diameter (sieve diameter) of 106 to 425 $\mu$m (Production Example 9-4) was obtained.

(4) Evaluation of Highly Accurate Quantitative Feeding Performance and Handleability

Each of the obtained samples was weighed by setting a target weight value to 100.0 mg and filled the sample in a container in which an antistatic layer was not formed using PF-5-AD model (a screw-type filling machine) manufactured by Ikeda Machine Industry Co., Ltd. Here, the weighing was performed 10 consecutive times, and an average filling amount f (mg), a deviation amount $\Delta$ (mg) between the target weight value and the average filling amount f, a standard deviation $\sigma$, and, the standard deviation $\sigma$/the average filling amount f (%) were calculated, respectively. The measurement results and the evaluation results are shown in Table 9-3. In the evaluation of Production Examples 9-1 to 9-4, as the container, a 2-mL volume capless tube made of polypropylene (manufactured by FCR & Bio Co., Ltd., item number: MP-200NC) was used as it is.

[Table 22]

Table 9-3

| | Production Example 9-1 | Production Example 9-2 | Production Example 9-3 | Production Example 9-4 |
|---|---|---|---|---|
| Classification mesh size ($\mu$m) | 106/250 | <106 | >250 | 106/425 |
| target weight value | 100.0 mg | 100.0 mg | 100.0 mg | 100.0 mg |
| first time | 99.8 | 95.2 | 92.2 | 100.8 |
| second time | 100.1 | 94.2 | 89.4 | 100.1 |
| third time | 100.2 | 95.8 | 91.1 | 101.7 |
| fourth time | 99.8 | 95.1 | 89.2 | 98.9 |
| fifth time | 100.6 | 96.1 | 91.1 | 101.1 |
| sixth time | 100.6 | 96.2 | 89.9 | 98.7 |
| seventh time | 101.4 | 95.9 | 91.2 | 102.9 |
| eighth time | 99.0 | 95.7 | 89.5 | 98.4 |
| ninth time | 100.3 | 96.1 | 90.4 | 102.1 |
| tenth time | 101.1 | 96.3 | 91.4 | 98.9 |
| average filling amount f (mg) | 100.3 A | 95.7 B | 90.5 C | 100.4 A |
| deviation amount $\Delta$ (mg) | 0.3 A | -4.3 B | -9.5 C | 0.4 A |
| standard deviation $\sigma$ | 0.7 A | 0.5 A | 1.0 C | 1.6 C |
| $\sigma$/f (%) | 0.7% A | 0.5% A | 1.1% C | 1.6% C |
| Handleability | A | C | A | A |

As apparent from Table 9-3, in the case of the sample having a sieve diameter of less than 106 $\mu$m (Production Example 9-2) and the sample having a sieve diameter of more than 250 $\mu$m (Production Example 9-3), the deviation amount $\Delta$ with respect to the target weight value reaches 4.3 to 9.5%. This showed that the presence of fine particles having a sieve diameter of less than 106 $\mu$m and the presence of coarse particles having a sieve diameter of more than 250 $\mu$m become a factor that causes an increase in fluctuation upon weighing so as to make the weighing accuracy vary significantly.

Further, in the case of the sample containing coarse particles having a sieve diameter of more than 250 $\mu$m (Production Examples 9-3 and 9-4), the standard deviation with respect to the average filling amount could not achieve less than 1%. This showed that the presence of coarse particles having a sieve diameter of more than 250 $\mu$m becomes a factor that causes an increase in fluctuation upon filling so as to make the weighing accuracy vary significantly.

Further, from the comparison between Production Example 9-1 and Production Example 9-4, it was confirmed that by narrowing the classification mesh size from 106/425 $\mu$m to 106/250 $\mu$m, the fluctuation upon filling becomes smaller. From this, an effect that the inter-lot difference in the total surface area of the filled silica powder can be decreased by setting the classification mesh size narrow, and for example, when a drug is supported on the silica powder, the fluctuation of the amount of the supported drug can be made smaller is expected.

On the other hand, in the case of the sample having a sieve diameter of less than 106 $\mu$m (Production Example 9-2), adhesion of fine particles to the inner wall of the container occurred, or the like, and the handleability of the silica powder itself was poor. When the silica powder is filled in a container with a cap, the silica powder adheres to the inner wall of the container or the inside of the cap, and it is difficult to take out the silica powder from the container, and a problem that the amount of the silica powder or the silica powder supporting the drug that can be actually taken out becomes smaller than the filling amount, or the like occurs, and therefore, practically, it is considered that improvement of handleability is needed.

(5) Measurement of Angle of Repose and Bulk Density

The measurement results of the angle of repose and the bulk density of the silica powder of Production Example 9-1 are shown in Table 9-4. Incidentally, a method for each measurement will be described below.

[Angle of Repose]

The angle of repose was measured using an angle of repose measuring instrument employing a cylinder rotation method manufactured by Tsutsui Rikagaku Kikai Co., Ltd. A cylindrical sample container was well washed and dried, and thereafter filled with a sample so as to fill about a half of the cylinder volume with the sample. Thereafter, the container was rotated at 2 rpm for 3 minutes, and then, the rotation was stopped, and the angle of repose was measured. The measurement was performed three times, and the average value was determined as the angle of repose.

[Bulk Density]

The bulk density was measured using a bulk specific gravity measuring instrument manufactured by Tsutsui Rikagaku Kikai Co., Ltd. (in accordance with JIS K 6891). A sample was put into a funnel of the specific gravity measuring instrument with a damper inserted thereinto, and the damper was quickly pulled out to drop the sample into a weighing bottle. The sample protruding from the weighing bottle was leveled off using a flat plate, and the weight was measured for calculation. The measurement was performed three times, and the average value was determined as the bulk density.

[Table 23]

Table 9-4

|  | Angle of Repose (°) | Bulk Density (g/mL) |
|---|---|---|
| First time | 28.0 | 0.58 |
| Second time | 28.0 | 0.57 |
| Third time | 28.0 | 0.58 |
| Average value | 28.0 | 0.58 |

(6) Measurement of Particle Diameter Before and After Weighing and Filling

Next, it is considered that the silica powder may be crushed by segregation within a hopper or mechanical contact with a screw or the like upon weighing and filling, and therefore, a change in particle diameter before and after weighing and filling was confirmed. The particle size distribution was measured using Microtrac MT3300EX II manufactured by NIKKISO Co., Ltd. that is a laser diffraction/scattering particle size distribution measuring device, and the values of $D_{10}$, $D_{50}$, and $D_{90}$ before and after filling were determined, and a change in particle diameter before and after weighing and filling was confirmed. In Table 9-5, the particle diameter after weighing and filling is expressed by a relative value with respect to the particle diameter before weighing and filling.

[Table 24]

Table 9-5

|  | Average filling amount f(mg) | Standard deviation σ | σ/f (%) | Particle diameter after weighing and filling (relative value with respect to that before treatment) | | |
|---|---|---|---|---|---|---|
|  |  |  |  | $D_{90}$ | $D_{50}$ | $D_{10}$ |
| Production Example 9-1 | 100.3 | 0.7 | 0.7 | 1.04 | 1.05 | 1.03 |
| Production Example 9-2 | 95.7 | 0.5 | 0.5 | 1.00 | 1.01 | 0.96 |
| Production Example 9-3 | 90.5 | 1.0 | 1.1 | 0.99 | 0.90 | 0.50 |

(continued)

|  | Average filling amount f(mg) | Standard deviation $\sigma$ | $\sigma/f$ (%) | Particle diameter after weighing and filling (relative value with respect to that before treatment) | | |
|---|---|---|---|---|---|---|
|  |  |  |  | $D_{90}$ | $D_{50}$ | $D_{10}$ |
| Production Example 9-4 | 100.4 | 1.6 | 1.6 | 0.94 | 0.89 | 0.81 |

As apparent from Table 9-5, in the case of the silica powder having a sieve diameter of more than 250 $\mu$m (Production Example 9-3) and the silica powder having a sieve diameter of 106/425 $\mu$m (Production Example 9-4), the cumulative 10% particle diameter ($D_{10}$) was decreased by as much as about 20% to 50%. It is considered that such a change in $D_{10}$ may be because the silica powder was crushed in the filling machine or coarse particles and fine particles are unevenly distributed in the filling machine and the fine particles are filled first. Also from this viewpoint, it was indicated that the silica powder having a sieve diameter of more than 250 $\mu$m (Production Example 9-3) and the silica powder having a sieve diameter of 106/425 $\mu$m (Production Example 9-4) are not suitable when performing highly accurate individual weighing.

<<Test Example 10>>

<Production Examples 10-1 to 10-4>

(1) Preparation of Silica Powder

First, based on the Examples described in Japanese Patent Laid-Open No. 2002-80217, tetramethoxysilane was hydrolyzed by the following method, thereby synthesizing a silica gel. Pure water (1000 g) was put into a 5-L separable flask (with a jacket) made of glass and fitted with a water-cooled condenser opening to the atmosphere in an upper portion. Tetramethoxysilane (1400 g) was added thereto over 3 minutes while stirring at 80 rpm. The molar ratio of water/tetramethoxysilane was about 6. Hot water at 50°C was allowed to pass through the jacket of the separable flask. Stirring was continued, and when the content reached the boiling point, stirring was stopped. Thereafter, the generated sol was gelled while allowing hot water at 50°C to pass through the jacket for about 0.5 hours. Thereafter, the gel was promptly taken out and then allowed to pass through a net made of nylon with a mesh opening of 1.2 mm to pulverize the gel, whereby a particulate wet gel (silica hydrogel) was obtained. The hydrogel (450 g) and pure water (450 g) were charged into a 1-L autoclave made of glass, and then subjected to a hydrothermal treatment at a treatment temperature of 130°C for a treatment time of 3 hours. After the hydrothermal treatment, the resultant was filtered through a No. 5A filter paper, and the filter cake was vacuum dried at 100°C without washing with water until it reached a constant weight, whereby a dry silica gel was obtained. The obtained silica powder was mesoporous silica having mesopores with an average pore diameter of 4 nm. When a porosity and a wet basis moisture content of the silica powder were measured by the above-mentioned methods, the silica powder had a porosity of 61.6% and a wet basis moisture content of 7.9 mass%.

(2) Preparation of Silica Powder for Highly Accurate Quantitative Feeding

Subsequently, the obtained silica gel was classified as follows. Note that as for the classification, a sieve, 23GG-900 manufactured by Kansai Wire Netting Co., Ltd. was used for classification at 900 $\mu$m, and standard sieves according to JIS Z 8801-1982 were used for the other classification, and the classification was performed by sieving using a vibratory classifier in accordance with JIS K 0069 until a change in the weight of the silica gel on the sieve was 1% or less. Note that "a particle with a sieve diameter of x to y $\mu$m" means a particle that passed through a sieve with a mesh opening of y $\mu$m as a result of sieving with the sieve, but did not pass through a sieve with a mesh opening of x $\mu$m as a result of sieving with the sieve. First, a sieve with a mesh opening of 75 $\mu$m and a sieve with a mesh opening of 900 $\mu$m were used, whereby a silica gel having a particle diameter (sieve diameter) of 75 to 900 $\mu$m was obtained. Further, this silica gel was subjected to classification using a sieve with a mesh opening of 106 $\mu$m and a sieve with a mesh opening of 250 $\mu$m, whereby a sample having a particle diameter (sieve diameter) of 106 to 250 $\mu$m (Production Example 10-1) was obtained. The sample had a wet basis moisture content of 8.0 mass%. Similarly, classification was performed using a sieve with a mesh opening of 106 $\mu$m and a sieve with a mesh opening of 425 $\mu$m, whereby a sample having a particle diameter (sieve diameter) of 106 to 425 $\mu$m (Production Example 10-2) was obtained. The sample had a wet basis moisture content of 7.9 mass%. Further similarly, classification was performed using a sieve with a mesh opening of

106 $\mu$m, whereby a sample having a particle diameter (sieve diameter) of 75 to 106 $\mu$m (Production Example 10-3, having a wet basis moisture content of 7.9 mass%) was obtained, and classification was performed using a sieve with a mesh opening of 425 $\mu$m, whereby a sample having a particle diameter (sieve diameter) of 425 to 900 $\mu$m (Production Example 10-4, having a wet basis moisture content of 7.5 mass%) was obtained.

(3) Evaluation of Highly Accurate Quantitative Feeding Performance and Handleability

Each of the obtained samples was weighed by setting a target weight value to 100.0 mg and filled the sample in a container using PF-5-AD model (a screw-type filling machine) manufactured by Ikeda Machine Industry Co., Ltd. Here, the weighing was performed 10 consecutive times, and an average filling amount f (mg), and a deviation amount $\Delta$ (mg) between the target weight value and the average filling amount f were calculated, respectively. The measurement results and the evaluation results are shown in Table 10-1.

[Table 25]

Table 10-1

|  | Production Example 10-1 | Production Example 10-2 | Production Example 10-3 |
|---|---|---|---|
| Classification mesh size ($\mu$m) | 106/250 | 106/425 | 75/106 |
| target weight value | 100.0 mg | 100.0 mg | 100.0 mg |
| first time | 99.8 | 100.8 | 95.2 |
| second time | 100.1 | 100.1 | 94.2 |
| third time | 100.2 | 101.7 | 95.8 |
| fourth time | 99.8 | 98.9 | 95.1 |
| fifth time | 100.6 | 101.1 | 96.1 |
| sixth time | 100.6 | 98.7 | 96.2 |
| seventh time | 101.4 | 102.9 | 95.9 |
| eighth time | 99.0 | 98.4 | 95.7 |
| ninth time | 100.3 | 102.1 | 96.1 |
| tenth time | 101.1 | 98.9 | 96.3 |
| average filling amount f (mg) | 100.3 A | 100.4 A | 95.7 B |
| deviation amount $\Delta$ (mg) | 0.3 A | 0.4 A | -4.3 B |
| Handleability | A | A | C |

As apparent from Table 10-1, in the case of the sample having a sieve diameter of less than 106 $\mu$m (Production Example 10-3), the deviation amount $\Delta$ with respect to the target weight value reaches 4.3%. Further, in the case of this Production Example 10-3, adhesion of fine particles to the inner wall of the container occurred, or the like, and the handleability of the silica powder itself was poor. When the silica powder is filled in a container with a cap, the silica powder adheres to the inner wall of the container or the inside of the cap, and it is difficult to take out the silica powder from the container, and a problem that the amount of the silica powder or the silica powder supporting the drug that can be actually taken out becomes smaller than the filling amount, or the like occurs, and therefore, practically, it is considered that improvement of handleability is needed. This showed that the presence of fine particles having a sieve diameter of less than 106 $\mu$m becomes a factor that causes an increase in fluctuation upon weighing so as to make the weighing accuracy vary significantly.

(4) Measurement of Angle of Repose and Bulk Density

The measurement results of the angle of repose and the bulk density of the silica powder of Production Example 10-1 are shown in Table 10-2. Incidentally, a method for each measurement will be described below.

[Angle of Repose]

The angle of repose was measured using an angle of repose measuring instrument employing a cylinder rotation method manufactured by Tsutsui Rikagaku Kikai Co., Ltd. A cylindrical sample container was well washed and dried, and thereafter filled with a sample so as to fill about a half of the cylinder volume with the sample. Thereafter, the container was rotated at 2 rpm for 3 minutes, and then, the rotation was stopped, and the angle of repose was measured. The measurement was performed three times, and the average value was determined as the angle of repose.

[Bulk Density]

The bulk density was measured using a bulk specific gravity measuring instrument manufactured by Tsutsui Rikagaku Kikai Co., Ltd. (in accordance with JIS K 6891). A sample was put into a funnel of the specific gravity measuring instrument with a damper inserted thereinto, and the damper was quickly pulled out to drop the sample into a weighing bottle. The sample protruding from the weighing bottle was leveled off using a flat plate, and the weight was measured for calculation. The measurement was performed three times, and the average value was determined as the bulk density.

[Table 26]

Table 10-2

|  | Angle of Repose (°) | Bulk Density (g/mL) |
|---|---|---|
| First time | 28.0 | 0.58 |
| Second time | 28.0 | 0.57 |
| Third time | 28.0 | 0.58 |
| Average value | 28.0 | 0.58 |

<Examples 10-1 to 10-2 and Comparative Examples 10-1 to 10-2>

A filling device having the same configuration as shown in Fig. 24 (inner diameter Dp = 10 mm, inner diameter Df = 6 mm, L = 1 mm, full length of feed tube 1051 = 100 mm) was produced using a commercially available 2-mL volume Eppendorf tube as a capless-type microtube made of a synthetic resin having a bottomed substantially cylindrical shape, and also using a feed tube 1051 produced by connecting a funnel made of polyethylene having an upper opening 1051b to a tube made of a tetrafluoroethylene-perfluoroalkyl vinyl ether copolymer fluororesin (PFA resin) having a hollow cylindrical shape with a lower opening 1051a.
Subsequently, with respect to the 2-mL volume Eppendorf tube, each of the silica powders PS of Production Examples 10-1 to 10-4 in an amount of 1.5 mL was weighed out. Thereafter, each of the silica powders was fed from the upper opening 1051b of the feed tube 1051 of the filling device, and a filling state at that time was observed based on the following evaluation criteria. The observation results at that time are shown in Table 10-3.

[Evaluation Criteria]

A: Scattering of the silica powder to the circumference of the Eppendorf tube was not observed. Blockage of the silica powder in the feed tube was also not observed.
B: Scattering of the silica powder to the circumference of the Eppendorf tube was not observed. Blockage of the silica powder in the feed tube was also not observed. However, the silica powder dropped while being caught in the feed tube.
C: Scattering of the silica powder to the circumference of the Eppendorf tube was not observed. However, blockage of the silica powder in the feed tube was observed.
D: Scattering of the silica powder to the circumference of the Eppendorf tube was observed. Blockage of the silica powder in the feed tube was not observed.

[Table 27]

Table 10-3

|  | Example 10-1 | Example 10-2 | Comparative Example 10-1 | Comparative Example 10-2 |
|---|---|---|---|---|
| Particle diameter | 106/250 (μm) | 106/425 (μm) | 75/106 (μm) | 425/900 (μm) |
| Evaluation result | A | B | D | C |

<Examples 10-3 to 10-4 and Comparative Examples 10-3 to 10-4>

A procedure was performed in the same manner as in Examples 10-1 to 10-2 and Comparative Examples 10-1 to 10-2 except that a tube made of SUS304 was used in place of the tube made of the fluororesin. The observation results at that time are shown in Table 10-4.

[Table 28]

Table 10-4

|  | Example 10-3 | Example 10-4 | Comparative Example 10-3 | Comparative Example 10-4 |
|---|---|---|---|---|
| Particle diameter | 106/250 (μm) | 106/425 (μm) | 75/106 (μm) | 425/900 (μm) |
| Evaluation result | A | B | D | C |

<Examples 10-5 to 10-6 and Comparative Examples 10-5 to 10-6>

A procedure was performed in the same manner as in Examples 10-1 to 10-2 and Comparative Examples 10-1 to 10-2 except that the full length of the feed tube 1051 was changed to 200 mm. The observation results at that time are shown in Table 10-5.

[Table 29]

Table 10-5

|  | Example 10-5 | Example 10-6 | Comparative Example 10-5 | Comparative Example 10-6 |
|---|---|---|---|---|
| Particle diameter | 106/250 (μm) | 106/425 (μm) | 75/106 (μm) | 425/900 (μm) |
| Evaluation result | A | B | D | C |

As shown in Tables 10-3 to 10-5, the filling property of the silica powder PS of Examples 10-1 and 10-2 corresponding to the tenth embodiment of the present invention was favorable regardless of the material and the full length of the feed tube. Further, in Comparative Examples 10-1 to 10-2, scattering of the silica powder PS occurred or blockage in the feed tube occurred, and even if the material and the full length of the feed tube were changed, the same tendency was shown.

The present invention has been described in detail and with reference to specific embodiments, but it is obvious to those skilled in the art that various changes and modifications can be added without departing from the spirit and the scope of the present invention. The present application is based on Japanese Patent Application filed on July 11, 2017 (Japanese Patent Application No. 2017-135703), Japanese Patent Application filed on July 11, 2017 (Japanese Patent Application No. 2017-135704), Japanese Patent Application filed on July 11, 2017 (Japanese Patent Application No. 2017-135705), Japanese Patent Application filed on July 11, 2017 (Japanese Patent Application No. 2017-135706), Japanese Patent Application filed on July 11, 2017 (Japanese Patent Application No. 2017-135707), Japanese Patent Application filed on July 11, 2017 (Japanese Patent Application No. 2017-135708), Japanese Patent Application filed on July 11, 2017 (Japanese Patent Application No. 2017-135709), Japanese Patent Application filed on July 11, 2017 (Japanese Patent Application No. 2017-135710), Japanese Patent Application filed on July 11, 2017 (Japanese Patent Application No. 2017-135711), and Japanese Patent Application filed on July 11, 2017 (Japanese Patent Application No. 2017-135712), the contents of which are incorporated herein by reference.

INDUSTRIAL APPLICABILITY

The silica powder storage package and the test kit using the same of the present invention can be widely and effectively utilized as, for example, a product package for supplying a desiccant, a humidity control agent, a deodorant, an agricultural fertilizer, a catalyst support, an abrasive, a filter aid, a separating agent, an adsorbent, a cosmetic support, a food additive, a selective adsorbent or a selective desorbent for a biological material, a drug carrier, or the like.

REFERENCE SIGNS LIST

100:    silica powder storage package
21:     bottomed container
21a:    opening portion
22:     cylindrical portion
23:     bottom portion
24:     flange
31:     seal material
PS:     silica powder
CP:     silica coarse powder
FP:     silica fine powder

25:     hydrophilic coating layer

32:     heat-seal layer

33:     gas barrier layer

34:     base resin film

S:      inner space

41:     pipetter
42:     tip portion
51:     holder
CL:     center line of silica powder storage package

21':    bottomed container for testing
831:    seal portion
841:    pipette tip
842:    pipette tip face (opening end face)
200:    piercing test device
201:    table
202:    stand
203:    pressure detection device

203a:     detection portion
203b:     detection portion tip
203c:     pointer-type meter

20:      antistatic container
20a:     opening portion
921:     container body
925:     inner wall
26:      antistatic layer

Dp:      inner diameter
Cp:      central axis
1051:    feed tube
1051a:   lower opening
1051b:   upper opening
Cf:      central axis
Df:      inner diameter
61:      holder
S11:     measuring step
S21:     filling step
S31:     sealing step

**Claims**

1.   A silica powder storage package, comprising at least a bottomed container having an opening portion, and a silica powder stored in the bottomed container, wherein
     the silica powder contains

     a silica coarse powder, in which when the silica coarse powder is sieved for 1 minute on a sieve with a nominal mesh opening of 425 $\mu$m in accordance with JIS standard sieve list (JIS Z 8801-1982), 99 mass% or more of the powder passes through the sieve, and when the silica coarse powder is sieved for 1 minute on a sieve with a nominal mesh opening of 106 $\mu$m in accordance with the JIS standard sieve list, a mass change on the sieve is 1 mass% or less, and
     a silica fine powder, in which when the silica fine powder is sieved for 1 minute on a sieve with a nominal mesh opening of 106 $\mu$m in accordance with the JIS standard sieve list, 99 mass% or more of the powder passes through the sieve, and when the silica fine powder is sieved for 1 minute on a sieve with a nominal mesh opening of 63 $\mu$m in accordance with the JIS standard sieve list, a mass change on the sieve is 1 mass% or less.

2.   The silica powder storage package according to claim 1, wherein an inner wall area S (cm$^2$) of the bottomed container and a filling amount Wf (g) of the silica fine powder has the following relationship: $0.001 \le Wf\,(g)/S\,(cm^2) \le 0.1\,(g/cm^2)$.

3.   The silica powder storage package according to claim 1 or 2, wherein a ratio (Wc (g)/Wf (g)) of a filling amount Wc (g) of the silica coarse powder to the filling amount Wf(g) of the silica fine powder is 30/70 to 95/5.

4.   The silica powder storage package according to any one of claims 1 to 3, wherein the silica coarse powder has a specific surface area of 100 to 1200 m$^2$/g.

5.   A test kit, comprising at least a bottomed container having an opening portion, and a silica powder stored in the bottomed container, the test kit being for allowing the silica powder to adsorb at least one part of the components in a liquid sample by injecting the liquid sample into the bottomed container, wherein
     the silica powder contains

     a silica coarse powder, in which when the silica coarse powder is sieved for 1 minute on a sieve with a nominal mesh opening of 425 $\mu$m in accordance with JIS standard sieve list (JIS Z 8801-1982), 99 mass% or more of the powder passes through the sieve, and when the silica coarse powder is sieved for 1 minute on a sieve with a nominal mesh opening of 106 $\mu$m in accordance with the JIS standard sieve list, a mass change on the sieve is 1 mass% or less, and

a silica fine powder, in which when the silica fine powder is sieved for 1 minute on a sieve with a nominal mesh opening of 106 $\mu$m in accordance with the JIS standard sieve list, 99 mass% or more of the powder passes through the sieve, and when the silica fine powder is sieved for 1 minute on a sieve with a nominal mesh opening of 63 $\mu$m in accordance with the JIS standard sieve list, a mass change on the sieve is 1 mass% or less.

6. A silica powder storage package, comprising at least a bottomed container made of a synthetic resin and having an opening portion, a lid member that closes the opening portion, and a silica powder stored in the bottomed container, wherein
the silica powder has an average particle diameter $D_{50}$ of 41 to 508 $\mu$m, and has a particle size distribution such that a content ratio of a fine powder having a particle diameter of 44 $\mu$m or less is 60 mass% or less.

7. The silica powder storage package according to claim 6, wherein the silica powder has a particle size distribution such that a content ratio of coarse particles having a particle diameter of more than 592 $\mu$m is 7.0 mass% or less.

8. The silica powder storage package according to claim 6 or 7, wherein when the silica powder is sieved for 1 minute on a sieve with a nominal mesh opening of 425 $\mu$m in accordance with JIS standard sieve list (JIS Z 8801-1982), 99 mass% or more of the powder passes through the sieve, and when the silica powder is sieved for 1 minute on a sieve with a nominal mesh opening of 106 $\mu$m in accordance with JIS standard sieve list (JIS Z 8801-1982), a mass change on the sieve is 1 mass% or less.

9. The silica powder storage package according to any one of claims 6 to 8, wherein when the silica powder is sieved for 1 minute on a sieve with a nominal mesh opening of 250 $\mu$m in accordance with JIS standard sieve list (JIS Z 8801-1982), 99 mass% or more of the powder passes through the sieve, and when the silica powder is sieved for 1 minute on a sieve with a nominal mesh opening of 106 $\mu$m in accordance with JIS standard sieve list (JIS Z 8801-1982), a mass change on the sieve is 1 mass% or less.

10. A test kit, comprising at least a bottomed container made of a synthetic resin and having an opening portion, a lid member that closes the opening portion, and a silica powder stored in the bottomed container, the test kit being for allowing the silica powder to adsorb at least one part of the components in a liquid sample by injecting the liquid sample into the bottomed container, wherein
the silica powder has an average particle diameter $D_{50}$ of 41 to 508 $\mu$m, and has a particle size distribution such that a content ratio of a fine powder having a particle diameter of 44 $\mu$m or less is 60 mass% or less.

11. A silica powder storage package, comprising at least a bottomed container and a silica powder stored in the bottomed container, wherein
the bottomed container has a hydrophilic coating layer on an inner wall thereof, and
the silica powder has an average particle diameter $D_{50}$ of 41 to 311 $\mu$m, and has a particle size distribution such that a content ratio of a fine powder having a particle diameter of 44 $\mu$m or less is 60 mass% or less, and a content ratio of coarse particles having a particle diameter of more than 498 ($\mu$m is 5.0 mass% or less.

12. The silica powder storage package according to claim 11, wherein the silica powder has a particle size distribution such that a content ratio of coarse particles having a particle diameter of more than 592 $\mu$m is 3.0 mass% or less.

13. The silica powder storage package according to claim 11 or 12, wherein when the silica powder is sieved for 1 minute on a sieve with a nominal mesh opening of 425 $\mu$m in accordance with JIS standard sieve list (JIS Z 8801-1982), 99 mass% or more of the powder passes through the sieve, and when the silica powder is sieved for 1 minute on a sieve with a nominal mesh opening of 106 $\mu$m in accordance with JIS standard sieve list (JIS Z 8801-1982), a mass change on the sieve is 1 mass% or less.

14. A test kit, comprising at least a bottomed container and a silica powder stored in the bottomed container, the test kit being for allowing the silica powder to adsorb at least one part of the components in a liquid sample by injecting the liquid sample into the bottomed container, wherein
the bottomed container has a hydrophilic coating layer on an inner wall thereof, and
the silica powder has an average particle diameter $D_{50}$ of 41 to 311 $\mu$m, and has a particle size distribution such that a content ratio of a fine powder having a particle diameter of 44 $\mu$m or less is 60 mass% or less, and a content ratio of coarse particles having a particle diameter of more than 498 $\mu$m is 5.0 mass% or less.

15. A silica powder storage package, comprising at least a bottomed container made of a resin and having an opening portion, a lid member that closes the opening portion, and a silica powder stored in the bottomed container, wherein the silica powder is a hydrated silica powder, and
the content of water is 9 mass% or more with respect to the silica powder in an absolutely dry state.

16. A silica powder storage package, comprising at least:

a bottomed container having an opening portion;
a seal material that closes the opening portion so as to tightly close or hermetically seal an inner space of the bottomed container; and
a silica powder stored in the bottomed container, wherein
the seal material has a laminated structure including at least a heat-seal layer containing a polyolefin-based resin, a gas barrier layer comprising a metal thin film or a metal oxide thin film, and a base resin film, and
the heat-seal layer is heat-sealed to the opening portion of the bottomed container.

17. A silica powder storage package, comprising at least:

a bottomed container having an opening portion;
a seal material that closes the opening portion so as to tightly close or hermetically seal an inner space of the bottomed container; and
a silica powder stored in the bottomed container, wherein
the seal material is convexly curved toward the inner space of the bottomed container.

18. The silica powder storage package according to claim 17, wherein a developed area ratio of the seal material in the opening portion is 100.5% or more with respect to a plan view area PA ($cm^2$) of the opening portion.

19. A silica powder storage package, comprising at least a bottomed container having an opening portion, and a silica powder stored in the bottomed container, wherein
a filling amount W (g) of the silica powder with respect to a volume V (mL) of the bottomed container is W (g)/V (mL) $\leq$ 0.6 (g/mL).

20. A test kit configured to prepare a slurry in which at least a liquid material and a silica powder are subjected to solid-liquid separation by injecting a liquid sample into a bottomed container having an opening portion and storing the silica powder, and allowing the silica powder to adsorb at least one part of the components in the liquid sample, wherein
a filling amount W (g) of the silica powder with respect to a volume V (mL) of the bottomed container is W (g)/V (mL) $\leq$ 0.6 (g/mL).

21. The test kit according to claim 20, wherein a slurry concentration (a mass of the silica powder (g) / a volume of the liquid sample (mL)) when preparing the slurry is 0.3 to 2.4 (g/mL).

22. A silica powder storage package, comprising a bottomed container having an opening portion at one end side and a closing portion at the other end side, a silica powder stored in the bottomed container, and a seal portion, which is provided in the opening portion so as to tightly close or hermetically seal an inner space of the bottomed container, and is pierced with a tip of a pipette for filling a liquid sample in the inner space, wherein
an opening end face of the tip of the pipette is a planar face orthogonal to a longitudinal direction of the pipette, and has an area within a range of 0.1 $mm^2$ to 10 $mm^2$, and
the seal portion comprises a lamination film that can be pierced with the opening end face of the pipette.

23. The silica powder storage package according to claim 22, wherein the seal portion can be pierced with the opening end face when the opening end face of the pipette is pressed against the seal portion with a force of 55 N or less.

24. A test kit, comprising a bottomed container having an opening portion at one end side and a closing portion at the other end side, a silica powder stored in the bottomed container, and a seal portion, which is provided in the opening portion so as to tightly close or hermetically seal an inner space of the bottomed container, and is pierced with a tip of a pipette for filling a liquid sample in the inner space, the test kit being for preparing a slurry in which at least a liquid material and the silica powder are subjected to solid-liquid separation by injecting a liquid sample into the bottomed container, and allowing the silica powder to adsorb at least one part of the components in the liquid sample, wherein
an opening end face of the tip of the pipette is a planar face orthogonal to a longitudinal direction of the pipette, and has an area within a range of 0.1 mm$^2$ to 10 mm$^2$, and
the seal portion comprises a lamination film that can be pierced with the opening end face of the pipette.

*FIG. 1*

*FIG. 2*

*FIG. 3*

## FIG. 4

## FIG. 5

FIG. 6

FIG. 7

FIG. 8

*FIG. 9*

*FIG. 10*

FIG. 11

*FIG. 12*

## FIG. 13

## FIG. 14

SLURRY CONCENTRATION (g/mL) WITH RESPECT
TO PORE VOLUME TPV (mL/g) OF SILICA POWDER

$y = 2.3515e^{-1.6x}$

## FIG. 15

UPPER SIDE
(ONE END SIDE)

LOWER SIDE
(THE OTHER END SIDE)

*FIG. 16A*

*FIG. 16B*

# FIG. 17

*FIG. 18*

FIG. 19

## FIG. 20

*FIG. 21*

*FIG. 22*

## FIG. 23

```
        ( START )
            │
            ▼
┌──────────────────────┐
│   MEASURING STEP     │──── S11
└──────────────────────┘
            │
            ▼
┌──────────────────────┐
│    FILLING STEP      │──── S21
└──────────────────────┘
            │
            ▼
┌──────────────────────┐
│    SEALING STEP      │──── S31
└──────────────────────┘
            │
            ▼
        (  END  )
```

FIG. 24

FIG. 25

*FIG. 26*

## INTERNATIONAL SEARCH REPORT

| International application No. |
|---|
| PCT/JP2018/026101 |

**A. CLASSIFICATION OF SUBJECT MATTER**
Int.Cl. B65D77/20(2006.01)i, B65D65/40(2006.01)i, B65D83/06(2006.01)i, C01B37/00(2006.01)i

According to International Patent Classification (IPC) or to both national classification and IPC

**B. FIELDS SEARCHED**

Minimum documentation searched (classification system followed by classification symbols)
Int.Cl. B65D77/20, B65D65/40, B65D83/06, C01B37/00

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2011/062270 A1 (SYSMEX CORPORATION) 26 May 2011, paragraphs [0021]-[0022] (Family: none) | 1-14 |
| A | JP 2009-44963 A (NATIONAL INSTITUTE OF ADVANCED INDUSTRIAL SCIENCE AND TECHNOLOGY) 05 March 2009, paragraphs [0043]-[0061], fig. 5 (Family: none) | 1-14 |
| A | JP 2010-193814 A (MALCOM CO.,LTD.) 09 September 2010, paragraphs [0023]-[0038] (Family: none) | 1-14 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 September 2018 (27.09.2018) | 16 October 2018 (16.10.2018) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/026101

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-38219 A (TAKUMA CO., LTD.) 08 February 2000, paragraphs [0010]-[0019], fig. 1-2 (Family: none) | 1-14 |
| A | JP 3124230 U (ADTEX INC.) 10 August 2006, paragraphs [0019]-[0030], fig. 1-5 (Family: none) | 1-14 |

Form PCT/ISA/210 (continuation of second sheet) (January 2015)

## INTERNATIONAL SEARCH REPORT

International application No.

PCT/JP2018/026101

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
See extra sheet

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.    Consequently, this international search report is restricted to the invention first mentioned in the claims; it is covered by claims Nos.: 1-14

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

International application No.

PCT/JP2018/026101

<Continuation of Box No. III>
<Regarding the subject of the examination>
Based on the following reasons, this international search report was written for claims 1-14 related to invention 1 described in the beginning of the claims.

(Invention 1) Claims 1-14
Claims 1-14 have the special technical feature in which the particle diameter of silica powder stored in a container having a bottom is controlled to prevent the silica powder from sticking inside the container having the bottom when taking the silica powder out of the container having the bottom, and thus claims 1-14 are classified as invention 1.

(Invention 2) Claim 15
Claim 15 shares, with claims 1-14 classified as invention 1, the common technical feature of accommodating the silica powder in the container having the bottom. However, since said technical feature does not make a contribution over the prior art in light of the disclosure of document 1, this technical feature cannot be considered a special technical feature. Also, there are no other identical or corresponding special technical features between these inventions.
In addition, claim 15 is not dependent on claims 1-14. Furthermore, claim 15 is not substantially identical or equivalent to any of the claims classified as invention 1.
Therefore, claim 15 cannot be classified as invention 1.
Also, claim 15 has the special technical feature in which the silica powder is hydrated silica powder, and has a water content of 9 mass% or higher with respect to the silica powder in a completely dry state, and thus claim 15 is classified as invention 2.

(Invention 3) Claims 16-18
Claims 16-18 share, with claims 1-14 classified as invention 1, the common technical feature of accommodating the silica powder in the container having the bottom. However, since said technical feature does not make a contribution over the prior art in light of the disclosure of document 1, this technical feature cannot be considered a special technical feature. Also, there are no other identical or corresponding special technical features between these inventions.
In addition, claims 16-18 are not dependent on claims 1-14. Furthermore, claims 16-18 are not substantially identical or equivalent to any of the claims classified as invention 1 or 2.
Therefore, claims 16-18 cannot be classified as either invention 1 or 2.
Also, claims 16-18 have the special technical feature of comprising at least: a seal material which caps an opening portion and closes or seals an inner space of a container having the bottom; and silica powder stored in the container having the bottom, wherein the seal material has: a heat seal layer including a polyolefin-based resin; a gas barrier layer made of a metal thin film or a metal oxide thin film; and a laminated structure provided with at least a base resin film, and the opening portion of the container having the bottom is heat-sealed with the heat seal layer, and thus claims 16-18 are classified as invention 3.

Form PCT/ISA/210 (extra sheet) (January 2015)

**INTERNATIONAL SEARCH REPORT**

International application No.

PCT/JP2018/026101

(Invention 4) Claims 19-21

Claims 19-21 share, with claims 1-14 classified as invention 1, the common technical feature of accommodating the silica powder in the container having the bottom. However, since said technical feature does not make a contribution over the prior art in light of the disclosure of document 1, this technical feature cannot be considered a special technical feature. Also, there are no other identical or corresponding special technical features between these inventions.

In addition, claims 19-21 are not dependent on claims 1-14. Furthermore, claims 19-21 are not substantially identical or equivalent to any of the claims classified as invention 1, 2, or 3.

Therefore, claim 19-21 cannot be classified as any one of invention 1, 2, or 3.

Also, claims 19-21 have the special technical feature in which the filling amount W(g) of the silica powder with respect to the volume V(mL) of the container having the bottom satisfies $W(g)/V(mL) \leq 0.6(g/mL)$, and thus claims 19-21 are classified as invention 4.

(Invention 5) Claims 22-24

Claims 22-24 share, with claims 1-14 classified as invention 1, the common technical feature of accommodating the silica powder in the container having the bottom. However, since said technical feature does not make a contribution over the prior art in light of the disclosure of document 1, this technical feature cannot be considered a special technical feature. Also, there are no other identical or corresponding special technical features between these inventions.

In addition, claims 22-24 are not dependent on claims 1-14. Furthermore, claims 22-24 are not substantially identical or equivalent to any of the claims classified as invention 1, 2, 3, or 4.

Therefore, claim 22-24 cannot be classified as any one of invention 1, 2, 3, or 4.

Also, claims 22-24 have the special technical feature of comprising: a container having a bottom and having an opening portion formed on one end and a closed portion formed on the other end; silica powder stored in the container having the bottom; and a seal part provided in the opening portion, and closing or sealing an inner space of the container having the bottom, the seal part being penetrated by the tip of a pipette for filling the inner space with a liquid sample, wherein an opening end face of the tip of the pipette is a planar face perpendicular to the longitudinal direction of the pipette and has an area ranging from 0.1 mm2 to 10 mm2, and the seal part is made of a laminated film that can be penetrated by the opening end face of the pipette, and thus claims 22-24 are classified as invention 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011225380 A
- JP 2013230955 A
- WO 2016017811 A
- JP 2002080217 A
- JP 2008222552 A
- JP 2017135703 A
- JP 2017135704 A
- JP 2017135705 A
- JP 2017135706 A
- JP 2017135707 A
- JP 2017135708 A
- JP 2017135709 A
- JP 2017135710 A
- JP 2017135711 A
- JP 2017135712 A

**Non-patent literature cited in the description**

- **E. P. BARRETT ; L. G. JOYNER ; P. H. HAKLENDA.** *J. Amer. Chem. Soc.,* 1951, vol. 73, 373